(19) Europäisches Patentamt / European Patent Office / Office européen des brevets

(11) **EP 4 560 531 A1**

(12) **EUROPEAN PATENT APPLICATION**
published in accordance with Art. 153(4) EPC

(43) Date of publication:
**28.05.2025 Bulletin 2025/22**

(21) Application number: **23849134.4**

(22) Date of filing: **30.06.2023**

(51) International Patent Classification (IPC):
**G06N 3/04** (2023.01)

(52) Cooperative Patent Classification (CPC):
**G06F 18/213; G06F 18/22; G06N 3/04;
G06N 3/045; G06N 3/08**

(86) International application number:
**PCT/CN2023/104975**

(87) International publication number:
**WO 2024/027424 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.07.2022 CN 202210913029**

(71) Applicant: **Huawei Technologies Co., Ltd.
Shenzhen, Guangdong 518129 (CN)**

(72) Inventors:
• **LIANG, Jing
  Shenzhen, Guangdong 518129 (CN)**

• **CHAI, Xiaomeng
  Shenzhen, Guangdong 518129 (CN)**
• **WEI, Hong
  Shenzhen, Guangdong 518129 (CN)**
• **SUN, Yan
  Shenzhen, Guangdong 518129 (CN)**
• **ZHOU, Rui
  Shenzhen, Guangdong 518172 (CN)**
• **YANG, Liusha
  Shenzhen, Guangdong 518172 (CN)**
• **LUO, Zhiquan
  Shenzhen, Guangdong 518172 (CN)**

(74) Representative: **Körber, Martin Hans
  Mitscherlich PartmbB
  Patent- und Rechtsanwälte
  Karlstraße 7
  80333 München (DE)**

(54) **DATA QUALITY MEASUREMENT METHOD AND DEVICE**

(57) A data quality measurement method and an apparatus are provided. The method includes: A data quality measurement apparatus sends first configuration information to a first data collection node, where the first configuration information is used to configure feature extraction in similarity measurement, the similarity measurement is used to determine a degree of similarity in statistical distribution between different datasets, and the feature extraction is used to extract a feature of a data sample included in the dataset. The data quality measurement apparatus receives a first feature set of a first dataset from the first data collection node, where the first feature set is based on the first configuration information, and the data quality measurement apparatus is a data management node or another node other than the data management node. According to the foregoing method, the data collection node may report, to the data quality measurement apparatus based on the first configuration information, the feature information of the dataset collected by the data collection node, so that the data quality measurement apparatus can determine whether the dataset collected by the data collection node meets a low similarity requirement.

EP 4 560 531 A1

Data management
node

Data collection
node 1

Data collection
node 2

1701: The data management node
determines configuration information
based on an application scenario of
currently collected data, where the
configuration information is used to
configure similarity measurement

1702: Send the configuration information, used to
configure a feature extraction function in feature
extraction

1703: Extract a feature set of a dataset of
the collection node based on a received
configuration of diversity measurement,
which may be referred to as a second
feature set

1704: Feed back the data feature set of the
collection node, that is, the second feature set

1705: The data management node determines
a similarity measurement result of a first
dataset and a second dataset based on a first
feature set of the first dataset and the second
feature set, and determines whether the
similarity measurement result meets a low
similarity requirement

1706: Data request

1707: The data collection
node uploads the collected
dataset

FIG. 17

**Description**

CROSS-REFERENCE TO RELATED APPLICATIONS

This application claims priority to Chinese Patent Application No. 202210913029.3, filed with the China National Intellectual Property Administration on July 31, 2022 and entitled "DATA QUALITY MEASUREMENT METHOD AND APPARATUS", which is incorporated herein by reference in its entirety.

TECHNICAL FIELD

Embodiments of this application relate to the field of communication technologies, and in particular, to a data quality measurement method and an apparatus.

BACKGROUND

Using low-quality data, such as data with mistakes, errors, and missing information, may result in a sharp decline in performance of a wireless communication system. For example, when a technology such as artificial intelligence (artificial intelligence, AI) or machine learning (machine learning, ML) is applied to the wireless communication system, using low-quality data may result in a sharp decline in performance of the AI or ML technology. Due to the variety of reasons for data quality deterioration, a quantifiable data quality measurement method needs to be established for data quality assessment. Generally, an objective of data quality assessment is to check whether data is suitable for a specific purpose. A specific assessment process is related to application of the data, nature of the data, and the like. In the field of wireless communication, how to measure data quality is a technical problem to be resolved in this application.

SUMMARY

Embodiments of this application provide a data quality measurement method and an apparatus, to measure data quality.

According to a first aspect, a data quality measurement method is provided. The method is mainly used to measure diversity of a dataset. The method includes: performing distance measurement on a first feature set to determine a first distance measurement set, where the first feature set is based on feature extraction on a data sample included in a first dataset, and the data sample reflects one or more of a communication transmission status or a status of a communication device, or the data sample is a communication signal or a signal obtained by preprocessing a communication signal; and performing diversity measurement on the first distance measurement set to determine a diversity measurement result of the first dataset, where the diversity measurement is used to determine a degree of diversity of data in statistical distribution.

According to the foregoing design, diversity of the first dataset may be measured. Greater diversity of data indicates higher quality and higher value of the data, helping improve a generalization capability and robustness of a data application object.

In a design, feature extraction on the data sample included in the first dataset is based on a feature extraction function. For example, feature extraction is performed, by using the feature extraction function, on the data sample included in the first dataset, to obtain a feature sample corresponding to the data sample, and the first feature set corresponding to the first dataset is determined based on the feature sample corresponding to the data sample included in the first dataset. Optionally, the first feature set may include all feature samples corresponding to the first dataset, or include some feature samples corresponding to the first dataset. This is not limited. Optionally, a feature extracted from the data sample included in the first dataset includes one or more of the following: a power delay profile PDP, a time-varying Doppler spectrum, a space domain angle power spectrum APS, an average value, a maximum value, a minimum value, a histogram, a cumulative percentage, or the data sample.

In a design, the performing distance measurement on a feature sample included in the first feature set, to determine a first distance measurement set corresponding to the first feature set includes: determining a plurality of feature sample combinations based on the feature sample included in the first feature set, where the feature sample combination includes two feature samples in the first feature set; determining, by using a distance measurement function, a distance measurement value corresponding to the feature sample combination; and determining the first distance measurement set based on the distance measurement value corresponding to the feature sample combination. Optionally, the first distance measurement set may include distance measurement values corresponding to all feature sample combinations of the first dataset, or include distance measurement values corresponding to some feature sample combinations of the first dataset. This is not limited.

In a design, the performing diversity measurement on the first distance measurement set to determine a diversity measurement result of the first dataset includes: performing diversity measurement on the first distance measurement set by using a diversity measurement function, to determine the diversity measurement result of the first dataset. Optionally, a larger value of the diversity measurement result of the first dataset indicates better diversity of the first dataset, a richer first dataset, and higher data quality, while a smaller value of the diversity measurement result of the first dataset indicates poorer diversity of the first dataset and poorer data quality.

In a design, the diversity measurement result of the first dataset is a diversity measurement result of a single feature of the first dataset. For example, if the diversity measurement result of the single feature of the first dataset is greater than or equal to a diversity threshold, or the diversity measurement result of the single feature of the first dataset is within a diversity threshold range, the single feature of the first dataset meets a diversity requirement.

According to the foregoing design, diversity of the dataset in a single feature dimension can be measured. Greater diversity of the dataset in the single feature dimension indicates higher data quality and higher value of the dataset in the single feature dimension.

In another design, the diversity measurement result of the first dataset is a diversity measurement result of a plurality of features of the first dataset. For example, a proportion of features that meet a diversity requirement in the plurality of features is determined in the plurality of features of the first dataset, and if the proportion of the features that meet the diversity requirement in the plurality of features is greater than or equal to a first threshold, the plurality of features of the first dataset meet the diversity requirement. Alternatively, a measurement result is determined based on a diversity measurement result of each of the plurality of features of the first dataset, and if the measurement result is greater than or equal to a diversity threshold, or the measurement result is within a diversity threshold range, the plurality of features of the first dataset meet a diversity requirement.

According to the foregoing design, diversity of the dataset in a plurality of feature dimensions can be measured. Greater diversity of the dataset in the plurality of feature dimensions indicates higher data quality and higher value of the dataset in the plurality of feature dimensions.

According to a second aspect, a data quality measurement method is provided, including: A data quality measurement apparatus obtains configuration information, where the configuration information is used to configure diversity measurement, and the diversity measurement is used to determine a degree of diversity of data in statistical distribution. Optionally, that a data quality measurement apparatus obtains configuration information includes: The data quality measurement apparatus receives the configuration information from a data management node. The data quality measurement apparatus determines a diversity measurement result of a first dataset based on the configuration information. The data quality measurement apparatus is a data collection node, another node other than the data collection node, or a chip or a circuit used in the data collection node or the another node.

In a design, the method further includes: If the diversity measurement result of the first dataset meets a diversity requirement, the data collection node sends the first dataset to the data management node.

According to the foregoing design, the data collection node may determine, based on configured diversity measurement, whether diversity of the first dataset collected by the data collection node meets the requirement, and if the diversity meets the requirement, send the first dataset to the data management node, or if the diversity does not meet the requirement, no longer report the first dataset collected by the data collection node to the data management node. Therefore, it is ensured that all datasets reported by the data collection node to the data management node meet the diversity requirement, which improves quality of the dataset reported by the data collection node, improves diversity of a dataset managed by the data management node, avoids transmission of data with poor diversity measurement between nodes, and reduces transmission overheads.

In a design, the method further includes: The data quality measurement apparatus sends the diversity measurement result of the first dataset to the data management node. The data collection node receives a notification message from the data management node. The data collection node sends the first dataset to the data management node based on the notification message.

According to the foregoing design, after determining the diversity measurement result of the first dataset collected by the data collection node, the data collection node reports the measurement result to the data management node. The data management node determines whether the measurement result meets a diversity requirement, and if the measurement result meets the diversity requirement, notifies the data collection node to report the dataset collected by the data collection node. This can avoid transmission of data with poor diversity measurement between nodes, and reduce transmission overheads.

In a design, that the data quality measurement apparatus determines a diversity measurement result of the first dataset based on the configuration information includes: The data quality measurement apparatus performs distance measurement on a first feature set to determine a first distance measurement set, where the first feature set is based on feature extraction on a data sample included in the first dataset. The data quality measurement apparatus performs diversity measurement on the first distance measurement set to determine the diversity measurement result of the first dataset.

Optionally, the data sample reflects one or more of a communication transmission status or a status of a communication device, or the data sample is a communication signal or a signal obtained by preprocessing a communication signal.

In a design, feature extraction on the data sample of the first dataset is based on a feature extraction function. Optionally, a feature extracted from the data sample included in the first dataset includes one or more of the following: a power delay profile PDP, a time-varying Doppler spectrum, a space domain angle power spectrum APS, an average value, a maximum value, a minimum value, a histogram, a cumulative percentage, or the data sample.

In a design, that the data quality measurement apparatus performs distance measurement on the first feature set to determine a first distance measurement set includes: The data quality measurement apparatus determines one or more feature sample combinations based on a feature sample included in the first feature set, where the feature sample combination includes two feature samples in the first feature set. The data quality measurement apparatus determines, by using a distance measurement function, a distance measurement value corresponding to each of the one or more feature sample combinations. The data quality measurement apparatus determines the first distance measurement set based on the distance measurement value corresponding to each of the one or more feature sample combinations.

In a design, that the data quality measurement apparatus performs diversity measurement on the first distance measurement set to determine the diversity measurement result of the first dataset includes: The data quality measurement apparatus performs diversity measurement on the first distance measurement set by using a diversity measurement function, to determine the diversity measurement result of the first dataset.

In a design, the method further includes: If a diversity measurement result of a single feature of the first dataset is greater than or equal to a diversity threshold, or a diversity measurement result of a single feature of the first dataset is within a diversity threshold range, the single feature of the first dataset meets the diversity requirement.

In a design, the method further includes: determining, in a plurality of features of the first dataset, a proportion of features that meet the diversity requirement in the plurality of features, where if the proportion of the features that meet the diversity requirement in the plurality of features is greater than or equal to a first threshold, the plurality of features of the first dataset meet the diversity requirement; or determining a measurement result based on a diversity measurement result of each of a plurality of features of the first dataset, where if the measurement result is greater than or equal to a diversity threshold, or the measurement result is within a diversity threshold range, the plurality of features of the first dataset meet the diversity requirement.

In a design, that the configuration information is used to configure diversity measurement includes: The configuration information is used to configure one or more of the following: a diversity measurement procedure, the feature extraction function in the diversity measurement procedure, the distance measurement function, the diversity measurement function, or one or more thresholds used to determine the diversity measurement result.

The diversity measurement procedure includes steps included in diversity measurement, for example, one or more of feature extraction, distance measurement, and diversity measurement. Feature extraction is an optional step.

Configuring one or more of the feature extraction function, the distance measurement function, and the diversity measurement function includes configuring a function name and/or all or some parameters in the function.

The one or more thresholds used to determine the diversity measurement result include one or more of the diversity threshold or the diversity threshold range for the single feature, the diversity threshold or the diversity threshold range for the plurality of features, or the first threshold.

It may be understood that a part that is not configured in the foregoing parameters configured in the configuration information may be defined based on a protocol, or may be obtained from another node. This is not limited herein.

According to a third aspect, a data quality measurement method is provided. The method may be performed by a data management node or a chip or a circuit used in a data management node, and includes: determining configuration information for diversity measurement; and sending the configuration information to a data quality measurement apparatus, where the configuration information is used to configure diversity measurement, and the diversity measurement is used to determine a degree of diversity of data in statistical distribution.

According to the method, the data management node may send the configuration information for diversity measurement to the data quality measurement apparatus, to implement diversity measurement.

The data quality measurement apparatus may be a data collection node, another node other than the data collection node, or a chip or a circuit used in the data collection node or the another node.

Optionally, the configuration information for diversity measurement is determined based on an application scenario of a dataset.

In a design, the method further includes: receiving, from the data collection node, a first dataset that meets a diversity requirement.

In a design, the method further includes: receiving a diversity measurement result of the first dataset from the data quality measurement apparatus; sending a notification message to the data collection node if the diversity measurement result of the first dataset meets the diversity requirement; and receiving the first dataset from the data collection node based on the notification message.

In a design, that the first dataset meets the diversity requirement includes: If a diversity measurement result of a single feature of the first dataset is greater than or equal to a diversity threshold, or if a diversity measurement result of a single feature of the first dataset is within a diversity threshold range, the single feature of the first dataset meets the diversity requirement. Alternatively, if a proportion of features that meet the diversity requirement in a plurality of features of the first dataset is greater than or equal to a first threshold, the plurality of features of the first dataset meet the diversity requirement. Alternatively, if a measurement result corresponding to a plurality of features of the first dataset is greater than or equal to a diversity threshold, or a measurement result is within a diversity threshold range, the plurality of features of the first dataset meet the diversity requirement, where the measurement result is based on a diversity measurement result of a feature included in a plurality of features of the first dataset.

In a design, that the configuration information is used to configure diversity measurement includes: The configuration information is used to configure one or more of the following: a diversity measurement procedure, a feature extraction function in the diversity measurement procedure, a distance measurement function, a diversity measurement function, or one or more thresholds used to determine the diversity measurement result.

The diversity measurement procedure includes steps included in diversity measurement, for example, one or more of feature extraction, distance measurement, and diversity measurement. Feature extraction is an optional step.

The one or more thresholds used to determine the diversity measurement result include one or more of the diversity threshold for the single feature, the diversity threshold for the plurality of features, the first threshold, or the like.

It may be understood that a part that is not configured in the foregoing parameters configured in the configuration information may be defined based on a protocol, or may be obtained from another node. This is not limited herein.

According to a fourth aspect, a data quality measurement method is provided, including: performing distance measurement on a first feature set and a second feature set to determine a first distance measurement set, where the first feature set is based on feature extraction on a data sample included in a first dataset, the second feature set is based on feature extraction on a data sample included in a second dataset, and the data sample reflects one or more of a communication transmission status or a status of a communication device, or the data sample is a communication signal or a signal obtained by preprocessing a communication signal; and performing similarity measurement on the first distance measurement set to determine a similarity measurement result of the first dataset and the second dataset, where the similarity measurement is used to determine a degree of similarity in statistical distribution between different datasets.

According to the foregoing method, a similarity between two datasets may be measured. If the similarity between the two datasets is higher, it indicates that statistical distribution of the two datasets is closer, and an amount of information brought by merging is smaller. In contrast, if the similarity between the two datasets is lower, it indicates that a difference in statistical distribution between the two datasets is greater, and an amount of information brought by merging is larger. The similarity may be used to perform fusion extension on a plurality of datasets, to delete datasets that are highly similar, reducing storage overheads.

In a design, feature extraction on the data sample included in the first dataset or feature extraction on the data sample included in the second dataset is based on a feature extraction function. Optionally, a feature extracted from the data sample included in the first dataset or the second dataset includes one or more of the following: a power delay profile PDP, a time-varying Doppler spectrum, a space domain angle power spectrum APS, an average value, a maximum value, a minimum value, a histogram, a cumulative percentage, or the data sample.

In a design, the performing distance measurement on a first feature set and a second feature set to determine a first distance measurement set includes: determining one or more feature sample combinations based on the first feature set and the second feature set, where one feature sample in the feature sample combination belongs to the first feature set, while the other feature sample belongs to the second feature set; determining, by using a distance measurement function, a distance measurement value corresponding to each of the one or more feature sample combinations; and determining the first distance measurement set based on the distance measurement value corresponding to each of the one or more feature sample combinations.

In a design, the performing similarity measurement on the first distance measurement set to determine a similarity measurement result of the first dataset and the second dataset includes: performing similarity measurement on the first distance measurement set by using a similarity measurement function, to determine the similarity measurement result of the first dataset and the second dataset.

In a design, the method further includes: if a similarity measurement result of a single feature of the first dataset and the second dataset is greater than or equal to a similarity threshold, or a similarity measurement result of a single feature of the first dataset and the second dataset is within a first similarity threshold range, determining that the single feature of the first dataset and the second dataset meets a low similarity requirement; or if a similarity measurement result of a single feature of the first dataset and the second dataset is less than or equal to a similarity threshold, or a similarity measurement result of a single feature of the first dataset and the second dataset is within a second similarity threshold range, determining that the single feature of the first dataset and the second dataset meets a high similarity requirement.

According to the foregoing design, a similarity between two datasets in a single feature dimension may be determined, and fusion extension is performed based on the similarity between the two datasets in the single feature dimension, to delete datasets that are highly similar in the single feature dimension, reducing storage overheads.

In a design, the method further includes: determining, in a plurality of features of the first dataset and the second dataset, a proportion of features that meet a low similarity requirement in the plurality of features, and when the proportion of the features that meet the low similarity requirement in the plurality of features is greater than or equal to a second threshold, determining that the plurality of features of the first dataset and the second dataset meet the low similarity requirement; or determining, in a plurality of features of the first dataset and the second dataset, a proportion of features that meet a high similarity requirement in the plurality of features, and when the proportion of the features that meet the high similarity requirement in the plurality of features is greater than or equal to a third threshold, determining that the plurality of features of the first dataset and the second dataset meet the high similarity requirement; or determining a measurement result based on a similarity measurement result of each of a plurality of features of the first dataset and the second dataset, and if the measurement result is greater than or equal to a similarity threshold, or the measurement result is within a first similarity threshold range, determining that the plurality of features of the first dataset and the second dataset meet a low similarity requirement, or if the measurement result is less than or equal to a similarity threshold, or the measurement result is within a second similarity threshold range, determining that the plurality of features of the first dataset and the second dataset meet a high similarity requirement.

According to the foregoing design, a similarity between two datasets in a plurality of feature dimensions may be determined, and fusion extension is performed based on the similarity between the two datasets in the plurality of feature dimensions, to delete datasets that are highly similar in the plurality of feature dimensions, reducing storage overheads.

According to a fifth aspect, a data quality measurement method is provided, including: A data quality measurement apparatus sends first configuration information to a first data collection node, where the first configuration information is used to configure feature extraction in similarity measurement, the similarity measurement is used to determine a degree of similarity in statistical distribution between different datasets, and the feature extraction is used to extract a feature of a data sample included in the dataset. The data quality measurement apparatus receives a first feature set of a first dataset from the first data collection node, where the first feature set is based on the first configuration information.

The data quality measurement apparatus is a data management node, a chip or a circuit used in a data management node, another node other than the data management node, or a chip or a circuit used in the another node.

According to the foregoing design, the data quality measurement apparatus, for example, the data management node, sends configuration information to a data collection node, to configure feature extraction in similarity measurement of the data collection node. The data collection node determines feature information of a collected dataset based on the configuration information, and reports the feature information to the data quality measurement apparatus, so that the data quality measurement apparatus can obtain feature information of data collected by the data collection node. In this way, the feature information of the dataset for similarity comparison can be obtained.

In a design, the method further includes: The data quality measurement apparatus determines a similarity measurement result of the first dataset and a second dataset based on the first feature set of the first dataset and a second feature set of the second dataset.

A dataset greatly different from an existing dataset is selected for fusion extension through similarity comparison between different datasets, so that information increment is brought, diversity of a merged dataset is further improved, transmission of data that is highly similar to existing data between nodes is avoided, transmission overheads are reduced.

In a design, that the data quality measurement apparatus determines a similarity measurement result of the first dataset and a second dataset based on the first feature set of the first dataset and a second feature set of the second dataset includes: The data quality measurement apparatus performs distance measurement on the first feature set and the second feature set to determine a first distance measurement set. The data quality measurement apparatus performs similarity measurement on the first distance measurement set to determine the similarity measurement result of the first dataset and the second dataset.

In a design, that the data quality measurement apparatus performs distance measurement on the first feature set and the second feature set to determine a first distance measurement set includes: The data quality measurement apparatus determines one or more feature sample combinations based on the first feature set and the second feature set, where one feature sample in the feature sample combination belongs to the first feature set, while the other feature sample belongs to the second feature set. The data quality measurement apparatus determines, by using a distance measurement function, a distance measurement value corresponding to each of the one or more feature sample combinations. The data quality measurement apparatus determines the first distance measurement set based on the distance measurement value corresponding to each of the one or more feature sample combinations.

In a design, that the data quality measurement apparatus performs similarity measurement on the first distance measurement set to determine the similarity measurement result of the first dataset and the second dataset includes: The data quality measurement apparatus performs similarity measurement on the first distance measurement set by using a similarity measurement function, to determine the similarity measurement result of the first dataset and the second dataset.

In a design, the second dataset is a dataset collected by a second data collection node. The method further includes: The data quality measurement apparatus sends second configuration information to the second data collection node, where the second configuration information is used to configure feature extraction in similarity measurement. The data quality measurement apparatus receives the second feature set of the second dataset from the second data collection node, where the second feature set is based on the second configuration information.

In a design, the method further includes: The data quality measurement apparatus determines, based on the similarity measurement result of the first dataset and the second dataset, that the first dataset and the second dataset meet a low similarity requirement. The data quality measurement apparatus separately sends a notification message to the first data collection node and the second data collection node, to notify the first data collection node to report the first dataset and the second data collection node to report the second dataset.

In a design, the second dataset is a dataset stored by the data management node. The method further includes: The data quality measurement apparatus performs, by using a feature extraction function, feature extraction on a data sample included in the second dataset, to obtain a feature sample corresponding to the data sample. The data quality measurement apparatus determines, based on the feature sample corresponding to the data sample included in the second dataset, the second feature set corresponding to the second dataset.

In a design, the method further includes: The data quality measurement apparatus determines, based on the similarity measurement result of the first dataset and the second dataset, that the first dataset and the second dataset meet a low similarity requirement. The data quality measurement apparatus sends a notification message to the first data collection node, to notify the first data collection node to report the first dataset to the data management node.

In a design, that the first configuration information is used to configure feature extraction in similarity measurement includes: The first configuration information is used to configure the feature extraction function.

In a design, the method further includes: determining the first configuration information. Optionally, the first configuration information is determined based on an application scenario of the dataset.

In a design, the method further includes: if a similarity measurement result of a single feature of the first dataset and the second dataset is greater than or equal to a similarity threshold, or a similarity measurement result of a single feature of the first dataset and the second dataset is within a first similarity threshold range, determining that the single feature of the first dataset and the second dataset meets the low similarity requirement.

In a design, the method further includes: determining, in a plurality of features of the first dataset and the second dataset, a proportion of features that meet the low similarity requirement in the plurality of features, and when the proportion of the features that meet the low similarity requirement in the plurality of features is greater than or equal to a second threshold, determining that the plurality of features of the first dataset and the second dataset meet the low similarity requirement; or determining a measurement result based on a similarity measurement result of each of a plurality of features of the first dataset and the second dataset, and if the measurement result is greater than or equal to a similarity threshold, or the measurement result is within a first similarity threshold range, determining that the plurality of features of the first dataset and the second dataset meet the low similarity requirement.

According to a sixth aspect, a data quality measurement method is provided. The method is performed by a data collection node or a chip or a circuit used in a data collection node, and includes:

obtaining configuration information, where the configuration information is used to configure feature extraction in similarity measurement;

performing feature extraction on a dataset based on the configuration information, to determine a feature set corresponding to the dataset; and

sending the feature set to a data quality measurement apparatus.

The data quality measurement apparatus is a data management node, a chip or a circuit used in a data management node, another node other than the data management node, or a chip or a circuit used in the another node.

According to the foregoing design, the data collection node performs feature extraction in similarity measurement based on the configuration information, and reports the obtained feature set to the data quality measurement apparatus, so that the data quality measurement apparatus can obtain feature information of data collected by the data collection node. In this way, the data quality measurement apparatus can obtain feature information of the dataset for similarity comparison.

Optionally, the obtaining configuration information includes: receiving the configuration information from the data quality measurement apparatus.

In a design, the feature extraction on the dataset is based on a feature extraction function. Optionally, a feature extracted from the dataset includes one or more of the following: a power delay profile PDP, a time-varying Doppler spectrum, a space domain angle power spectrum APS, an average value, a maximum value, a minimum value, a histogram, a cumulative percentage, or the data sample.

In a design, the method further includes: receiving a notification message from the data quality measurement apparatus; and sending the dataset to the data management node based on the notification message.

In a design, that the configuration information is used to configure feature extraction in similarity measurement includes: The configuration information is used to configure the feature extraction function, for example, configure a function name of the feature extraction function and/or all or some parameters in the function.

According to a seventh aspect, a data quality measurement method is provided, including: A data quality measurement apparatus obtains configuration information, where the configuration information is used to configure similarity measurement, and the similarity measurement is used to determine a degree of similarity in statistical distribution between different datasets. The data quality measurement apparatus determines a similarity measurement result of a first dataset and a second dataset based on the configuration information, where the first dataset is a training dataset for a model, and the second dataset is a dataset collected by a model using node.

The data quality measurement apparatus is the model using node, a chip or a circuit used in the model using node, another node other than the model using node, or a chip or a circuit used in another node.

According to the foregoing design, the model using node may select, from a plurality of candidate models, a model whose training data is highly similar to inference data of the model using node, to perform model inference, so that model inference accuracy can be improved.

In a design, that a data quality measurement apparatus obtains configuration information includes: The data quality measurement apparatus receives the configuration information from a data management node.

In a design, that the data quality measurement apparatus determines a similarity measurement result of a first dataset and a second dataset based on the configured similarity measurement includes: The data quality measurement apparatus performs distance measurement on a first feature set and a second feature set to determine a first distance measurement set, where the first feature set is based on feature extraction on a data sample included in the first dataset, and the second feature set is based on feature extraction on a data sample included in the second dataset. The data quality measurement apparatus performs similarity measurement on the first distance measurement set to determine the similarity measurement result of the first dataset and the second dataset.

Optionally, the data sample reflects one or more of a communication transmission status or a status of a communication device, or the data sample is a communication signal or a signal obtained by preprocessing a communication signal.

In a design, feature extraction on the data sample included in the first dataset or feature extraction on the data sample included in the second dataset is based on a feature extraction function. Optionally, a feature extracted from the data sample included in the first dataset or a feature extracted from the data sample included the second dataset includes one or more of the following: a power delay profile PDP, a time-varying Doppler spectrum, a space domain angle power spectrum APS, an average value, a maximum value, a minimum value, a histogram, a cumulative percentage, or the data sample.

In a design, that the data quality measurement apparatus performs distance measurement on a first feature set and a second feature set to determine a first distance measurement set includes: The data quality measurement apparatus determines one or more feature sample combinations based on the first feature set and the second feature set, where one feature sample in the feature sample combination belongs to the first feature set, while the other feature sample belongs to the second feature set. The data quality measurement apparatus determines, by using a distance measurement function, a distance measurement value corresponding to each of the one or more feature sample combinations. The data quality measurement apparatus determines the first distance measurement set based on the distance measurement value corresponding to each of the one or more feature sample combinations.

In a design, that the data quality measurement apparatus performs similarity measurement on the first distance measurement set to determine the similarity measurement result of the first dataset and the second dataset includes: The data quality measurement apparatus performs similarity measurement on the first distance measurement set by using a similarity measurement function, to determine the similarity measurement result of the first dataset and the second dataset.

In a design, the method further includes: If a similarity measurement result of a single feature of the first dataset and the second dataset is less than or equal to a similarity threshold, or a similarity measurement result of a single feature of the first dataset and the second dataset is within a second similarity threshold range, the single feature of the first dataset and the second dataset meets a low similarity requirement.

In a design, the method further includes: determining, by the data quality measurement apparatus in a plurality of features of the first dataset and the second dataset, a proportion of features that meet a high similarity requirement in the plurality of features, where when the proportion of the features that meet the high similarity requirement in the plurality of features is greater than or equal to a third threshold, the plurality of features of the first dataset and the second dataset meet the high similarity requirement; or determining a measurement result based on a similarity measurement result of each of a plurality of features of the first dataset and the second dataset, where if the measurement result is less than or equal to a similarity threshold, or the measurement result is within a second similarity threshold range, the plurality of features of the first dataset and the second dataset meet a high similarity requirement.

In a design, the method further includes: The data quality measurement apparatus determines, from the plurality of candidate models, a model corresponding to a training dataset that meets the high similarity requirement with the first dataset.

In a design, that the configuration information is used to configure similarity measurement includes: The configuration information is used to configure one or more of the following: a similarity measurement procedure, the feature extraction function in the similarity measurement procedure, the distance measurement function, the similarity measurement function, or one or more thresholds used to determine the similarity measurement result.

The similarity measurement procedure includes a similarity measurement step, for example, one or more of feature extraction, distance measurement, and similarity measurement. Feature extraction is an optional step.

Configuring one or more of the feature extraction function, the distance measurement function, and the similarity measurement function includes configuring a function name and/or all or some parameters in the function.

The one or more thresholds used to determine the similarity measurement result include one or more of the similarity threshold for the single feature, the similarity threshold for the plurality of features, the second similarity threshold range for the single feature, the second similarity threshold range for the plurality of features, the third threshold, and the like.

It may be understood that a part that is not configured in the foregoing parameters configured in the configuration information may be defined based on a protocol, or may be obtained from another node. This is not limited herein.

According to an eighth aspect, a data quality measurement method is provided. The method is performed by a data management node or a chip or a circuit used in a data management node, and includes: determining configuration information for similarity measurement; and sending the configuration information to a data quality measurement apparatus, where the configuration information is used to configure similarity measurement, and the similarity measurement is used to determine a degree of similarity in statistical distribution between different datasets.

The data quality measurement apparatus is a model using node, a chip or a circuit used in the model using node, another node other than the model using node, or a chip or a circuit used in the another node.

Optionally, the configuration information for similarity measurement is determined based on an application scenario of a model.

In a design, that the configuration information is used to configure similarity measurement includes: The configuration information is used to configure one or more of the following: a similarity measurement procedure, a feature extraction function in the similarity measurement procedure, a distance measurement function, a similarity measurement function, or one or more thresholds used to determine a similarity measurement result.

The similarity measurement procedure includes a similarity measurement step, for example, one or more of feature extraction, distance measurement, and similarity measurement. Feature extraction is an optional step.

Configuring one or more of the feature extraction function, the distance measurement function, and the similarity measurement function includes configuring a function name and/or all or some parameters in the function.

The one or more thresholds used to determine the similarity measurement result include one or more of a similarity threshold for a single feature, a similarity threshold for a plurality of features, a second similarity threshold range for the single feature, a second similarity threshold range for the plurality of features, a third threshold, and the like.

According to a ninth aspect, a data quality measurement method is provided, including: A data quality measurement apparatus obtains first configuration information and second configuration information, where the first configuration information is used to configure similarity measurement, the second configuration information is used to configure diversity measurement, the similarity measurement is used to determine a degree of similarity in statistical distribution between different datasets, the diversity measurement is used to determine a degree of diversity of the dataset in statistical distribution, and the data quality measurement apparatus is a data collection node, a chip or a circuit used in the data collection node, another node other than the data collection node, or a chip or a circuit used in the another node. The data quality measurement apparatus performs similarity measurement and diversity measurement on a second dataset based on the first configuration information and the second configuration information, to determine a first dataset that meets both a similarity requirement and a diversity requirement. A data sample included in the first dataset is all or some data samples in the second dataset.

According to the method, similarity measurement and diversity measurement may be performed on the second dataset based on a configuration of similarity measurement and a configuration of diversity measurement, to obtain the first dataset that meets both the similarity requirement and the diversity requirement.

Optionally, the first dataset may be used to perform AI model training and/or selection, or completeness testing, to obtain an AI model that meets a system requirement.

Optionally, the data sample reflects one or more of a communication transmission status or a status of a communication device, or the data sample is a communication signal or a signal obtained by preprocessing a communication signal.

In a design, that a data quality measurement apparatus obtains first configuration information and second configuration information includes: The data quality measurement apparatus receives the first configuration information and the second configuration information from a data management node.

In a design, that the data quality measurement apparatus determines, based on the first configuration information and the second configuration information, a first dataset that meets both a similarity requirement and a diversity requirement includes: The data quality measurement apparatus determines N data subsets, where N is a positive integer greater than 1, and the second dataset includes the N data subsets. The data quality measurement apparatus determines similarity measurement results of the N data subsets based on the first configuration information, and determines the first dataset based on the similarity measurement results of the N data subsets, where the first dataset includes some data subsets in the N data subsets, and does not include a data subset in the N data subsets other than the some data subsets. The data quality measurement apparatus determines a diversity measurement result of the first dataset based on the second configuration information. If the diversity measurement result of the first dataset meets the diversity requirement, the data quality measurement apparatus determines that the first dataset meets a similarity and diversity requirement.

According to the foregoing design, a dataset is divided into a plurality of data subsets, redundant parts with small differences are deleted, and retained parts meet the diversity requirement, so that transmission of redundant data transmission between nodes is avoided, and transmission overheads are reduced.

In a design, the method further includes: if the diversity measurement result of the first dataset does not meet the diversity requirement, determining a new first dataset, where the new first dataset includes a part that is of the N data subsets and that is not included in the data subsets in the first dataset; and using the new first dataset as the second dataset, and continuing to perform the step of determining N data subsets.

In a design, that the data quality measurement apparatus determines similarity measurement results of the N data subsets based on the first configuration information, and determines the first dataset based on the similarity measurement results of the N data subsets includes: The data quality measurement apparatus determines a similarity measurement result of each of the N data subsets or similarity measurement results of any two of the N data subsets based on the first configuration information. The data quality measurement apparatus determines, from the N data subsets, a data subset whose similarity measurement result does not meet a low similarity requirement as a first data subset. The data quality measurement apparatus determines the first dataset, where the first dataset includes a data subset in the N data subsets other than the first data subset.

In a design, the method further includes: The data collection node sends the first dataset to the data management node.

In a design, that the first configuration information is used to configure similarity measurement includes: The first configuration information is used to configure one or more of the following: a similarity measurement procedure, a feature extraction function in the similarity measurement procedure, a distance measurement function, a similarity measurement function, or one or more thresholds used to determine the similarity measurement result. That the second configuration information is used to configure diversity measurement includes: The second configuration information is used to configure one or more of the following: a diversity measurement procedure, a feature extraction function in the diversity measurement procedure, a distance measurement function, a diversity measurement function, or one or more thresholds used to determine the diversity measurement result.

For the first configuration information or the second configuration information, refer to the foregoing descriptions of diversity measurement or similarity measurement. Details are not described herein again.

According to a tenth aspect, a data quality measurement method is provided. The method is performed by a data management node or a chip or a circuit used in a data management node, and includes: determining similarity measurement and diversity measurement; and sending first configuration information and second configuration information to a data quality measurement apparatus, where the first configuration information is used to configure similarity measurement, the second configuration information is used to configure diversity measurement, the similarity measurement is used to determine a degree of similarity in statistical distribution between different datasets, and the diversity measurement is used to determine a degree of diversity of the dataset in statistical distribution.

According to the method, a configuration of required similarity measurement and diversity measurement may be determined, and the first configuration information and the second configuration information may be sent to the data quality measurement apparatus, so that the data quality measurement apparatus obtains the first configuration information and the second configuration information.

The first configuration information and the second configuration information may be used to perform similarity measurement and diversity measurement on a second dataset, so that the data quality measurement apparatus obtains a first dataset that meets both a similarity requirement and a diversity requirement.

Optionally, the first dataset may be used to perform AI model training and/or selection, or completeness testing, to obtain an AI model that meets a system requirement.

Optionally, similarity measurement and diversity measurement are determined based on an application scenario of the dataset.

In a design, the method further includes: receiving, from a data collection point, the first dataset that meets both the similarity requirement and the diversity requirement.

In a design, that the first configuration information is used to configure similarity measurement includes: The first configuration information is used to configure one or more of the following: a similarity measurement procedure, a feature extraction function in the similarity measurement procedure, a distance measurement function, a similarity measurement function, or one or more thresholds used to determine a similarity measurement result. That the second configuration information is used to configure diversity measurement includes: The second configuration information is used to configure one or more of the following: a diversity measurement procedure, a feature extraction function in the diversity measurement procedure, a distance measurement function, a diversity measurement function, or one or more thresholds used to determine a diversity measurement result.

For the first configuration information or the second configuration information, refer to the foregoing descriptions of diversity measurement or similarity measurement. Details are not described herein again.

According to an eleventh aspect, a data quality measurement method is provided, including: A data quality measurement apparatus obtains configuration information, where the configuration information is used to configure completeness measurement, and the completeness measurement is used to determine a degree to which a performance indicator is achieved in a processing procedure in an application scenario corresponding to data input into the processing procedure. The data quality measurement apparatus determines a measurement value of a first performance indicator based on the configuration information, where the first performance indicator is determined based on an output of a first processing procedure when a first dataset is used as an input of the first processing procedure. The data quality measurement apparatus determines a completeness measurement result based on the measurement value of the first performance indicator. The data quality measurement apparatus is a model using node, a chip or a circuit used in the model using node, another node other than the model using node, or a chip or a circuit used in the another node.

According to the foregoing design, the degree to which the performance indicator is achieved in the processing procedure in the application scenario corresponding to the data input into the processing procedure may be measured, so that a processing procedure in which a measurement value of the performance indicator meets a performance indicator requirement may be selected for a specific application scenario or system requirement.

The processing procedure includes one or more AI models. Further, the processing procedure may further include processing of inputs and/or outputs of the one or more AI models.

In a design, the obtaining configuration information includes: receiving the configuration information from a data management node.

In a design, that the data quality measurement apparatus determines a completeness measurement result based on the measurement value of the first performance indicator includes: if the measurement value of the first performance indicator is greater than or equal to a completeness threshold, or is within a first completeness threshold range, determining that the completeness measurement result is that a completeness requirement is met; or if the measurement value of the first performance indicator is less than a completeness threshold, or is within a second completeness threshold range, determining that the completeness measurement result is that a completeness requirement is not met.

In a design, the method further includes: The data quality measurement apparatus sends the completeness measurement result to the data management node. In this way, the data management node may determine, based on the completeness measurement result, a processing procedure applicable to the specific application scenario or system requirement and/or a dataset corresponding to the processing procedure, where the dataset and/or the processing procedure may be for inference in the corresponding application scenario or system requirement.

In a design, the method further includes: The data quality measurement apparatus sends, to the data management node, information indicating a dataset and/or a processing procedure whose completeness measurement result is that the completeness requirement is met. In this way, the data management node may use a dataset and/or a processing procedure that meet/meets a similarity requirement with the dataset for inference in the corresponding application scenario or system requirement.

In a design, that the configuration information is used to configure completeness measurement includes: The configuration information is used to configure one or more of the following: the processing procedure, the dataset, the performance indicator, or one or more thresholds used to determine completeness.

The one or more thresholds used to determine the completeness may include one or more of the completeness threshold, the first completeness threshold range, or the second completeness threshold range.

According to a twelfth aspect, a data quality measurement method is provided. The method is performed by a data management node or a chip or a circuit used in a data management node, and includes:

determining configuration information, where the configuration information is used to configure completeness measurement, and the completeness measurement is used to determine a degree to which a performance indicator is achieved in a processing procedure in an application scenario corresponding to a dataset input into the processing procedure, that is, used to measure or determine the degree to which the performance indicator is achieved in the processing procedure in the application scenario corresponding to the dataset input into the processing procedure; and

sending the configuration information to a data quality measurement apparatus, where the data quality measurement apparatus is a model using node or another node other than the model using node.

In a design, the method further includes:
receiving, from the data quality measurement apparatus based on the configuration information, a completeness measurement result or information indicating a dataset and/or a processing procedure that meet/meets a completeness requirement. In a design, that the configuration information is used to configure completeness measurement includes: The configuration information is used to configure one or more of the following: the processing procedure, the dataset, the performance indicator, or one or more thresholds used to determine completeness.

According to a thirteenth aspect, a data quality measurement method is provided, including: A data quality measurement apparatus determines a candidate dataset based on a dataset that is reported by a data collection node and that meets a similarity requirement, where the data quality measurement apparatus is a data management node, a chip or a circuit used in the data management node, another node other than the data management node, or a chip or a circuit used in the another node. The data quality measurement apparatus determines, from the candidate dataset based on diversity measurement, a first dataset that meets a diversity requirement. The data quality measurement apparatus sends the first dataset to a model training node.

According to the method, the data quality measurement apparatus can obtain the first dataset that meets both the similarity requirement and the diversity requirement. The first dataset may be used for AI model training or selection, or may be used for completeness measurement.

In a design, that the data quality measurement apparatus determines, from the candidate dataset based on diversity measurement, a first dataset that meets a diversity requirement includes: determining, by the data quality measurement apparatus based on the diversity measurement, a diversity measurement result corresponding to each dataset in the candidate dataset; and determining, from the candidate dataset, the first dataset whose diversity measurement result meets the diversity requirement.

In a design, the method further includes: sending configuration information to the data collection node, where the configuration information is used to configure feature extraction in similarity measurement; receiving a second feature set of a second dataset from the data collection node; determining, based on a third feature set of a third dataset and the second feature set, a similarity measurement result of the second dataset and the third dataset, where the third dataset is a dataset stored by the data management node; and if the similarity measurement result of the second dataset and the third dataset meets a low similarity requirement, sending a notification message to the data collection node, to notify the data collection node to report the second dataset. The second dataset is the dataset that is reported by the data collection node and that meets the similarity requirement in the method provided in the thirteenth aspect.

According to a fourteenth aspect, a data quality measurement method is provided, including: A data quality measurement apparatus receives a first dataset from a data management node, where the first dataset meets both a similarity requirement and a diversity requirement, and the data quality measurement apparatus is a model training node or another node other than the model training node. The data quality measurement apparatus determines a measurement value of a first performance indicator based on the first dataset. The data quality measurement apparatus determines a completeness measurement result based on the measurement value of the first performance indicator.

In a design, that the data quality measurement apparatus determines a completeness measurement result based on the measurement value of the first performance indicator includes: If the measurement value of the first performance indicator is greater than or equal to a completeness threshold, or is within a first completeness threshold range, the completeness measurement result is that a completeness requirement is met; or if the measurement value of the first performance indicator is less than a completeness threshold, or is within a second completeness threshold range, the completeness measurement result is that a completeness requirement is not met.

In a design, that the data quality measurement apparatus determines a measurement value of a first performance indicator based on the first dataset includes: The data quality measurement apparatus performs model training by using the first dataset, to obtain a first model. The data quality measurement apparatus inputs the first dataset as an input into the first model, and determines the measurement value of the first performance indicator based on an output of the first model.

In a design, when the measurement value of the first performance indicator meets the completeness requirement, the first model meets the completeness requirement in an application scenario corresponding to the first dataset input into the first model.

According to a fifteenth aspect, an apparatus is provided. The apparatus includes a corresponding unit or module for performing the method described in any one of the first aspect to the fourteenth aspect. The unit or module may be implemented by a hardware circuit, may be implemented by software, or may be implemented by a combination of a hardware circuit and software.

According to a sixteenth aspect, an apparatus is provided, including a processor and an interface circuit. The processor is configured to communicate with another apparatus through the interface circuit, and perform the method described in any one of the first aspect to the fourteenth aspect. There are one or more processors.

According to a seventeenth aspect, an apparatus is provided, including a processor coupled to a memory. The processor is configured to execute a program stored in the memory, to perform the method described in any one of the first aspect to the fourteenth aspect. The memory may be located inside or outside the apparatus. In addition, there may be one or more processors.

According to an eighteenth aspect, an apparatus is provided, including a processor and a memory. The memory is configured to store computer instructions. When the apparatus runs, the processor executes the computer instructions stored in the memory, to enable the apparatus to perform the method described in any one of the first aspect to the fourteenth aspect.

According to a nineteenth aspect, a chip system is provided, including a processor or a circuit, configured to perform the method described in any one of the first aspect to the fourteenth aspect.

According to a twentieth aspect, a computer-readable storage medium is provided. The computer-readable storage medium stores instructions. When the instructions are run on a communication apparatus, the method described in any one of the first aspect to the fourteenth aspect is performed.

According to a twenty-first aspect, a computer program product is provided. The computer program product includes a computer program or instructions. When the computer program or the instructions are run by an apparatus, the method described in any one of the first aspect to the fourteenth aspect is performed.

BRIEF DESCRIPTION OF DRAWINGS

FIG. 1 is a diagram of an architecture of a mobile communication system used in an embodiment of this application;
FIG. 2 and FIG. 3 are diagrams of a communication architecture;
FIG. 4 is a diagram of an architecture of an AI model;
FIG. 5 and FIG. 6 are diagrams of a neuron;
FIG. 7 and FIG. 14 are flowcharts of a data quality measurement method;
FIG. 8 is a diagram of features of air interface radio data;
FIG. 9 is a diagram of a PDP feature in different main paths;
FIG. 10 is a box diagram of PDP sparse features extracted by using different sparse feature functions;
FIG. 11a is a diagram of diversity measurement for a single feature;
FIG. 11b and FIG. 11c are diagrams of diversity measurement for a plurality of features;
FIG. 12 and FIG. 13 are schematic flowcharts of application of diversity measurement;
FIG. 15 is a diagram of similarity measurement for a single feature;
FIG. 16a and FIG. 16b are diagrams of similarity measurement for a plurality of features;
FIG. 17, FIG. 18, and FIG. 19 are schematic flowcharts of application of similarity measurement;
FIG. 20 is a diagram of completeness measurement;
FIG. 21 is a diagram of application of diversity measurement, similarity measurement, and completeness measurement; and
FIG. 22 and FIG. 23 are diagrams of a structure of an apparatus.

DESCRIPTION OF EMBODIMENTS

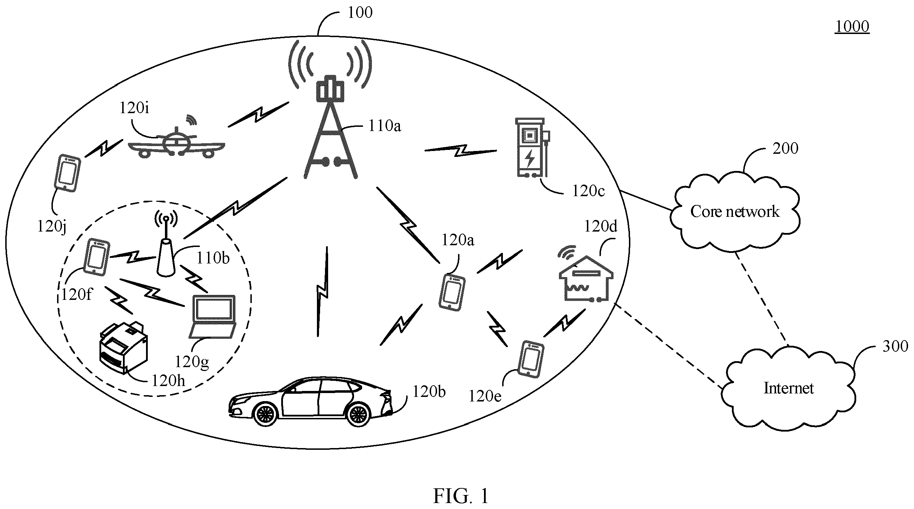

FIG. 1 is a diagram of an architecture of a communication system 1000 to which this application is applicable. As shown in FIG. 1, the communication system includes a radio access network 100 and a core network 200. Optionally, the communication system 1000 may further include an internet 300. The radio access network 100 may include at least one access network device (for example, 110a and 110b in FIG. 1), and may further include at least one terminal device (for example, 120a to 120j in FIG. 1). The terminal device is connected to the access network device in a wireless manner, and the access network device is connected to the core network in a wireless or wired manner. A core network device and the access network device may be different physical devices that are independent of each other, functions of the core network device and logical functions of the access network device may be integrated into a same physical device, or a part of functions of the core network device and a part of functions of the access network device may be integrated into one physical device. Terminal devices may be connected to each other in a wired or wireless manner, and access network devices may be connected to each other in a wired or wireless manner. FIG. 1 is merely a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or unit that implements a part of functions of a base station, for example, may be a central unit (central unit, CU), a distributed unit (distributed unit, DU), a central unit-control plane (CU-control plane, CU-CP) module, or a central unit-user plane (CU-user plane, CU-UP) module. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in this application.

In this application, an apparatus configured to implement the functions of the access network device may be the access network device, or may be an apparatus that can support the access network device in implementing the functions, for example, a chip system, a hardware circuit, a software module, or a combination of a hardware circuit and a software module. The apparatus may be installed in the access network device or may be matched with the access network device for use. In this application, the chip system may include a chip, or may include a chip and another discrete component. For ease of description, the following describes the technical solutions provided in this application by using an example in which the apparatus configured to implement the functions of the access network device is the access network device and the access network device is a base station.

(1) Protocol layer structure

Communication between an access network device and a terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal device may further include an artificial intelligence (artificial intelligence, AI) layer for transmitting data related to an AI function.

(2) Central unit (central unit, CU) and distributed unit (distributed unit, DU)

An access device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be defined based on protocol layers of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU. This is not limited.

The division into the processing functions of the CU and the DU based on protocol layers is merely an example, and may also be other division. For example, the CU or the DU may have functions of more protocol layers through division. For another example, the CU or the DU may have some processing functions of the protocol layers through division. In a design, a part of functions of an RLC layer and functions of a protocol layer above the RLC layer are set on the CU, and remaining functions of the RLC layer and functions of a protocol layer below the RLC layer are set on the DU. In another design, division into functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be distinguished at a physical layer (physical layer, PHY). For example, the DU may implement a higher-layer function of the PHY layer, and the RU may implement a lower-layer function of the PHY layer. When used for sending, a function of the PHY layer may include one or more of the following: cyclic redundancy check (cyclic redundancy check, CRC) code addition, channel encoding, rate matching, scrambling, modulation, layer mapping, precoding, resource mapping, physical antenna mapping, or a radio frequency sending function. When used for receiving, a function of the PHY layer may include one or more of the following: CRC check, channel decoding, rate de-matching, descrambling, demodulation, layer de-mapping, channel detection, resource de-mapping, physical antenna de-mapping, or a radio frequency receiving function. The higher-layer function of the PHY layer may include a part of functions of the PHY layer. For example, this part of functions are closer to the MAC layer. The lower-layer function of the PHY layer may include the other part of functions of the PHY layer. For example, this part of functions are closer to the radio frequency function. For example, the higher-layer function of the PHY layer may include CRC code addition, channel encoding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code addition, channel encoding, rate matching, scrambling, modulation, layer mapping, and precoding, and the lower-layer function of the PHY layer may include resource mapping, physical antenna mapping, and radio frequency sending functions. For example, the higher-layer function of the PHY layer may include CRC check, channel decoding, rate de-matching, decoding, demodulation, and layer demapping, and the lower-layer function of the PHY layer may include channel detection, resource demapping, physical antenna demapping, and radio frequency receiving functions. Alternatively, the higher-layer function of the PHY layer may include CRC check, channel decoding, rate de-matching, decoding, demodulation, layer demapping, and channel detection, and the lower-layer function of the PHY layer may include resource demapping, physical antenna demapping, and radio frequency receiving functions.

For example, the functions of the CU may be implemented by one entity, or may be implemented by different entities. For example, the functions of the CU may be further divided. To be specific, a control plane and a user plane are separated and implemented by different entities: a control plane CU entity (that is, a CU-CP entity) and a user plane CU entity (that is, a CU-UP entity). The CU-CP entity and the CU-UP entity may be coupled to the DU, to jointly complete functions of an access network device.

Optionally, any one of the DU, the CU, the CU-CP, the CU-UP, and the RU may be a software module, a hardware structure, or a combination of the software module and the hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

In a possible implementation, the access network device includes the CU-CP, the CU-UP, the DU, and the RU. For example, this application is executed by the DU, or the DU and the RU, or the CU-CP, the DU, and the RU, or the CU-UP, the DU, and the RU. This is not limited. The methods performed by the modules also fall within the protection scope of this application.

The terminal device may also be referred to as a terminal, user equipment (user equipment, UE), a mobile station, a mobile terminal device, or the like. The terminal device may be widely used in communication in various scenarios, for example, including but not limited to at least one of the following scenarios: device-to-device (device-to-device, D2D), vehicle-to-everything (vehicle-to-everything, V2X), machine type communication (machine type communication, MTC), an internet of things (internet of things, IoT), virtual reality, augmented reality, industrial control, self driving, telemedicine, a smart grid, smart furniture, a smart office, a smart wearable, smart transportation, or a smart city. The terminal device may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in this application.

In this application, an apparatus configured to implement a function of the terminal device may be the terminal device, or may be an apparatus that can support the terminal device in implementing the function, for example, a chip system, a hardware circuit, a software module, or a combination of a hardware circuit and a software module. The apparatus may be installed in the terminal device or may be matched with the terminal device for use. For ease of description, the following describes the technical solutions provided in this application by using an example in which the apparatus configured to implement the function of the terminal device is the terminal device and the terminal device is UE.

The base station and the UE may be fixed or movable. The base station and/or the UE may be deployed on the land, including an indoor or outdoor base station and/or UE, and a handheld or vehicle-mounted base station and/or UE; may be deployed on the water; or may be deployed on an airplane, a balloon, and an artificial satellite in the air. Application scenarios of the base station and the UE are not limited in this application. The base station and the UE may be deployed in a same scenario or different scenarios. For example, the base station and the UE are both deployed on the land. Alternatively, the base station is deployed on the land, and the UE is deployed on the water. Examples are not described one by one.

Roles of the base station and the UE may be relative. For example, the helicopter or the uncrewed aerial vehicle 120i in FIG. 1 may be configured as a mobile base station. For the UE 120j accessing the radio access network 100 via 120i, the UE 120i is a base station. However, for the base station 110a, 120i is UE. In other words, communication between 110a and 120i is performed based on a radio air interface protocol. Alternatively, communication between 110a and 120i may be performed based on an interface protocol between base stations. In this case, relative to 110a, 120i is also a base station. Therefore, the base station and the UE may be collectively referred to as communication apparatuses, 110a and 110b in FIG. 1 each may be referred to as a communication apparatus having a base station function, and 120a to 120j in FIG. 1 each may be referred to as a communication apparatus having a UE function.

In this application, an independent network element (for example, referred to as an AI network element or an AI node) may be introduced into the communication system shown in FIG. 1, to implement an AI-related operation. The AI network element may be directly connected to the access network device in the communication system, or may be indirectly connected to the access network device via a third-party network element. The third-party network element may be a core network element such as an authentication management function (authentication management function, AMF) or a user plane function (user plane function, UPF). Alternatively, an AI function, an AI module, or an AI entity may be configured in another network element in the communication system, to implement an AI-related operation. For example, the another network element may be an access network device (for example, a gNB), a core network device, or a network management system (operation, administration and maintenance, OAM). In this case, a network element that performs the AI-related operation is an AI function built-in network element. The OAM is configured to perform operation, management, maintenance, and the like on the access network device and/or the core network device.

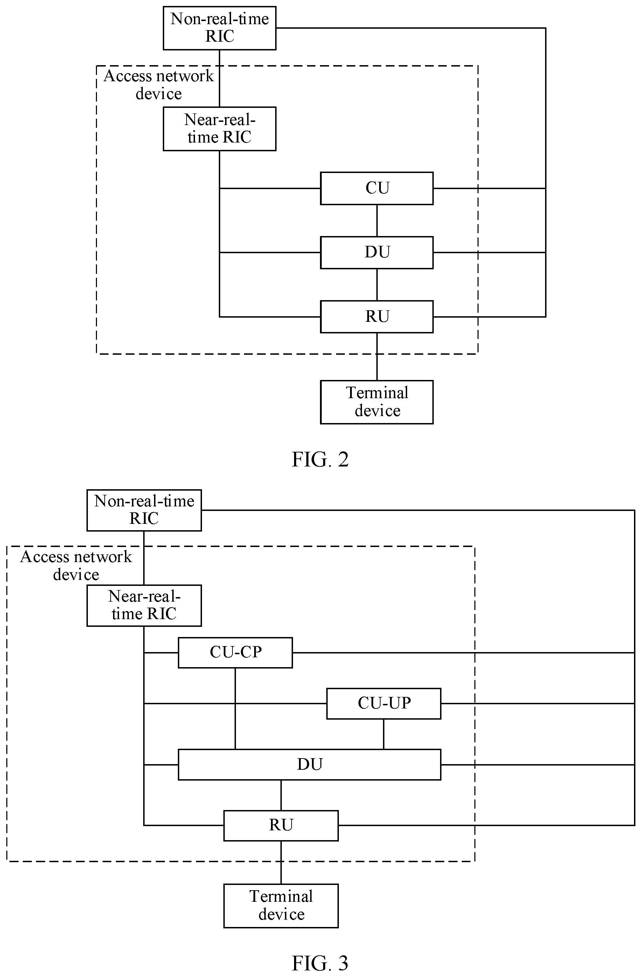

As shown in FIG. 2 or FIG. 3, a communication system architecture to which a data quality measurement method provided in this application is applicable is further provided. The communication architecture is merely an example for description, and is not intended to limit this application. In comparison with FIG. 2, in FIG. 3, a CU is separated into a CU-CP, a CU-UP, and the like. In the following description, FIG. 2 is used as an example for description.

As shown in FIG. 2, in a first design, an access network device includes a near-real-time radio access network intelligent controller (RAN intelligent controller, RIC) module, configured to perform model learning and/or inference. For example, the near-real-time RIC may be configured to train an AI model, and use the AI model for inference. For example, the near-real-time RIC may obtain information on a network side and/or a terminal side from at least one of a CU, a DU, or an RU, and the information may be used as training data or inference data. Optionally, the near-real-time RIC may submit an inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU.

Alternatively, in a second design, as shown in FIG. 2, a non-real-time RIC is included outside an access network device (optionally, the non-real-time RIC may be located in OAM or a core network device), and is configured to perform model training and inference. For example, the non-real-time RIC is configured to train an AI model, and use the model for inference. For example, the non-real-time RIC may obtain information on a network side and/or a terminal side from at least one of a CU, a DU, or an RU, and the information may be used as training data or inference data. An inference result may be submitted to at least one of the CU, the DU, the RU, or a terminal device. Optionally, the CU and the DU may exchange the inference result. Optionally, the DU and the RU may exchange the inference result. For example, the non-real-time RIC submits the inference result to the DU, and the DU forwards the inference result to the RU.

Alternatively, in a third design, as shown in FIG. 2, an access network device includes a near-real-time RIC, and a non-real-time RIC is included outside the access network device (optionally, the non-real-time RIC may be located in OAM or a core network device). As in the second design, the non-real-time RIC may be configured to perform model training and inference. In addition/Alternatively, as in the first design, the near-real-time RIC may be configured to perform model training and inference. In addition/Alternatively, the non-real-time RIC performs model training, and the near-real-time RIC may obtain AI model information from the non-real-time RIC, obtain information on a network side and/or a terminal side from at least one of a CU, a DU, or an RU, and obtain an inference result by using the information and the AI model information. Optionally, the near-real-time RIC may submit the inference result to at least one of the CU, the DU, the RU, or a terminal device. Optionally, the CU and the DU may exchange the inference result. Optionally, the DU and the RU may exchange the inference result. For example, the near-real-time RIC submits the inference result to the DU, and the DU forwards the inference result to the RU. For example, the near-real-time RIC is configured to train a model A, and use the model A for inference. For example, the non-real-time RIC is configured to train a model B, and use the model B for inference. For example, the non-real-time RIC is configured to train a model C and send information about the model C to the near-real-time RIC, and the near-real-time RIC uses the model C for inference.

An AI model is a specific implementation of an AI function. The AI model represents a mapping relationship between an input and an output of a model. The AI model may be a neural network, a linear regression model, a decision tree model, a support vector machine (support vector machine, SVM), a Bayesian network, a Q-learning model, another machine learning model, or the like. In this application, the AI function may include one or more of the following: data collection (collection of training data and/or inference data), data preprocessing, model training (or referred to as model learning), model information release (configuration of model information), model verification, model inference, or inference result release. In this application, the AI model may be referred to as a model for short.

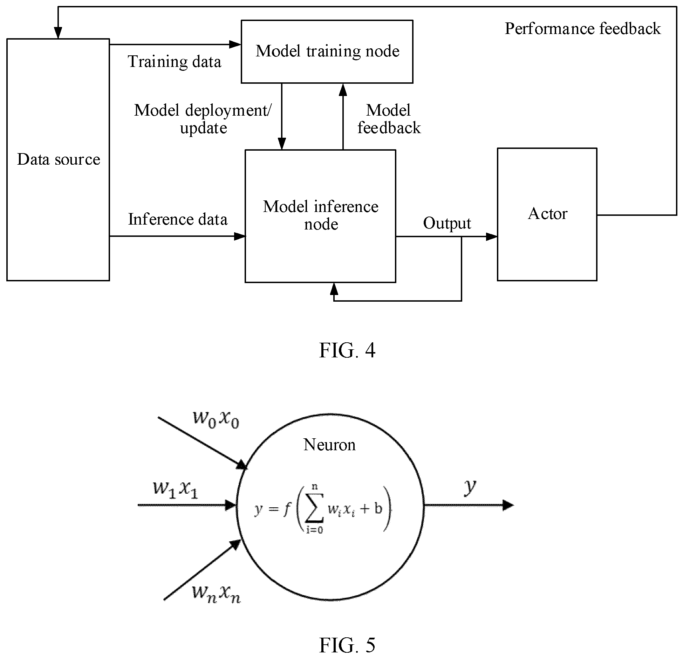

FIG. 4 is a diagram of an application architecture of the AI model. A data source (data source) is configured to store training data and inference data. A model training node (model training host) analyzes or trains the training data (training data) provided by the data source, to obtain the AI model, and deploys the AI model on a model inference node (model inference host). Optionally, the model training node may further update the AI model that has been deployed on the model inference node. The model inference node may further feed back related information of the deployed model to the model training node, so that the model training node performs optimization, update, or the like on the deployed AI model.

Obtaining the AI model through learning by the model training node is equivalent to obtaining the mapping relationship between the input and the output of the model through learning by the model training node by using the training data. The model inference node uses the AI model to perform inference based on the inference data provided by the data source, to obtain an inference result. The method may alternatively be described as follows: The model inference node inputs the inference data to the AI model, and obtains the output by using the AI model, where the output is an inference result. The inference result may indicate a configuration parameter used (acted) by an execution object, and/or an operation performed by the execution object. The inference result may be planned by an execution entity (actor) in a unified manner, and sent to one or more execution objects (for example, network entities) for execution. Optionally, the execution entity or the execution object may feed back, to the data source, a parameter or a measurement parameter collected by the execution entity or the execution object. This process may be referred to as performance feedback, and the parameter fed back may be used as training data or inference data. Optionally, feedback information related to model performance may be further determined based on the inference result output by the model inference node, and the feedback information is fed back to the model inference node. The model inference node may feed back performance information and the like of the model to the model training node based on the feedback information, so that the model training node performs optimization, update, or the like on the deployed AI model. This process may be referred to as model feedback.

The AI model may be a neural network or another machine learning model. The neural network is used as an example. The neural network is a specific implementation form of a machine learning technology. According to a universal approximation theorem, the neural network can theoretically approximate any continuous function, so that the neural network has a capability of learning any mapping. Therefore, the neural network can accurately perform abstraction modeling for a complex high-dimension problem.

The idea of the neural network comes from a neuron structure of brain tissue. Each neuron performs a weighted summation operation on input values of the neuron, and outputs a weighted summation result through an activation function. FIG. 5 is a diagram of a structure of the neuron. It is assumed that inputs of the neuron are $x = [x_0, x_1, ..., x_n]$, weights corresponding to the inputs are $w = [w, w_1, ..., w_n]$, and an offset for weighted summation is b. A form of the activation function may be diversified. It is assumed that an activation function of a neuron is $y = f(z) = \max(0, z)$, and an output of the neuron is

$$y = f\left(\sum_{i=0}^{i=n} w_i * x_i + b\right) = \max\left(0, \sum_{i=0}^{i=n} w_i * x_i + b\right)$$. For another example, an activation function of a neuron is $y = f(z) = z$, and an output of the neuron is $y = f\left(\sum_{i=0}^{i=n} w_i * x_i + b\right) = \sum_{i=0}^{i=n} w_i * x_i + b$. $x_i$, $w_i$, and b may be various possible values such as a decimal, an integer (including 0, a positive integer, a negative integer, or the like), or a complex number. Activation functions of different neurons in the neural network may be the same or different.

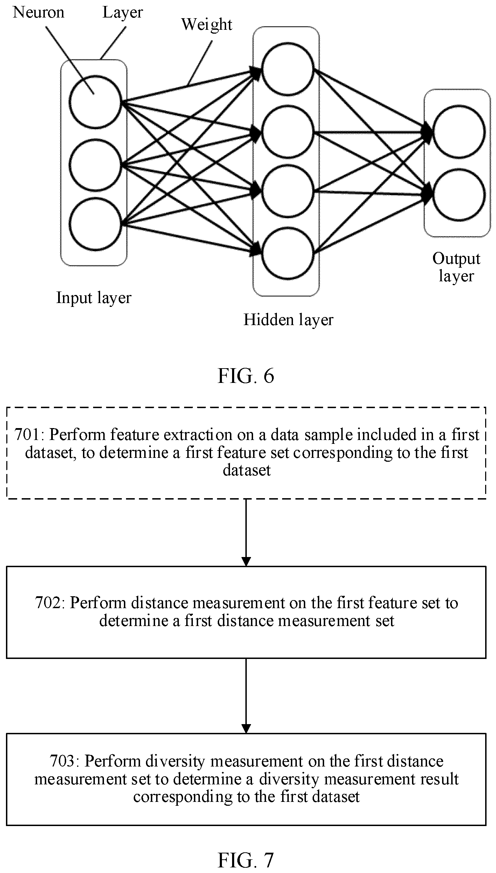

The neural network usually includes a multi-layer structure, and each layer may include one or more neurons. A depth and/or a width of the neural network are/is increased, so that an expression capability of the neural network can be improved, and a more powerful information extraction and abstraction modeling capability can be provided for a complex system. The depth of the neural network may be a quantity of layers included in the neural network, and a quantity of neurons included in each layer may be referred to as a width of the layer. FIG. 6 is a diagram of a layer relationship of the neural network. In an implementation, the neural network includes an input layer and an output layer. The input layer of the neural network performs neuron processing on a received input, and then transfers a result to the output layer. The output layer obtains an output result of the neural network. In another implementation, the neural network includes an input layer, a hidden layer, and an output layer. The input layer of the neural network performs neuron processing on a received input, and then transfers a result to an intermediate hidden layer. The hidden layer transfers a calculation result to the output layer or an adjacent hidden layer. Finally, the output layer obtains an output result of the neural network. One neural network may include one or more hidden layers that are sequentially connected. This is not limited. A loss function may be defined in a training process of the neural network. The loss function describes a gap or a difference between an output value of the neural network and an ideal target value. A specific form of the loss function is not limited in this application. The training process of the neural network is a process of adjusting a parameter of the neural network, such as the quantity of layers and the width of the neural network, a weight of the neuron, and/or a parameter in the activation function of the neuron, so that a value of the loss function is less than a threshold or meets a target requirement.

A main objective of conventional data quality measurement (data quality assessment, DQA) is to measure errors in collection, transmission, storage, and the like of data. Measurement methods of DQA vary according to requirements of specific objects in different fields. The following describes several common measurement criteria of DQA:

accuracy (accuracy): one or more of correctness, reliability, or an authentication degree of the data;

timeliness (timeliness): a degree to which the data meets an actual requirement in terms of time validity in a specific scenario;

consistency (consistency): a degree to which the data is displayed in a same format and is compatible with previous data; and

accessibility (accessibility): a degree to which the data is accessible, or a degree to which the data can be easily and quickly retrieved.

The measurement criteria of DQA have been widely applied to various fields, mainly to measure availability of data in a specific application object. In a wireless communication data application process, collection, transmission, storage, and the like of data are strictly controlled, and availability of the data is usually implemented in data preprocessing, that is, basic requirements for accuracy, timeliness, consistency, and accessibility of the data are ensured through conventional operations such as data cleaning and filtering. A main objective of data quality measurement in a communication system is to measure quality of data collected by the communication system for a specific application object. Therefore, a current measurement criterion of DQA cannot meet a data quality measurement requirement in a wireless communication system, and a new data quality measurement method needs to be established. For data quality measurement in wireless communication, this application proposes the following three main measurement criteria.

1. Diversity (diversity): It measures a degree of diversity of data in statistical distribution. Greater diversity of the data indicates higher quality and higher value of the data, helping improve a generalization capability and robustness of a data application object.
2. Similarity (similarity): It measures a degree of similarity in statistical distribution between data, which can be extended to a similarity between every two datasets when there are a plurality of datasets. If a similarity between two datasets is higher, it indicates that statistical distribution of the two datasets is closer, and an amount of information brought by merging is smaller. In contrast, if a similarity between two datasets is lower, it indicates that a difference in statistical distribution between the two datasets is greater, and an amount of information brought by merging is larger. The similarity may be used to perform fusion extension on a plurality of datasets.
3. Completeness (completeness): It is used to measure a degree to which a required performance indicator is achieved in a processing procedure in an application scenario corresponding to data input to the processing procedure.

The data quality measurement method provided in this application may be applied to a plurality of communication systems of wireless communication, wired communication, satellite communication, underwater communication, and the like. In subsequent descriptions of this application, an example in which the data quality measurement method in this application is applied to a wireless communication system is mainly used for description, and this is not intended to limit this application. In another communication system, the same may be deduced by analogy.

The method in this application may be applied to a plurality of application scenarios. The application scenarios may be classified from a plurality of dimensions. Each application scenario may include one or a combination of the following: a transmission or processing medium, a transmission or processing device, a communication environment, a transmission-related processing procedure, or the like. The transmission or processing medium is a medium related to a transmission path, and includes a wireless medium, a wired medium, light, water, air, vacuum, or the like. The transmission or processing device is a device related to transmission or processing, for example, different antenna forms such as massive multiple input multiple output MIMO with 128 transmit antennas and 128 receive antennas or small-scale MIMO with 4 transmit antennas and 4 receive antennas, power amplifiers corresponding to different transmit power, or different types of communication devices such as a base station communication device, a handheld terminal communication device, a vehicle-mounted terminal communication device, or a satellite antenna transceiver device. The communication environment is a communication-related environment, for example, an indoor environment, an outdoor environment, a city, or a suburban area. A transmission procedure is, for example, CSI codebook feedback in FDD MIMO, beam management in high-frequency communication, user pairing in resource scheduling, MCS prediction in link adaptation, and SRS channel prediction in TDD MIMO.

As shown in FIG. 7, this application provides a data quality measurement method. The method is mainly a diversity measurement criterion, and the diversity measurement criterion is mainly used to measure a degree of diversity of a dataset in statistical distribution. Diversity measurement may be for a single feature of the dataset or for a plurality of features of the dataset. A procedure shown in FIG. 7 includes at least the following steps.

Step 701: Perform feature extraction on a data sample included in a first dataset, to determine a first feature set corresponding to the first dataset.

The first dataset includes at least one data sample. The data sample may be data in one or more of a plurality of communication systems of wireless communication, wired communication, satellite communication, underwater communication, and the like, and is used to reflect one or more of a communication transmission status or a status of a communication device in the communication systems, and/or is a communication signal or a signal obtained by preprocessing a communication signal. Optionally, a representation form of the data sample may be a scalar, a vector, a matrix, structured data, a tensor, or the like. Optionally, the foregoing preprocessing may include one or more of the following: discrete Fourier transform (discrete Fourier transform, DFT)/inverse discrete Fourier transform (inverse discrete Fourier transform, IDFT) in frequency domain, space domain, or delay domain, cyclic prefix (cyclic prefix, CP) removal, frequency offset compensation, timing advance (timing advance, TA) compensation, phase rotation, or amplitude normalization.

For example, in a wireless communication system, the communication signal may include one or more of the following: air interface signal data, air interface noise data, air interface interference signal data, or the like. In a wired communication system, the communication signal may include one or more of the following: signal data transmitted through an optical fiber, noise data transmitted through the optical fiber, interference signal data transmitted through the optical fiber, or the like. In satellite communication, a status of the communication signal may include one or more of the following: signal data for satellite communication, signal data for satellite-to-ground communication, or the like. In the wireless communication system, the air interface signal data may include one or more of the following: a signal of a physical uplink shared channel (physical uplink shared channel, PUSCH), a signal of a physical random access channel (physical random access channel, PRACH), a signal of a physical downlink shared channel (physical downlink shared channel, PDSCH), and the like.

The communication transmission status is described by using examples. In the wireless communication system, the communication transmission status may include one or more of the following: a status of a communication channel, a measurement parameter on a base station side and/or a terminal side (the measurement parameter is also referred to as a measurement amount), a feedback amount on the terminal side, a size of a service packet of a radio link layer, a delay of arrival of the service packet, or other data. In satellite communication, the communication transmission status may include one or more of the following: received signal strength data between satellites, link quality measurement data between a satellite and a ground, or the like. A 5G new radio (new radio, NR) system for wireless communication is used as an example. The measurement parameter may include signal to interference plus noise ratio (signal to interference plus noise ratio, SINR) data and/or reference signal received power (reference signal received power, RSRP) data. The feedback amount on the terminal side may include one or more of a precoding matrix indicator (precoding matrix indicator, PMI), a channel quality indicator (channel quality indicator, CQI), and the like. A service status of a link layer may be delay data of arrival of service packets, and the like. The 5G NR system for wireless communication is used as an example. The communication channel may include one or more of the following: a channel corresponding to an uplink sounding reference signal (sounding reference signal, SRS), a channel corresponding to a downlink channel state information-reference signal (channel state information-reference signal, CSI-RS), a channel corresponding to an uplink or downlink demodulation reference signal (demodulation reference signal, DMRS), a channel corresponding to a synchronization signal and/or a broadcast signal, for example, a synchronization signal block (synchronization signal/PBCH block, SSB), a channel corresponding to a tracking reference signal (tracking reference signal, TRS), and the like.

The status of the communication device is described by using an example. In the wireless communication system and a satellite communication system, the status of the communication device may include one or more of the following: phase noise data (phase noise), power amplification change data of a power amplifier (power amplifier, PA), power consumption data of a radio frequency active antenna unit (active antenna unit, AAU), or the like.

Optionally, feature extraction on the data sample included in the first dataset may be based on a feature extraction function. In other words, a feature of the data sample included in the first dataset may be extracted by using the feature extraction function, to determine the first feature set. For example, in a design, feature extraction is performed, by using the feature extraction function, on the data sample included in the first dataset, to obtain a feature sample corresponding to the data sample, and the first feature set corresponding to the first dataset is determined based on the feature sample corresponding to the data sample included in the first dataset. The feature sample included in the first feature set is feature information extracted, by using the feature extraction function, from the data sample included in the first dataset. The first feature set may include feature samples corresponding to all data samples in the first dataset. For example, the first dataset includes $I_1$ data samples, and feature extraction may be separately performed on the $I_1$ data samples by using the feature extraction function, to determine $I_1$ feature samples, where the $I_1$ feature samples form the first feature set. Alternatively, the first feature set may include feature samples corresponding to some data samples in the first dataset. For example, $I_2$ data samples may be selected from $I_1$ data samples included in the first dataset, where a value of $I_2$ is less than $I_1$; and feature extraction is separately performed on the $I_2$ data samples by using the feature extraction function, to determine feature samples respectively corresponding to the $I_2$ data samples, where the $I_2$ feature samples form the first feature set. Alternatively, feature extraction is first performed on $I_1$ data samples included in the first dataset, to determine $I_1$ feature samples, and $I_3$ feature samples are or selected from the $I_1$ feature samples, where the $I_3$ feature samples form the first feature set, and a value of $I_3$ is less than $I_1$. Alternatively, $I_4$ feature samples are directly obtained from $I_1$ data samples included in the first dataset based on the feature extraction function, where a value of $I_4$ is less than, greater than, or equal to $I_1$, and the $I_4$ feature samples form the first feature set.

It may be understood that when the data sample is used as the feature sample, the feature extraction step may be omitted. Using the data sample as the feature sample may be referred to as a data sample self feature definition, a self feature definition for short. Optionally, the feature extracted from the data sample included in the first dataset may include one or more of the following: a power delay profile (power delay profile, PDP), a time-varying Doppler spectrum (doppler spectrum), a space domain angle power spectrum (angle power spectrum, APS), an average value, a maximum value, a minimum value, a histogram, an accumulated percentage, the data sample, or the like.

An example in which the data sample is air interface channel data in a 5G communication system is used to describe a first dataset S1. An air interface (air interface) is short for an air interface in wireless communication, and an air interface channel may be a data representation in wireless communication transmission. With development of wireless communication technologies, higher requirements are imposed on the communication system in a plurality of aspects such as a system capacity and an experience rate. In the 5G communication system, a multiple input multiple output (multiple input multiple output, MIMO) transmission method may be used, and a large-scale antenna array is configured at a receive end and a transmit end, to significantly improve a system communication capacity and an experience rate. For example, an antenna array with 64 receive channels and 64 transmit channels is used on a base station side, and an antenna array with 4 receive channels and 4 transmit channels is used on a terminal side. For a time-frequency resource unit (resource element, RE) of 5G orthogonal frequency division multiplexing (orthogonal frequency division multiplexing, OFDM), air interface channel data corresponding to the time-frequency resource unit is a 64*4 complex matrix. A channel dataset $S_1 = \{H_i\}_{i=1}^{I_1}$ may be formed by performing a series of processing on the air interface channel, such as noise reduction, normalization, singular value decomposition (singular value decomposition, SVD), coordinate conversion, and data truncation or extension. For example, $H_i \in \mathbb{C}^{N_t*N_f*N_R*N_T}$, where $H_i$ represents a complex four-dimensional (four-dimensional, 4D) tensor, and C represents a complex number. $N_R$ represents a quantity of receive antennas. $N_T$ represents a quantity of transmit antennas. $N_t$ represents a plurality of time units for channel data collection, for example, a plurality of slots. $N_f$ represents a quantity of frequency domain resource units occupied by a frequency domain channel, for example, a quantity of subcarriers. The time unit may include one or more frames, one or more slots, one or more mini-slots, or one or more symbols. The frequency domain resource unit may include one or more subcarriers or one or more resource blocks (resource blocks, RBs). In this example, the first dataset S1 includes $I_1$ data samples, where the $I_1$ data samples are represented as $H_i$, and a value of i is a positive integer greater than or equal to 1 and less than or equal to $I_1$. Optionally, a main feature of the air interface channel data includes: a PDP, a time-varying Doppler spectrum, an APS, or the like.

For example, a PDP feature of the air interface channel data is extracted. A basic principle of extracting the PDP feature is: converting a frequency domain response of the air interface channel data into an amplitude representation of a time domain power spectrum through Fourier transform, where the amplitude representation of the time domain power spectrum is referred to as the PDP feature corresponding to the air interface channel data. For example, for the first dataset $S_1 = \{H_i\}_{i=1}^{I_1}$, a frequency domain response of channel data $H_i$ may be converted into an amplitude representation of a time domain power spectrum through Fourier transform, to obtain the first feature set. The first feature set may be referred to as a PDP feature set. The PDP feature set may be represented as $X_1 = \{h_{p,i}\}_{i=1}^{I_1}$. The PDP feature set includes $I_1$ feature samples, where the feature sample may be represented as $h_{p,i}$ and a value of i is an integer greater than or equal to 1 and less than or equal to $I_1$. A feature extraction function for the time domain power spectrum satisfies the following formula, the feature sample $h_{p,i}$ satisfies the following formula, or a function for performing PDP feature extraction on the first dataset $S_1$ satisfies the following formula:

$$h_{p,i} = \frac{1}{N_R N_T N_t} \sum_{n=1}^{N_R} \sum_{m=1}^{N_T} \sum_{t=1}^{N_t} \text{abs}\,(U_{N_f}^H H_i[t,:,n,m])$$

abs() represents taking an absolute value. $H_i[t,:,n,m]$ represents selecting to perform discrete Fourier transform in a second-dimensional frequency domain of $H_i$ and perform summation in a first-dimensional time domain, a third-dimensional receive antenna domain, and a fourth-dimensional transmit antenna domain.

$U_{N_f}$ represents an $N_f \times N_f$ discrete Fourier transform matrix. $U_{N_f}^H$ represents conjugate transposition of $U_{N_f}$. The parameter $N_f$ represents a dimension of discrete Fourier transform. That is:

$$U_{N_f} = \begin{pmatrix} 1 & 1 & \cdots & 1 \\ 1 & e^{-j2\pi/N_f} & \cdots & e^{-j2(N_f-1)\pi/N_f} \\ \cdots & \cdots & \cdots & \cdots \\ 1 & e^{-j2(N_f-1)\pi/N_f} & \cdots & e^{-j2(N_f-1)(N_f-1)\pi/N_f} \end{pmatrix}$$

For example, a time-varying Doppler spectrum feature of the air interface channel data is extracted. A basic principle of extracting the time-varying Doppler spectrum feature is: converting a time domain response of the channel data into an amplitude representation of a Doppler spectrum through Fourier transform, where the amplitude representation of the Doppler spectrum is referred to as the time-varying Doppler spectrum feature of the channel data. For example, the first dataset $S_1 = \{H_i\}_{i=1}^{I_1}$ is used as an example. A time domain response of channel data $H_i$ may be converted into an amplitude representation $h_{d,i}$ of a Doppler spectrum through Fourier transform. The first feature set may be referred to as a Doppler spectrum feature set. The Doppler spectrum feature set may be represented as $X_1 = \{h_{d,i}\}_{i=1}^{I_1}$. A feature extraction function for the Doppler spectrum satisfies the following formula, a feature sample $h_{d,i}$ satisfies the following formula, or a function for extracting a time-varying Doppler spectrum feature from the first dataset satisfies the following formula:

$$h_{d,i} = \frac{1}{N_R N_T N_f} \sum_{n=1}^{N_R} \sum_{m=1}^{N_T} \sum_{f=1}^{N_f} \text{abs}\left(U_{N_t} H_i[:, f, n, m]\right)$$

$U_{N_t}$ represents an $N_t \times N_t$ discrete Fourier transform matrix. $H_i[:,f,n,m]$ represents selecting to perform discrete Fourier transform in a first-dimensional time domain of $H_i$ and perform summation in a second-dimensional frequency domain, a third-dimensional receive antenna domain, and a fourth-dimensional transmit antenna domain. That is:

$$U_{N_t} = \begin{pmatrix} 1 & 1 & \cdots & 1 \\ 1 & e^{-j2\pi/N_t} & \cdots & e^{-j2(N_t-1)\pi/N_t} \\ \cdots & \cdots & \cdots & \cdots \\ 1 & e^{-j2(N_t-1)\pi/N_t} & \cdots & e^{-j2(N_t-1)(N_t-1)\pi/N_t} \end{pmatrix}$$

For example, an APS feature of the air interface channel data is extracted. A basic principle of extracting the APS feature is: converting a space domain response of the channel data into a power representation of an angle power spectrum through Fourier transform, where the power representation of the angle power spectrum is referred to as the APS feature of the channel data. For example, the first dataset $S_1 = \{H_i\}_{i=1}^{I_1}$ is used as an example. A space domain response of channel data $H_i$ may be converted into a power representation $H_{a,i}$ of an angle power spectrum through Fourier transform. The first feature set may be referred to as an APS feature set, which may be represented as $X_1 = \{H_{a,i}\}_{i=1}^{I_1}$. A feature extraction function for the angle power spectrum satisfies the following formula, a feature sample $H_{a,i}$ satisfies the following formula, or a function for extracting an APS feature of the first dataset satisfies the following formula:

$$H_{a,i}[k, l] = \frac{1}{N_R N_t} \sum_{t=1}^{N_t} \sum_{n=1}^{N_R} \frac{1}{N_v^2 N_h^2} e_{kl} H_i[t, :, n, :]^H H_i[t, :, n, :] e_{kl}^H, \, k, l = 1, \dots, K_d$$

$H_i[t,:,n,:]$ represents selecting to perform a corresponding space domain transform operation in a second-dimensional frequency domain and a fourth-dimensional transmit antenna domain of $H_i$ and perform summation in a first-dimensional time domain and a third-dimensional receive antenna domain. $N_v$ represents a quantity of rows of transmit antennas. $D_v$ represents a vertical spacing between transmit antennas. $N_h$ represents a quantity of columns of transmit antennas. $D_h$ represents a horizontal spacing between antennas. $K_d$ represents a dimension of space domain transform. $e_{h,kl}$ and $e_{v,kl}$ represent antenna array response vectors.

$$e_{kl} = e_{v,kl} \otimes e_{h,kl},$$

$$e_{h,kl} = exp\left(-2j\pi D_h \sin\left(\frac{(k-1)\pi}{K}\right) \sin\left(\frac{(l-1)\pi}{K} - \frac{\pi}{2}\right)\begin{pmatrix} 0 \\ \cdots \\ N_h - 1 \end{pmatrix}\right)$$

$$e_{v,kl} = exp\left(-2j\pi D_v \cos\left(\frac{(k-1)\pi}{K}\right)\begin{pmatrix} 0 \\ \cdots \\ N_v - 1 \end{pmatrix}\right)$$

Alternatively, in another design, further processing may be further performed on an extracted feature sample, for example, sparse processing is performed to obtain a sparse feature sample. The feature sample included in the first feature set is a sparse feature sample. Optionally, the first feature set may include sparse feature samples corresponding to all data samples in the first dataset, or include sparse feature samples corresponding to some data samples in the first dataset.

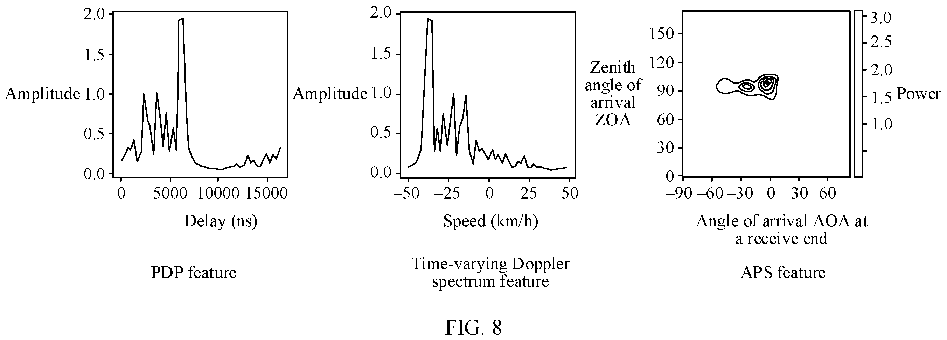

For example, an example in which the data sample included in the first dataset is air interface channel data is used. The air interface channel data may be referred to as channel data for short. For feature information obtained by extracting the foregoing three features from the channel data, refer to FIG. 8. It can be learned from FIG. 8 that the feature information extracted by performing feature extraction on the channel data is of some sparseness. The sparseness means that energy of most channel coefficients is low, and several taps with high energy are distributed far away from each other. Therefore, a sparse feature may be further extracted based on the extracted feature information. For example, the extracted feature information is input into a sparse feature function, and an output of the sparse feature function is a sparse feature sample.

The first feature set in this application may also be referred to as a sparse feature set, and the sparse feature set includes at least one sparse feature sample. Optionally, an input of the sparse feature function may be an output of a feature extraction function for a dataset sample, or may be a dataset sample. This is not limited. In this application, the sparse feature function includes but is not limited to the following several functions. For ease of description, inputs of the following sparse feature functions are collectively represented as an L-dimensional vector $c = [c_1, c_2, \cdots c_L]$.

1. Truncation (truncation) function and its variant

A principle of the truncation function is sorting elements in c in ascending order to obtain $c_{(1)} \leq c_{(2)} \leq \cdots \leq c_{(L)}$, where (1), (2),$\cdots$, (L) represent sequence numbers sorted in ascending order; and finding a maximum $m$, so that $\frac{\sum_{j=1}^{m} c_{(j)}}{\sum_{j=1}^{L} c_{(j)}} < q$, where $q$ represents a preset threshold. Sparseness is defined as:

$$S_t = \frac{m}{L}$$

$S_t \in [1 - q, 1]$.

2. Hoyer (Hoyer) function and its variant

The Hoyer function satisfies the following formula:

$$S_h = \left(\sqrt{L} - \frac{\sum_{j=1}^{L} c_j^L}{\sqrt{\sum_{j=1}^{L} c_j^2}}\right)(\sqrt{L} - 1)^{-1}$$

$S_h \in [0,1]$.

As a variant of the Hoyer function, a HoyerAdj (HoyerAdj) function defines d = $(c_{(L)} - c_{(1)})$/a for data $c_{(1)} \leq c_{(2)} \leq \cdots \leq c_{(L)}$ sorted in ascending order, where a is a hyperparameter defined by a user. If an element in the vector c is greater than d, d is subtracted from the element; or otherwise, the element is set to 0:

$$\tilde{c} = [\tilde{c}_1, \dots, \tilde{c}_L]$$

If $c_i$ > d, $\tilde{c}_i = c_i$ - d; or otherwise, $\tilde{c}_i$ = 0. Sparseness of $\tilde{c}$ may be calculated by using a Hoyer method:

$$S_{hadj} = \left(\sqrt{L} - \frac{\sum_{j=1}^{L} \tilde{c}_j^L}{\sqrt{\sum_{j=1}^{L} \tilde{c}_j^2}}\right)(\sqrt{L} - 1)^{-1}$$

3. Gini (Gini) function and its variant

The Gini function satisfies the following formula:

$$S_g = 1 - 2\sum_{k=1}^{L} \frac{c_{(k)}}{\sum_{j=1}^{L} c_j}\left(\frac{L-k+\frac{1}{2}}{L}\right)$$

For data $c_{(1)} \leq c_{(2)} \leq \cdots \leq c_{(L)}$ arranged in sequence, $S_g \in [0, 1 - \frac{1}{L}]$.

Optionally, in this application, after the PDP feature of the channel data is extracted, sparseness of the PDP feature is further determined, which is referred to as PDP sparseness. For example, a PDP feature $\mathbf{h}_{p,i}$ is used as an input, and a sparse feature sample corresponding to the PDP feature is calculated by using the sparse feature function. For example, a sparse feature sample $S_{hadj}(\mathbf{h}_{p,i})$ is calculated by using the HoyerAdj function, and a PDP sparse feature set $X_1$ = $\left\{S_{hadj}(\mathbf{h}_{p,i})\right\}_{i=1}^{I_1}$. Alternatively, after the Doppler spectrum feature of the channel data is extracted, sparseness of the Doppler spectrum is further determined, which is referred to as Doppler spectrum sparseness. For example, a Doppler spectrum feature $\mathbf{h}_{d,i}$ is used as an input, and a sparse feature sample corresponding to the Doppler spectrum feature is calculated by using the sparse feature function. For example, a sparse feature sample $S_g(\mathbf{h}_{d,i})$ is obtained by using the Gini function, and a Doppler spectrum sparse feature set $X_1 = \left\{S_g(\mathbf{h}_{d,i})\right\}_{i=1}^{I_1}$. Alternatively, after the APS feature of the channel data is extracted, sparseness of the APS feature is further determined, which is referred to as APS sparseness. For example, a space domain angle power spectrum feature $\mathbf{H}_{a,i}$ is used as an input, and a sparse feature sample corresponding to the space domain angle power spectrum feature is calculated by using the sparse feature function. For example, a sparse feature sample $S_h(\mathbf{H}_{a,i})$ is obtained by using the Hoyer function, and an APS sparse feature set $X_1$ = $\left\{S_h(\mathbf{H}_{a,i})\right\}_{i=1}^{I_1}$.

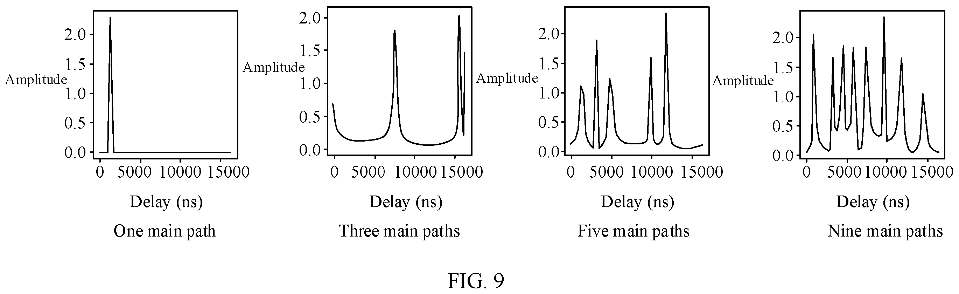

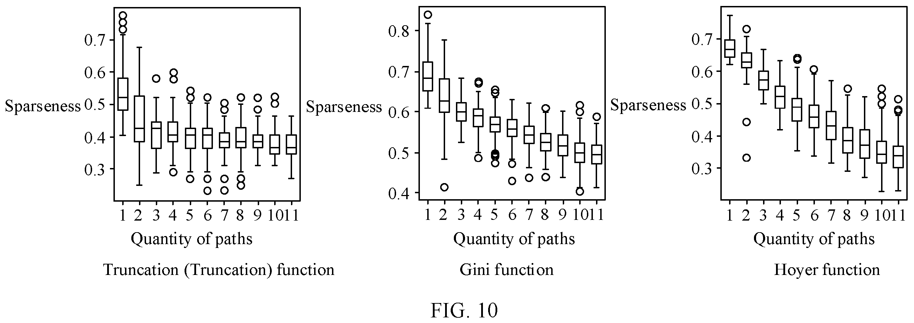

The PDP feature is used as an example. FIG. 9 shows channel power delay profiles of PDP features corresponding to different quantities of main paths for channel transmission. It can be learned that as the quantity of main paths increases, the sparseness of the PDP feature decreases. For example, if there is only one main path for channel transmission, the PDP feature is very sparse and only one peak value can be observed. If there are nine main paths for channel transmission, the sparseness of the PDP feature decreases, and a plurality of peak values can be observed. The main path is a main energy path in multipath propagation of a radio channel. FIG. 10 is a box diagram of PDP sparse features extracted by using different sparse feature functions for channel data in different quantities of main paths for channel transmission. It can be learned that if there are more main paths for channel data, a value range of a PDP sparse feature sample of the channel data is lower.

An example in which the data sample is the measurement parameter signal to interference plus noise ratio SINR data in the 5G communication system is used to describe a process of feature extraction on the first dataset. For example, the first dataset includes a measurement parameter signal to interference plus noise ratio SINR, and $S_1 = \{SINR_i\}_{i=1}^{I_1}$. The feature of the first dataset includes one or more of the average value, the maximum value, the minimum value, the histogram (histogram), the cumulative percentage (cumulative percentage), the data sample, and the like.

For example, an average value feature may be extracted from $S_1$ by using the following function, where an average value feature set $X_1$ regarding the SINR includes one sample:

$$X_1 = \frac{1}{I_1} \sum_{i=1}^{I_1} SINR_i$$

For example, a maximum value feature may be extracted from $S_1$ by using the following function, where a maximum value feature set $X_1$ regarding the SINR includes one sample:

$$X_1 = \max_i SINR_i$$

For example, a minimum value feature may be extracted from $S_1$ by using the following function, where a minimum value feature set $X_1$ regarding the SINR includes one sample:

$$X_1 = \min_i SINR_i$$

For example, a histogram feature may be extracted from $S_1$ by using the following function, where a histogram feature set regarding the SINR $X_1 = \{g_i\}_{i=1}^{I_4}$.

$$g_i = \frac{N_i}{I_1}$$

A parameter of the feature extraction function is a given value range $[u_0, u_{I_4}]$, and $I_4$ sub-segments $[u_0, u_1]$, $[u_1, u_2]$, $[u_2, u_3]$, ..., and $[u_{I_4-1}, u_{I_4}]$ of the range, where the sub-segments may be obtained through even division, or may be non-uniformly distributed. $N_i$ represents a quantity of SINR values of the SINR data in an $i^{th}$ sub-segment $[u_{i-1}, u_i]$. Optionally, for a 1st sub-segment $[u_0, u_1]$, all SINR values less than $u_0$ may or may not be counted into $N_1$ in the 1st sub-segment. Optionally, for an $I_4^{th}$ sub-segment $[u_{I_4-1}, u_{I_4}]$, all SINR values greater than $u_{I_4}$ may or may not be counted into $N_{I_4}$ in the $I_4^{th}$ sub-segment. $g_i$ represents a probability that the SINR is within the $i^{th}$ sub-segment $[u_{i-1}, u_i]$.

For example, a cumulative percentage feature may be extracted from $S_1$ by using the following function. A cumulative percentage feature set $X_1 = \{d_i\}_{i=1}^{I_4}$ regarding the SINR may be obtained based on the histogram feature of $S_1$.

$$d_1 = g_1, \quad d_2 = g_1 + g_2, \quad ..., \quad d_k = \sum_{i=1}^{k} g_i, \quad 1 \leq k \leq I_4$$

For example, for a data sample of the SINR, a dataset sample is directly used as a feature sample, and a self feature set $X_1 = S_1 = \{SINR_i\}_{i=1}^{I_1}$.

It should be noted that step 701 is optional, and may or may not be performed in FIG. 7. For example, another apparatus determines the first feature set of the first dataset, and then the another apparatus sends the first feature set to an execution body in FIG. 7. For another example, the data sample is directly used as the feature sample, so that the first dataset is the first feature set, and step 701 may be omitted. The execution body in FIG. 7 may be a data quality measurement apparatus. The data quality measurement apparatus may be a data management node, a data collection node, a model training node, a model using node, or the like. This is not limited.

Step 702: Perform distance measurement on the first feature set to determine a first distance measurement set. Optionally, the distance measurement means determining a degree of similarity between feature samples included in the first feature set. When a distance measurement value of two feature samples included in the first feature set is large, it indicates that a similarity between the two feature samples is low; or when a distance measurement value of two feature samples included in the first feature set is small, it indicates that a similarity between the two feature samples is high. Optionally, in subsequent descriptions, an example in which distance measurement is performed on two feature samples is used for description. This is not limited. For example, a distance measurement value of another quantity of feature samples in addition to two may be measured. For example, distance measurement is performed on three or four feature samples.

In a design, one or more feature sample combinations may be determined based on the feature sample included in the first feature set, where each feature sample combination includes two feature samples in the first feature set. For example, the first feature set may be represented as X1, and any two feature samples in the first feature set may be used to form a feature sample combination. The feature sample combination may be represented as $(x_{1,i}, x_{1,j})$, where $1 \leq i, j \leq I_1$, $i \neq j$, and $I_1$ represents a total quantity of feature samples included in the first feature set X1. A distance measurement value corresponding to each of the one or more feature sample combinations is determined by using a distance measurement function. For example, the feature sample combination includes a feature sample x and a feature sample y, where $x, y \in \mathbb{R}^D$, D represents dimensions of x and y, and $\mathbb{R}^D$ represents a D-dimensional real number vector. For example, a distance measurement value corresponding to the feature sample combination including the feature sample x and the feature sample y may be determined by using one or a combination of the following distance measurement functions:

an L1 norm distance L1 norm distance: $d_{l1}(\mathbf{x},\mathbf{y}) = \|\mathbf{x} - \mathbf{y}\|_1$, where $\| \|_1$, represents an L1 norm;
a Euclidean distance Euclidean distance:

$$d_{Eu}(\boldsymbol{x}, \boldsymbol{y}) = \|\boldsymbol{x} - \boldsymbol{y}\|_2;$$

a Jeffrey divergence Jeffrey divergence:

$$d_{Jef}(\boldsymbol{x}, \boldsymbol{y}) = \sum_{i=1}^{D} \left( x_i \log \frac{2x_i}{x_i+y_i} + y_i \log \frac{2y_i}{x_i+y_i} \right);$$

a spectral angle mapper distance spectral angle mapper (SAM) distance:

$$d_{sam}(\boldsymbol{x}, \boldsymbol{y}) = cos \left( \frac{x^T y}{\|x\|_2 \|y\|_2} \right)^{-1};$$

a Geman McClure distance Geman McClure (GMC) distance:

$$d_{gmc}(\boldsymbol{x}, \boldsymbol{y}) = \sum_{i=1}^{D} \frac{(x_i-y_i)^2}{1+(x_i-y_i)^2};$$

a spectral correlation distance spectral correlation (Cor) distance:

$$d_{Cor}(\boldsymbol{x}, \boldsymbol{y}) = 1 - \frac{1+R(S_1,S_2)}{2},$$

where

$$R(S_1, S_2) = \frac{\sum_{i=1}^{D}(x_i-\bar{x})(y_i-\bar{y})}{\|x-\bar{x}\|_2 \|y-\bar{y}\|_2}, \quad \bar{x} = \frac{1}{D}\sum_{i=1}^{D} x_i, \text{ and } \bar{y} = \frac{1}{D}\sum_{i=1}^{D} y_i;$$

a Smith distance Smith (Smi) distance:

$$d_{Smi}(\boldsymbol{x}, \boldsymbol{y}) = 1 - \frac{\sum_{i=1}^{D} min(x_i,y_i)}{min(\sum_{i=1}^{D} x_i, \sum_{i=1}^{D} y_i)};$$

a Pearson chi-square distance Pearson $X^2$ (Pea) distance:

$$d_{Pea}(\boldsymbol{x}, \boldsymbol{y}) = \sum_{i=1}^{D} \frac{(x_i-m_i)^2}{m_i},$$

where

$$m_i = (x_i + y_i)/2;$$

a squared chord distance squared chord (Sqc) distance:

$$d_{Sqc}(\boldsymbol{x}, \boldsymbol{y}) = \sum_{i=1}^{D}(\sqrt{x_i} - \sqrt{y_i})^2;$$

a Euclidean distance of cumulative spectrum Euclidean distance of cumulative spectrum (ECS):

$$d_{Ecs}(\boldsymbol{x}, \boldsymbol{y}) = \|\boldsymbol{c_x} - \boldsymbol{c_y}\|_2,$$

where

$\boldsymbol{c_x}, \boldsymbol{c_y} \in \mathbb{R}_+^D$ is a cumulative sum of $x$ and y, that is, $c_{x,i} = \sum_{k=1}^{i} x_k$, $c_{y,i} = \sum_{k=1}^{i} y_k$, and $i = 1, \dots, D$; and

an earth mover's distance (Earth Mover's distance, EMD):

$$d_{EMD}(\boldsymbol{x}, \boldsymbol{y}) = min_{T \in U}\operatorname{Tr}(\boldsymbol{P}^T\boldsymbol{T}),$$

where $U = \{\boldsymbol{T} \in \mathbb{R}^{D \times D} \mid \sum_{i=1}^{D} \boldsymbol{T}_{ij} = \boldsymbol{y}_j, \sum_{j=1}^{D} \boldsymbol{T}_{ij} = \boldsymbol{x}_i, \boldsymbol{T}_{ij} \geq 0\}$, $\boldsymbol{P} \in \mathbb{R}^{D \times D}$, $\boldsymbol{P}_{ij} = |i - j|$, and Tr() represents a trace of a matrix.

It should be noted that the foregoing distance measurement functions are merely examples for description, and are not intended to limit this application. For example, in this application, the distance measurement value corresponding to the feature sample combination may be determined by using the distance measurement function, the distance measurement value corresponding to the feature sample combination may be determined by using a variant function of the distance measurement function, or the distance measurement value corresponding to the feature sample combination may be determined by using another adaptive function. This is not limited.

After the distance measurement value corresponding to each of the one or more feature sample combinations is determined, the first distance measurement set may be determined based on the distance measurement value corresponding to each of the one or more feature sample combinations. Optionally, the first distance measurement set may be referred to as an intra-set sample distance measurement set. The first distance measurement set may include at least one distance measurement value. For example, the first distance measurement set may include distance measurement values corresponding to all feature sample combinations, that is, the distance measurement values corresponding to all the feature sample combinations form the first distance measurement set. Alternatively, the first distance measurement set may include distance measurement values corresponding to some feature sample combinations, and the like. For example, distance measurement values corresponding to some feature sample combinations form the first distance measurement set, and the like. This is not limited. Optionally, the first distance measurement set may be represented as $D_{11} = d(X_{1,i}, X_{1,j})$.

Step 703: Perform diversity measurement on the first distance measurement set to determine a diversity measurement result of the first dataset, where the diversity measurement is used to determine a degree of diversity of the first dataset in statistical distribution.

In a design, diversity measurement is performed on the first distance measurement set by using a diversity measurement function, to determine the diversity measurement result of the first dataset. Optionally, for the diversity measurement result, a larger value of the diversity measurement result indicates higher diversity of the dataset; and in contrast, a smaller value of the diversity measurement result indicates lower diversity of the dataset.

Optionally, the diversity measurement result of the first dataset may be a diversity measurement result of a single feature of the first dataset, for example, a diversity measurement result of a single feature such as the PDP, the Doppler spectrum, or the APS of the first dataset. For example, a first distance measurement set D11 may be input into a diversity measurement function $f_{div}()$, and an output is a diversity measurement result of a single feature of the first dataset S1, that is, a diversity measurement result $M_{sdiv}(S_1) = f_{div}(D_{11})$ of the first dataset S1.

For example, when the feature sample included in the first feature set is directly extracted feature information, for example, the PDP feature, the time-varying Doppler spectrum feature, or the APS feature, the diversity measurement function $f_{div}()$ may be:

an average function average, for example:

$$D_a = \frac{1}{I_1^2} \sum_{i,j}^{I_1} d\,(\boldsymbol{x}_i, \boldsymbol{x}_j),$$

where $I_1$ represents a quantity of feature samples in the first feature set.

Alternatively, when the feature sample included in the first feature set is a sparse feature, that is, when the feature sample included in the first feature set is a sparse feature sample, the diversity measurement function $f_{div}(\,)$ may be any one of the following functions, variants of a plurality of functions, or the like. This is not limited.

1. A Shannon entropy (Shannon entropy) function: The Shannon entropy function may satisfy the following formula:

$$D_s = -\sum_{i=1}^{Q} p_i\, log\, p_i\, /\, log\, Q$$

$p_i$ represents a sample probability in an $i^{th}$ sub-segment range, and $Q$ represents a quantity of sub-segment ranges. Optionally, $Q$ may be adjusted based on an application. The sub-segment ranges may be uniformly or non-uniformly distributed within a given range $[w_0, w_Q]$. The $Q$ sub-segment ranges are $[w_0,w_1]$, $[w_1,w_2]$, $[w_2,w_3]$, ..., and $[w_{Q-1},w_Q]$. Optionally, for a $1^{st}$ sub-segment $[w_0,w_1]$, all samples less than $w_0$ may or may not be counted into $p_1$ in the $1^{st}$ sub-segment. Optionally, for a $Q^{th}$ sub-segment $[w_{Q-1},w_Q]$, all samples greater than $w_Q$ may or may not be counted into $p_Q$ in the $Q^{th}$ sub-segment.

2. An average function average: It is defined as above.

It should be noted that in this application, the diversity measurement function $f_{div}(\,)$ may be the foregoing function, a variant of the foregoing function, another adaptive function, or the like. This is not limited.

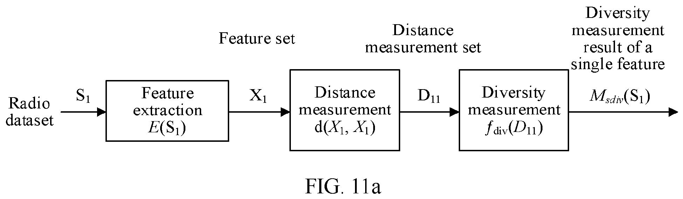

Diversity measurement provided in this application may be used to determine diversity of the single feature of the first dataset. For example, as shown in FIG. 11a, a process of determining the diversity measurement result of the single feature of the first dataset S1 includes the following.

1. The first dataset S1 includes $I_1$ data samples $S_1 = \left\{ s_{1,i} \right\}_{i=1}^{I_1}$. For each data sample $s_{1,i}$, a corresponding feature sample is obtained by using a feature extraction function $E(s_{1,i})$. Feature samples corresponding to all data samples form the first feature set $X_1 = E(S_1)$ corresponding to the first dataset S1. Optionally, the feature extraction function may be a single function or a combination of a plurality of functions. This is not limited.

2. For the first feature set $X_1$, pairwise combinations $(x_{1,i},x_{1,j})$ of all the feature samples in the first feature set are obtained, where $1 \le i, j \le I_1$, and $i \ne j$. A sample distance measurement $d(x_{1,i},x_{1,j})$ of each pairwise combination is calculated by using the distance measurement function. Sample distance measurements corresponding to all pairwise combinations form the distance measurement set $D_{11} = d(X_1,X_1)$ corresponding to the first feature set. Optionally, the distance measurement function may be a single function or a combination of a plurality of functions. This is not limited.

3. After the distance measurement set $D_{11}$ is obtained, the diversity measurement result $M_{sdiv}(S_1)$ of the single feature of the first dataset $S_1$ is obtained through calculation by using a diversity measurement function $f_{div}(\,)$. $M_{sdiv}(S_1) = f_{div}(D11)$. Optionally, the diversity measurement function may be a single function or a combination of a plurality of functions. This is not limited.

Optionally, after the diversity measurement result of the single feature of the first dataset S1 is determined, if the diversity measurement result of the single feature of the first dataset S1 is greater than or equal to a diversity threshold, or is within a diversity threshold range $[\varepsilon_1, \varepsilon_2]$, the single feature of the first dataset S1 meets a diversity requirement. Optionally, diversity thresholds for different features may be the same or different. Diversity threshold ranges for different features may be the same or different. This is not limited.

A diversity measurement method provided in this application may be used to determine diversity of a plurality of features of the first dataset. For example, a diversity measurement result of each of the plurality of features of the first dataset may be determined. A measurement result is determined based on the diversity measurement result of each of the plurality of features of the first dataset. When the measurement result is greater than or equal to the diversity threshold, or is within the diversity threshold range, it may be considered that the plurality of features of the first dataset meet the diversity requirement. For example, a diversity measurement result of the PDP feature, a diversity measurement result of the time-varying Doppler spectrum feature, and a diversity measurement result of the APS feature that correspond to the first dataset may be separately determined according to the foregoing method; and a diversity measurement result of the three features corresponding to the first dataset, such as the PDP feature, the time-varying Doppler spectrum feature, and the APS feature, is determined based on the diversity measurement results respectively corresponding to the three single features. For example, weighted merging may be performed on the diversity measurement results of the three features, where a manner of weighted merging includes but is not limited to a linear merging manner. The linear merging manner is used as an example. A process of performing linear merging on diversity measurement results of the plurality of features satisfies the following formula:

$$M_{mdiv}(S_1) = \sum_{k=1}^{K} w_k * M_{sdiv,k}(S_1)$$

Optionally, a method for generating a weighting coefficient $w_k$ includes but is not limited to: an equal weighting method: $w_k = 1/K$; or an importance screening regression method: selecting a diversity measurement result of a single feature of high importance by using an importance screening method, and then calculating a corresponding merging weight by using a regression algorithm. For example, the importance screening method includes but is not limited to a best subset selection method (best subset selection), a model selection method based on an Akaike information criterion (Akaike information criterion, AIC)/Bayesian information criterion (Bayesian information criterion, BIC), a stepwise regression method (stepwise regression), a least angle regression (least angle regression, LAR) method, and a least absolute shrinkage and selection operator (least absolute shrinkage and selection operator, LASSO) method. For example, the regression method includes but is not limited to linear regression, ridge regression (ridge regression), a generalized linear model regression method (generalized linear model), LASSO, a partial least square regression method (penalized least-squares), and the like.

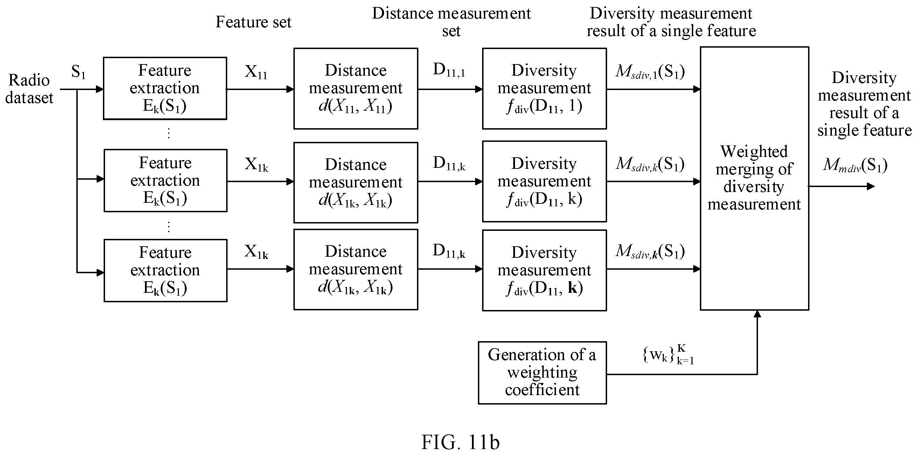

In an implementation, as shown in FIG. 11b, a process of determining the diversity measurement results of the plurality of features of the first dataset S1 includes the following.

1. For the first dataset S1, K features are separately extracted. For a process of extracting the K features, refer to the descriptions of FIG. 11a. K is a positive integer greater than 1.

2. For a separately extracted feature k, a feature set $\{X_{1k}\}_{k=1}^{K}$ is determined, where k is a positive integer greater than or equal to 1 and less than or equal to K. A corresponding sample distance measurement set $D_{11,k}$ is calculated for each feature set $X_{1k}$.

3. For the distance measurement set $\{D_{11,k}\}_{k=1}^{K}$, a diversity measurement result $M_{sdiv,k}(S_1)$ of a corresponding single feature is calculated for each $D_{11,k}$.

4. A weighting coefficient generation module provides a merging weight for the plurality of features, to merge diversity measurement results of a plurality of single features to obtain a diversity measurement result $M_{mdiv}(S_1)$ of the plurality of features.

Alternatively, after a diversity measurement result of each of a plurality of features of the first dataset is determined, a proportion of features that meet a diversity requirement in the plurality of features may be determined in the plurality of features of the first dataset. When the proportion of the features that meet the diversity requirement in the plurality of features is greater than or equal to a first threshold, the plurality of features of the first dataset meet the diversity requirement. The first threshold may be referred to as a diversity proportion threshold $\gamma$. When the proportion of the features that meet the diversity requirement in the plurality of features is not greater than or not equal to a first threshold, it is considered that the plurality of features of the first dataset do not meet the diversity requirement. For example, the foregoing example is still used, and a diversity measurement result of the PDP feature, a diversity measurement result of the time-varying Doppler spectrum feature, and a diversity measurement result of the APS feature may be separately determined by using the foregoing method. The diversity measurement result of the PDP feature and the diversity measurement result of the time-varying Doppler spectrum feature are greater than or equal to a diversity threshold, or are within a diversity threshold range, and meet the diversity requirement, but diversity of the APS does not meet the diversity requirement. In this case, it may be determined that two of the three features of the first dataset such as the PDP feature, the time-varying Doppler spectrum feature, and the APS feature meet the diversity requirement, and a proportion of features that meet the diversity requirement in the three features is 2/3 (about 67%). If the proportion 67% is greater than or equal to the diversity proportion threshold $\gamma$, it is considered that the three features of the first dataset meet the diversity requirement; or if the proportion 67% is less than the diversity proportion threshold $\gamma$, it is considered that the three features of the first dataset do not meet the diversity requirement.

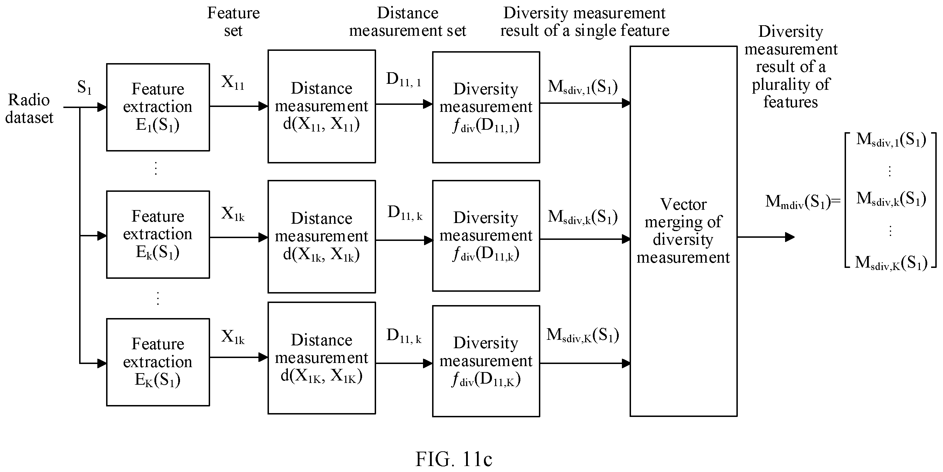

In an implementation, as shown in FIG. 11c, a process of determining a diversity measurement results of a plurality of features of the first dataset S1 includes the following.

1. For the first dataset S1, K features are separately extracted. For a process of extracting the K features, refer to the descriptions of FIG. 11a. K is a positive integer greater than 1.

2. For a separately extracted feature k, a feature set $\{X_{1k}\}_{k=1}^{K}$ is determined, where k is a positive integer greater than or equal to 1 and less than or equal to K. A corresponding distance measurement set $D_{11,k}$ is calculated for each feature set $X_{1k}$.

3. For the distance measurement set $\{D_{11,k}\}_{k=1}^{K}$, a diversity measurement result $M_{sdiv,k}(S_1)$ of a corresponding single feature is calculated for each $D_{11,k}$.

4. Vector merging is performed on diversity measurement results of a plurality of single features to obtain a diversity measurement result $M_{msdiv}(S_1)$ of the plurality of features.

For example, the diversity measurement result of the plurality of features of the first dataset S1 may also be jointly represented by using a vector. For example, a diversity measurement result of three features corresponding to the first dataset, such as the PDP feature, the time-varying Doppler spectrum feature, and the APS feature, may be represented as a three-dimensional diversity measurement vector. A diversity measurement result of the K features may be represented as a K-dimensional vector:

$$M_{mdiv}(S_1) = \begin{bmatrix} M_{sdiv,1}(S_1) \\ \vdots \\ M_{sdiv,k}(S_1) \\ \vdots \\ M_{sdiv,K}(S_1) \end{bmatrix}_{K \times 1}$$

When the diversity measurement result of the plurality of features of the first dataset is represented as the K-dimensional vector $M_{mdiv}(S_1)$, the K-dimensional vector may be compared with a K-dimensional threshold vector $E_s$ or a K-dimensional threshold range vector $E_r$, where a $k^{th}$ diversity measurement of the vector is compared with a $k^{th}$ threshold or threshold range of the vector. If the diversity measurement is greater than or equal to the threshold or is within the threshold range, a $k^{th}$ comparison result is represented as 1; or if the diversity measurement is not greater than or not equal to the threshold or is not within the threshold range, an $i^{th}$ comparison result is represented as 0. In this way, a K-dimensional comparison result vector $R_s$ is obtained. For example, statistics on a quantity of values 1 in K comparison results in $R_s$ is collected. If the quantity is greater than or equal to the diversity proportion threshold $\gamma$, the diversity measurement result of the plurality of features meets the diversity requirement.

$$M_{mdiv}(S_1) = \begin{bmatrix} M_{sdiv,1}(S_1) \\ \vdots \\ M_{sdiv,k}(S_1) \\ \vdots \\ M_{sdiv,K}(S_1) \end{bmatrix}_{K \times 1}$$

$$E_s = \begin{bmatrix} \varepsilon_1 \\ \vdots \\ \varepsilon_k \\ \vdots \\ \varepsilon_K \end{bmatrix}_{K \times 1} , \quad E_r = \begin{bmatrix} [\varepsilon_{11}, \varepsilon_{12}] \\ \vdots \\ [\varepsilon_{k1}, \varepsilon_{k2}] \\ \vdots \\ [\varepsilon_{K1}, \varepsilon_{K2}] \end{bmatrix}_{K \times 1}$$

$$R_s = \begin{bmatrix} 1 \\ \vdots \\ 0 \\ \vdots \\ 1 \end{bmatrix}_{K \times 1}$$

Optionally, the one or more thresholds used to determine the diversity measurement result, for example, the diversity threshold, the diversity threshold range, and the diversity proportion threshold, may be preset, specified in a protocol, or determined based on an application scenario of the first dataset. Corresponding thresholds may have different values in different application scenarios. This is not limited.

In a design, in the diversity measurement method, optimal selections of the feature extraction function, the distance measurement function, and the diversity measurement function may also be different for different data features. As shown in Table 1, combinations of the feature extraction function, the distance measurement function, and the diversity measurement function for different data features are described with examples.

Table 1: Recommended diversity measurement (Recommended measures for diversity)

| Feature (feature) | Extraction function | Distance measurement function | Diversity measurement function |
|---|---|---|---|
| Doppler | Feature extraction function for a Doppler spectrum | ECS/EMD | Average |
| PDP | Feature extraction function for a delay domain power spectrum | | |
| APS | Feature extraction function for an angle power spectrum | Jeffrey | |
| Doppler sparseness | HoyerAdj | $\times$ | Shannon entropy |
| PDP sparseness | | | |
| APS sparseness | | | |

This application provides a method for screening high-quality data by using a diversity measurement criterion. In the method, a data quality measurement apparatus may obtain configuration information, where the configuration information is used to configure diversity measurement. The data quality measurement apparatus may determine a diversity measurement result of a first dataset based on the configuration information. Optionally, that a data quality measurement apparatus obtains configuration information may be specifically: The data quality measurement apparatus receives the configuration information from a data management node, the configuration information is preconfigured in the data quality measurement apparatus, or the configuration information is specified in a protocol. This is not limited.

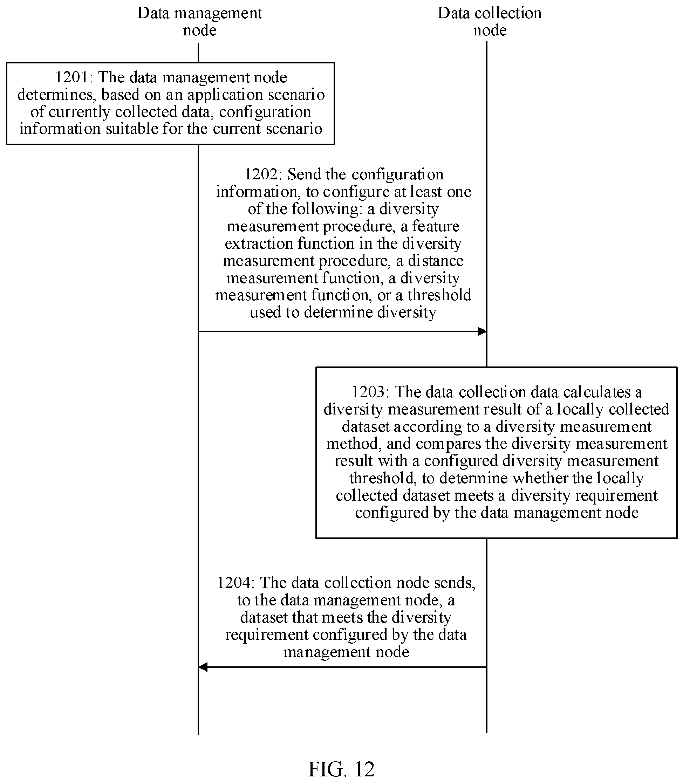

The data quality measurement apparatus may be a data collection node or another node other than the data collection node. An example in which the data quality measurement apparatus is the data collection node is used. As shown in FIG. 12, a procedure of screening high-quality data by using a diversity measurement criterion is provided. In the procedure, the data collection node determines, based on diversity measurement, whether a collected dataset meets a diversity measurement requirement. The procedure includes at least the following steps.

Step 1201: The data management node determines, based on an application scenario of currently collected data, configuration information suitable for the current scenario, where the configuration information is used to configure diversity measurement.

Optionally, the configuration information is used to configure one or more of the following: a diversity measurement procedure, a feature extraction function in the diversity measurement procedure, a distance measurement function, a diversity measurement function, one or more thresholds used to determine a diversity measurement result, or the like. The one or more thresholds used to determine the diversity measurement result include but are not limited to the foregoing diversity threshold, diversity threshold range, diversity proportion threshold, or the like. Different application scenarios may correspond to different configuration information. For example, in a 5G NR system for wireless communication, diversity of a power delay profile PDP of an uplink channel in multi-antenna MIMO on a base station side needs to be measured. In this case, the feature extraction function configured by the data management node is a PDP feature extraction function, the distance measurement function is an EMD, and the diversity measurement function is an average. Alternatively, if diversity of a signal to interference plus noise ratio of a downlink channel needs to be measured, the feature extraction function configured by the data management node is a self feature set regarding the SINR, the distance measurement function is an ECS, the diversity measurement function is an average, and the like. The configuring a feature extraction function, a distance measurement function, a diversity measurement function, and the like may include the following one or two meanings: configuring a type of the corresponding function, for example, configuring a feature extraction function of a type corresponding to the current scenario; and configuring a value of each parameter in the function, for example, configuring a value corresponding to each parameter in the foregoing plurality of functions. Different thresholds may be used in different scenarios to determine the diversity measurement result. This is not limited.

Step 1202: The data management node sends the configuration information to one or more data collection nodes.

For example, the data management node may predefine a plurality of configurations. The data management node may determine, based on an application scenario of current data, a configuration corresponding to the application scenario, and send an index of the determined configuration to the data collection node. Optionally, the data management node and the data collection node may be different function modules in a same network element, or may be different network elements. This is not limited. For example, the data management node is a core network device, and the data collection node is a terminal device or an access network device. For another example, the data management node is an access network device, and the data collection node is a terminal device. For another example, the data management node is a control unit of an access network device, and the data collection node is a data unit of the access network device. For another example, the data management node is a network element device of a cell in an access network, and the data collection node is a network element device of another cell in the access network. For another example, the data management node is a terminal device, and the data collection node is another terminal device. For another example, the data management node is a terminal device, and the data collection node is an access network device.

Step 1203: The data collection node determines, based on the configured diversity measurement, to calculate a diversity measurement result of a locally collected dataset, and compares the diversity measurement result with a configured threshold, to determine whether the locally collected dataset meets a diversity requirement configured by the data management node. For a process of comparing the diversity measurement result with the configured threshold, refer to the foregoing descriptions. Details are not described herein again. Optionally, if the data collection node locally collects a plurality of datasets, the foregoing judgment may be performed on each dataset.

Step 1204: The data collection node sends, to the data management node, a dataset that meets the diversity requirement configured by the data management node.

Optionally, the data collection node may further send, to the data management node, a diversity measurement result corresponding to the dataset that meets the diversity requirement. Optionally, the data collection node may also send, to the data management node or the like, diversity measurement results corresponding to one or more datasets that do not meet the diversity requirement. This is not limited.

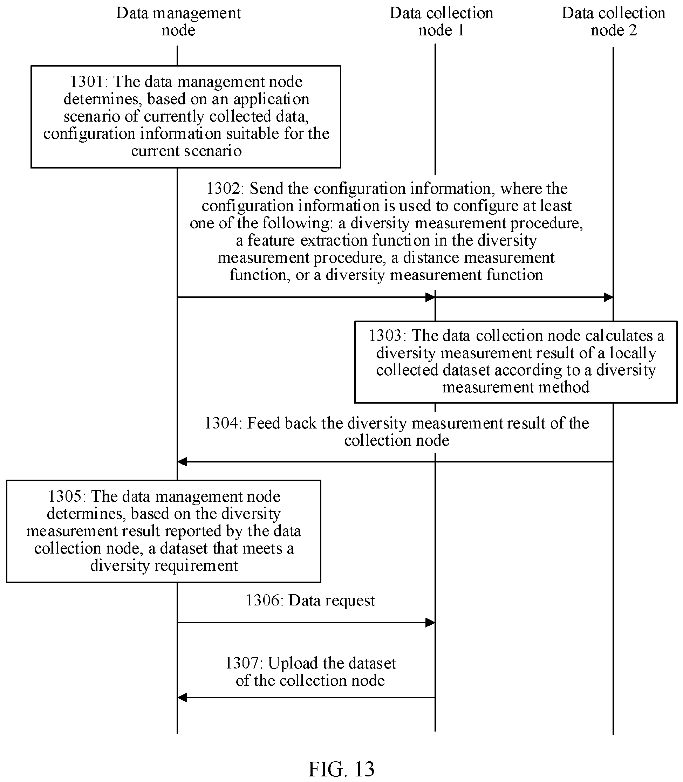

As shown in FIG. 13, a procedure of screening high-quality data by using a diversity measurement criterion is further provided. A difference between the procedure shown in FIG. 13 and the procedure shown in FIG. 12 mainly lies in that: The data collection node reports, to the data management node, a diversity measurement result of a dataset collected by the data collection node, and the data management node determines whether the dataset collected by the data collection node meets a diversity requirement. The procedure includes at least the following steps.

Step 1301: The data management node determines configuration information based on an application scenario of currently collected data.

Step 1302: The data management node sends the configuration information to one or more data collection nodes.

The configuration information sent by the data management node to the data collection node may be used to configure one or more of the following: a diversity measurement procedure, a feature extraction function in the diversity measurement procedure, a distance measurement function, or a diversity measurement function. For descriptions of step 1301 and step 1302, refer to step 1201 and step 1202 in FIG. 12. A difference from the foregoing step 1202 lies in that in the procedure in FIG. 13, the data collection node reports the diversity measurement result of the collected dataset to the data management node, and the data management node determines whether the diversity measurement result meets the diversity requirement. Therefore, the configuration information sent by the data management node to the data collection node in step 1302 may no longer include one or more thresholds used to determine the diversity measurement result.

Step 1303: The data collection node determines a diversity measurement result of a locally collected dataset based on configured diversity measurement. Optionally, if the data collection node locally collects a plurality of datasets, the data collection node may perform the foregoing judgment on each dataset.

Step 1304: Each data collection node sends a diversity measurement result of a locally collected dataset to the data management node.

Step 1305: The data management node determines, based on the diversity measurement result reported by the data collection node, a dataset that meets the diversity measurement requirement.

Step 1306: The data management node notifies the data collection node to upload the dataset that meets the diversity requirement, for example, sends, to the data collection node, an index of the dataset that meets the diversity requirement. In an implementation, the data management node may send a data request to the data collection node, where the data request is used to notify the data collection node to upload, to the data management node, the dataset that meets the diversity requirement.

Step 1307: The data collection node sends, to the data management node according to a notification of the data management node, the dataset that meets the diversity requirement.

For example, the data collection node includes a data collection node 1 and a data collection node 2. If data collected by the data collection node 2 does not meet the diversity requirement, and data collected by the data collection node 1 meets the diversity requirement, the data management node may notify the data collection node 1 to upload a dataset that meets the requirement.

In this application, screening is performed to retain and use data whose diversity measurement meets the requirement and remove data with a poor diversity measurement, which helps improve diversity of a dataset managed by the data management node, avoid transmission of the data with the poor diversity measurement between nodes, and reduce transmission overheads.

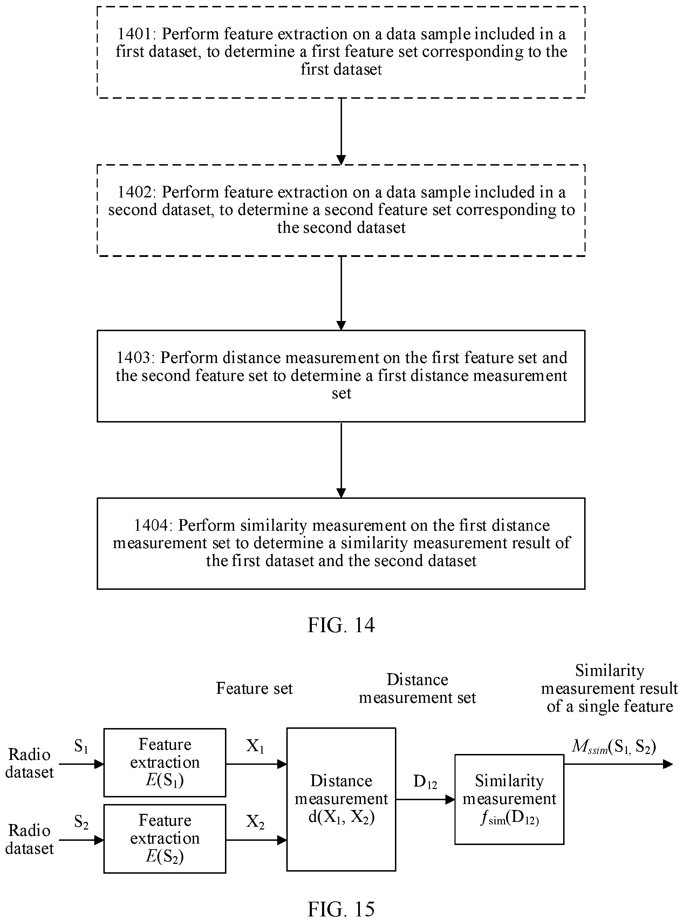

As shown in FIG. 14, this application provides a data quality measurement method. The method is mainly a similarity measurement criterion, and the similarity measurement criterion is mainly used to measure a degree of similarity in statistical distribution between two datasets, which can be correspondingly extended to a similarity between two datasets when there are a plurality of datasets. For example, if there is a dataset S1, a dataset S2, and a dataset S3, a similarity measurement result of the dataset S1 and the dataset S2, a similarity measurement result of the dataset S1 and the dataset S3, or a similarity measurement result of the dataset S2 and the dataset S3 may be determined. In a procedure shown in FIG. 14, an example of determining a similarity measurement result of a first dataset and a second dataset is used for description. Similarity measurement may be for a single feature or for a plurality of features. The procedure shown in FIG. 14 includes at least the following steps.

Step 1401: Perform feature extraction on a data sample included in the first dataset, to determine a first feature set corresponding to the first dataset.

In a design, feature extraction is performed, by using a feature extraction function, on the data sample included in the first dataset, to obtain a feature sample corresponding to each data sample, and the first feature set corresponding to the first dataset is determined based on the feature sample corresponding to the data sample included in the first dataset. Optionally, for descriptions of the feature extraction function and the first feature set, refer to the related descriptions of step 701 in FIG. 7.

Step 1402: Perform feature extraction on a data sample included in the second dataset, to determine a second feature set corresponding to the second dataset.

In a design, feature extraction is performed, by using the feature extraction function, on the data sample included in the second dataset, to obtain a feature sample corresponding to each data sample. The second feature set corresponding to the second dataset is determined based on the feature sample corresponding to the data sample included in the second dataset. Optionally, the second feature set may include feature samples corresponding to all data samples in the second dataset, or include feature samples corresponding to some data samples in the second dataset, similar to a composition of the first feature set. Details are not described again.

The foregoing steps 1401 and 1402 are optional, and may be performed by an execution body in FIG. 14. Alternatively, another execution body determines the first feature set and the second feature set, and then sends the first feature set and the second feature set to an execution body in FIG. 14, and the execution body in FIG. 14 performs subsequent step 1403 and step 1404 based on the first feature set and the second feature set. Optionally, the execution body in FIG. 14 may be a data quality measurement apparatus. The data quality measurement apparatus may be a data management node, a data collection node, a model training node, a model using node, another node, or the like. This is not limited. Optionally, a feature extracted from the first dataset or a feature extracted from the second dataset is based on the feature extraction function. The feature extracted from the first dataset or the second dataset includes one or more of the following: a PDP, a time-varying Doppler spectrum, an APS, an average value, a maximum value, a minimum value, a histogram, a cumulative percentage, the data sample, or the like. For the data samples included in the first dataset and the second dataset, refer to the descriptions of FIG. 7.

Step 1403: Perform distance measurement on the first feature set and the second feature set to determine a first distance measurement set.

Optionally, because the distance measurement measures two different feature sets (the first feature set and the second feature set), the distance measurement may be referred to as inter-set sample distance measurement, and the first distance measurement set may be referred to as an inter-set sample distance measurement set. In a design, one or more feature sample combinations may be determined based on the first feature set and the second feature set, where one feature sample in the feature sample combination belongs to the first feature set, while the other feature sample belongs to the second feature set. A distance measurement value corresponding to each of the one or more feature sample combinations is determined by using a distance measurement function. For the distance measurement function, refer to the descriptions of FIG. 7. The first distance measurement set is determined based on the distance measurement value corresponding to each of the one or more feature sample combinations. Optionally, the first distance measurement set may include distance measurement values corresponding to all feature sample combinations, or include distance measurement values corresponding to some feature sample combinations, or the like. This is not limited.

Step 1404: Perform similarity measurement on the first distance measurement set to determine the similarity measurement result of the first dataset and the second dataset, where the similarity measurement is used to determine a degree of similarity in statistical distribution between different datasets (for example, the first dataset and the second dataset).

For example, similarity measurement may be performed on the first distance measurement set by using a similarity measurement function, to determine the similarity measurement result of the first dataset and the second dataset. For example, the first distance measurement set may be input into the similarity measurement function, and an output is the similarity measurement result of the first dataset and the second dataset.

In a design, the similarity measurement result of the first dataset and the second dataset may be specifically a similarity measurement result of a single feature of the first dataset and the second dataset. As shown in FIG. 15, an example of measuring the similarity measurement result of the single feature of the first dataset and the second dataset is provided, including at least the following.

1. The first dataset is represented as a dataset $S_1$, and the second dataset is represented as a dataset $S_2$. The dataset $S_1$ includes $I_1$ data samples $S_1 = \left\{ s_{1,i} \right\}_{i=1}^{I_1}$, and the dataset $S_2$ includes $I_2$ data samples $S_2 = \left\{ s_{2,i} \right\}_{i=1}^{I_2}$. For each data sample in the two datasets, a corresponding feature sample is obtained by using a feature extraction function $E()$. Feature samples $\{x_{1,i}\}$ of the dataset $S_1$ form a feature set $X_1 = E(S_1)$ of the dataset S1. Feature samples $\{x_{2,j}\}$ of the dataset $S_2$ form a feature set $X_2 = E(S_2)$ of the dataset S2. Optionally, the feature extraction function may be a single function or a combination of a plurality of functions.

2. For the feature sets $X_1$ and $X_2$, pairwise combinations $(x_{1,i}, x_{2,j})$ of all the feature samples in the feature sets are obtained, where $1 \leq i \leq I_1$, and $1 \leq j \leq I_2$. A distance measurement $d(x_{1,i}, x_{2,j})$ of each pairwise combination is calculated by using a distance measurement function. Distance measurements of all the pairwise combinations form a distance measurement set $D_{12} = d(X_1, X_2)$ of the feature sets $X_1$ and $X_2$. Optionally, the distance measurement function may be a single function or a combination of a plurality of functions.

3. After the distance measurement set $D_{12}$ is obtained, a similarity measurement result $M_{ssim}(S_1, S_2)$ of the single feature of the datasets $S_1$ and $S_2$ is obtained through calculation by using a similarity measurement function $f_{sim}()$. For example, $M_{ssim}(S_1, S_2) = f_{sim}(D_{12})$. Optionally, the similarity measurement function may be a single function or a combination of a plurality of functions.

A process of similarity measurement for the single feature of the first dataset S1 and the second dataset S2 is described by using air interface channel data in 5G wireless communication as an example.

1. Feature extraction

The data samples included in the first dataset S1 and the second dataset S2 may be air interface channel data. Features are separately extracted from the first dataset S1 and the second dataset S2 by using a feature extraction function, to determine a feature set X1 and a feature set X2. The feature extracted from the first dataset S1 and the second dataset S2 includes but is not limited to a PDP feature, a Doppler spectrum feature, an APS feature, a sparse feature of the foregoing feature, or the like.

2. Distance measurement

For the feature set X1 and the feature set X2, pairwise combinations $(x_{1,i}, x_{2,j})$ of all feature samples in the feature set X1 and the feature set X2 are obtained, where $1 \leq i \leq I_1$, and $1 \leq j \leq I_2$. A distance measurement set $D_{12} = d(X_1, X_2)$ corresponding to the feature set X1 and the feature set X2 is calculated by using a distance measurement function. For the distance measurement function, refer to the descriptions of FIG. 7.

3. Calculate a similarity measurement result of the single feature.

After the distance measurement set $D_{12}$ is obtained, a similarity measurement result $M_{ssim}(S_1, S_2)$ of the single feature of the datasets $S_1$ and $S_2$ is obtained through calculation by using a similarity measurement function $f_{sim}()$. For example, $M_{ssim}(S_1, S_2) = f_{sim}(D_{12})$. Optionally, the similarity measurement function $f_{sim}()$ may be defined as follows.

Given two datasets $\mathcal{X} = \{x_i\}_{i=1}^{n_x}$ and $\mathcal{Y} = \{y_i\}_{i=1}^{n_y}$, it is assumed that samples in the datasets are samples extracted from random variables $X$ and $Y$ independently.

The similarity measurement function $f_{sim}()$ used in this application includes but is not limited to the following functions:

- a moment distance (moment distance, MD): The proposed moment distance defines a distance between datasets as a Euclidean distance between their mean vectors and covariance matrices, where in this application, a distance between more general statistical features, such as skewness and kurtosis, may be considered; and in particular, when a first-order moment is considered, any distance function $d(\cdot,\cdot)$ is given, which may be defined as:

$$MD(\mathcal{X},\mathcal{Y}) = d(\textstyle\sum_{i=1}^{n_x} \boldsymbol{x}_i, \sum_{i=1}^{n_y} \boldsymbol{y}_i);$$

- a minimum distance minimum distance:

$$min_{i,j}d(\boldsymbol{x}_i, \boldsymbol{y}_j);$$

- a maximum distance maximum distance:

$$max_{i,j}d(\boldsymbol{x}_i, \boldsymbol{y}_j);$$

- a median distance median distance:

$$med_{i,j}d(\boldsymbol{x}_i, \boldsymbol{y}_j);$$

- a mean distance mean distance:

$$\frac{1}{n_x n_y}\sum_{i=1}^{n_x}\sum_{j=1}^{n_y} d\ (\boldsymbol{x}_i, \boldsymbol{y}_j);$$

- a Hausdorff distance Hausdorff distance:

$$max\left\{\max_i \ \min_j \ d(\boldsymbol{x}_i, \boldsymbol{y}_j), \max_j \ \min_i \ d(\boldsymbol{x}_i, \boldsymbol{y}_j)\right\};$$

- a maximum mean discrepancy (maximum mean discrepancy, MMD):

$$MMD(\mathcal{X},\mathcal{Y}) = \sqrt{\frac{1}{n_x^2}\sum_{i,j=1}^{n_x} k\ (\boldsymbol{x}_i, \boldsymbol{x}_j) - \frac{2}{n_x n_y}\sum_{i,j=1}^{n_x,n_y} k\ (\boldsymbol{x}_i, \boldsymbol{y}_j) + \frac{1}{n_y^2}\sum_{i,j=1}^{n_y} k\ (\boldsymbol{y}_i, \boldsymbol{y}_j)},$$

where $k(\boldsymbol{x},\boldsymbol{y}) = exp(-\frac{d(x,y)^2}{2\sigma^2})$ may be selected;
- leave-one-out accuracy of nearest neighbor classifier (leave-one-out accuracy of nearest neighbor classifier, NNCA):

$$NNCA(\mathcal{X},\mathcal{Y}) = \frac{TP+TN}{n_x+n_y},$$

where
TP is a quantity of positive samples that are correctly classified in a leave-one-out test of a nearest neighbor classifier, TN is a quantity of negative samples that are correctly classified in the leave-one-out test of the nearest neighbor classifier, the dataset $X$ corresponds to a positive sample dataset, and the dataset $Y$ corresponds to a negative sample dataset; and
- an optimal transmission distance optimal transportation measurement, also referred to as a Wasserstein distance ($W_p$), defined as follows:

$$W_p(\mathcal{X},\mathcal{Y}) = (\ min_{T\in U}\ Tr(\boldsymbol{D}_p^T \boldsymbol{T}))^{1/p},$$

where $\boldsymbol{D}_p$ represents that an element in an $i^{th}$ row and a $j^{th}$ column is $d(\boldsymbol{x}_i, \boldsymbol{y}_j)^p$, $d(\cdot,\cdot)$ represents any sample distance

$$U = \{\boldsymbol{T} \in \mathbb{R}^{n_x \times n_y} \mid \sum_{i=1}^{n_x} \boldsymbol{T}_{ij} = \frac{1}{n_y}, \sum_{j=1}^{n_y} \boldsymbol{T}_{ij} = \frac{1}{n_x}, \boldsymbol{T}_{ij} \geq 0\}$$

function, $p \geq 1$ , and .

The similarity measurement function $f_{sim}(\ )$ in this application may include the foregoing function, a variant of the foregoing function, or another function adaptive to a specific problem. This is not limited.

In a design, in the similarity measurement method, optimal selections of the feature extraction function, the distance measurement function, and the similarity measurement function may also be different for different data features. As shown in Table 2, combinations of the feature extraction function, the distance measurement function, and the similarity measurement function for different data features are described with examples.

Table 2: Recommended similarity measurement

| Feature | Extraction function | Distance measurement function | Similarity measurement function |
|---|---|---|---|
| Doppler | Feature extraction function for a Doppler spectrum | ECS/EMD | $W_p$/MMD |
| PDP | Feature extraction function for a delay domain power spectrum | | |
| APS | Feature extraction function for an angle power spectrum | | |
| Doppler sparseness | Hoyer | $l_1$-norm | $W_p$/MMD |
| PDP sparseness | | | |
| APS sparseness | | | |

A larger value of the similarity measurement result indicates a lower similarity between the first dataset and the second dataset, while a smaller value of the similarity measurement result indicates a higher similarity between the first dataset and the second dataset. Optionally, after the similarity measurement result of the single feature of the first dataset and the second dataset is determined, the method may further include:

determining whether the similarity measurement result of the single feature of the first dataset and the second dataset meets a low similarity requirement, where for example, if the similarity measurement result of the single feature of the first dataset and the second dataset is greater than or equal to a similarity threshold, or the similarity measurement result of the single feature of the first dataset and the second dataset is within a first similarity threshold range, it is considered that the single feature of the first dataset and the second dataset meets the low similarity requirement; or determining whether the similarity measurement result of the single feature of the first dataset and the second dataset meets a high similarity requirement, where for example, if the similarity measurement result of the single feature of the first dataset and the second dataset is less than or equal to a similarity measurement threshold, or the similarity measurement result of the single feature of the first dataset and the second dataset is within a second similarity threshold range, it is considered that the single feature of the first dataset and the second dataset meets a high similarity requirement.

In a design, a similarity measurement result of a plurality of features of the first dataset and the second dataset may be further determined.

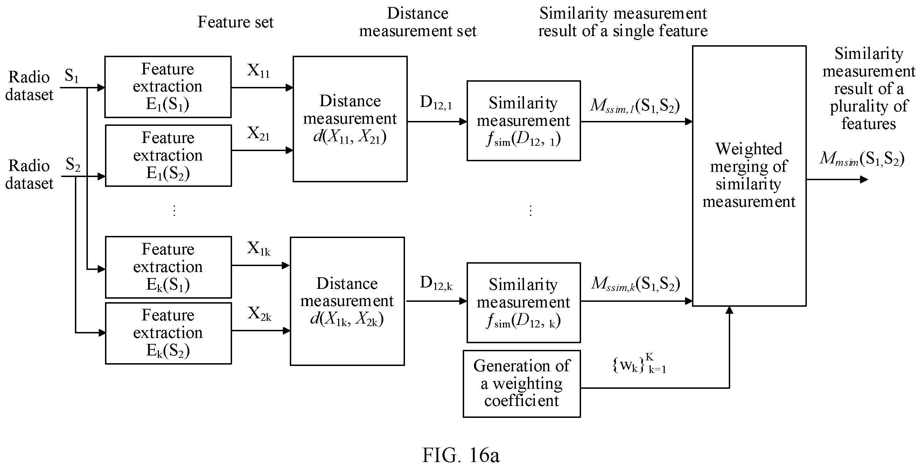

For example, the similarity measurement result of the plurality of features of the first dataset and the second dataset is determined based on the similarity measurement result of the single feature of the first dataset and the second dataset. For example, a measurement result may be determined based on a similarity measurement result of each of the plurality of features of the first dataset and the second dataset. The measurement result may be considered as the similarity measurement result of the plurality of features of the first dataset and the second dataset. For example, after a similarity measurement result of each of K features of the first dataset and the second dataset is separately determined, a weighting coefficient of the similarity measurement result of each feature may be determined, and weighted merging is performed on the similarity measurement results of the K features, to determine a similarity measurement result of the K features. As shown in FIG. 16a, an example of performing similarity measurement on a plurality of features of the dataset S1 and the dataset S2 is provided, including at least the following.

1. For the dataset S1 and the dataset S2, K different features are separately extracted, where K is a positive integer greater than or equal to 1. For the dataset S1, a corresponding feature set may be generated for the extracted features, and the feature set may be represented as $\{X_{1k}\}_{k=1}^{K}$. Similarly, for the dataset S2, a corresponding feature set may be generated for the extracted features, and the feature set may be represented as $\{X_{2k}\}_{k=1}^{K}$.

2. For the feature sets $\{X_{1k}\}_{k=1}^{K}$ and $\{X_{2k}\}_{k=1}^{K}$, a distance measurement set $D_{12,k}$ is calculated separately for each feature. For the K features, K distance measurement sets may be determined, and the K distance measurement sets may be represented as $\{D_{12,k}\}_{k=1}^{K}$.

3. For the K distance measurement sets $\{D_{12,k}\}_{k=1}^{K}$, a similarity measurement result $M_{ssim,k}(S_1,S_2)$ of a corresponding single feature is calculated for each $D_{12,k}$.

4. A weighting coefficient generation module provides weights $w_k$ corresponding to the similarity measurement results $M_{ssim,k}(S_1,S_2)$ of the K single features. Weighted merging is performed on the similarity measurement results of the K single features to obtain a similarity measurement result $M_{msim}(S_1,S_2)$ of a plurality of features. In an example, linear weighted merging may be performed on the similarity measurement results of the K single features, which satisfies the following formula:

$$M_{msim}(S_1,S_2) = \sum_{k=1}^{K} w_k * M_{ssim,k}(S_1,S_2)$$

Optionally, when the similarity measurement result of the plurality of features of the first dataset and the second dataset is greater than or equal to a similarity threshold, or is within a first similarity threshold range, it is considered that the plurality of features of the first dataset and the second dataset meet a low similarity requirement; or when the similarity measurement result of the plurality of features of the first dataset and the second dataset is less than or equal to a similarity threshold, or is within a second similarity threshold range, it is considered that the plurality of features of the first dataset and the second dataset meet a high similarity requirement.

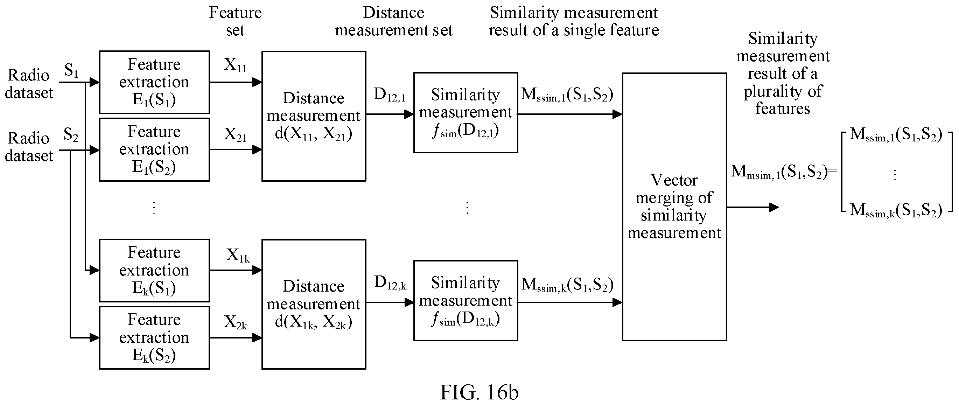

Alternatively, in another implementation, in the plurality of features of the first dataset and the second dataset, a proportion of features that meet a low similarity requirement in the plurality of features may be determined, and if the proportion is greater than or equal to a second threshold, the first dataset and the second dataset meet the low similarity requirement, where the second threshold may be referred to as a first similarity proportion threshold. Alternatively, a proportion of features that meet a high similarity requirement in the plurality of features may be determined, and if the proportion is less than or equal to a third threshold, the first dataset and the second dataset meet the high similarity requirement, where the third threshold may be referred to as a second similarity proportion threshold. For example, as shown in FIG. 16b, a process of determining a diversity measurement result of a plurality of features of the first dataset S1 and the second dataset S2 includes the following.

1. For the first dataset S1 and the second dataset S2, K features are separately extracted. For the dataset S1, a corresponding feature set may be generated for the extracted features, and the feature set may be represented as $\{X_{1k}\}_{k=1}^{K}$. Similarly, for the dataset S2, a corresponding feature set may be generated for the extracted features, and the feature set may be represented as $\{X_{2k}\}_{k=1}^{K}$.

2. For the feature sets $\{X_{1k}\}_{k=1}^{K}$ and $\{X_{2k}\}_{k=1}^{K}$, a distance measurement set $D_{12,k}$ is calculated separately for each feature. For the K features, K distance measurement sets may be determined, and the K distance measurement sets may be represented as $\{D_{12,k}\}_{k=1}^{K}$.

3. For the distance measurement sets $\{D_{12,k}\}_{k=1}^{K}$, a similarity measurement result $M_{ssim,k}(S_1,S_2)$ of a corresponding single feature is calculated for each $D_{12,k}$.

4. Vector merging is performed on diversity measurement results of a plurality of single features to obtain a similarity measurement result $M_{msim}(S_1, S_2)$ of the plurality of features.

For example, the similarity measurement result of the plurality of features of the first dataset S1 and the second dataset S2 may also be jointly represented by using a vector. For example, a similarity measurement result of three features corresponding to the first dataset and the second dataset, such as the PDP feature, the time-varying Doppler spectrum feature, and the APS feature, may be represented as a three-dimensional similarity measurement vector. The similarity measurement result of the K features may be written as a K-dimensional vector:

$$M_{msim}(S_1, S_2) = \begin{bmatrix} M_{ssim,1}(S_1, S_2) \\ \vdots \\ M_{ssim,k}(S_1, S_2) \\ \vdots \\ M_{ssim,K}(S_1, S_2) \end{bmatrix}_{K \times 1}$$

When the similarity measurement results of the plurality of features of the first dataset and the second dataset are represented as the K-dimensional vector $M_{msim}(S_1, S_2)$, the K-dimensional vector may be compared with a K-dimensional threshold vector $E_s$ or a K-dimensional threshold range vector $E_r$, where a $k^{th}$ similarity measurement of the vector is compared with a $k^{th}$ threshold or threshold range of the vector. If the similarity measurement is greater than or equal to the threshold or is within the threshold range, a $k^{th}$ comparison result is represented as 1; or if the similarity measurement is less than the threshold or is not within the threshold range, an $i^{th}$ comparison result is represented as 0. In this way, a K-dimensional comparison result vector $R_s$ is obtained. For example, statistics on a quantity of values 1 in K comparison results in $R_s$ is collected. If the quantity is greater than or equal to a similarity proportion threshold $\gamma$, the similarity measurement result of the plurality of features meets the low similarity requirement. It may be understood that the foregoing process is described by using an example of determining low similarities between the plurality of features of the first dataset and the second dataset. The process may also be used to determine the plurality of features of the first dataset and the second dataset meet the high similarity requirement. Different from the foregoing, a judgment condition, a threshold range, or the like of a threshold needs to be changed.

$$M_{msim}(S_1, S_2) = \begin{bmatrix} M_{ssim,1}(S_1, S_2) \\ \vdots \\ M_{ssim,k}(S_1, S_2) \\ \vdots \\ M_{ssim,K}(S_1, S_2) \end{bmatrix}_{K \times 1}$$

$$E_s = \begin{bmatrix} \varepsilon_1 \\ \vdots \\ \varepsilon_k \\ \vdots \\ \varepsilon_K \end{bmatrix}_{K \times 1}, \quad E_r = \begin{bmatrix} [\varepsilon_{11}, \varepsilon_{12}] \\ \vdots \\ [\varepsilon_{k1}, \varepsilon_{k2}] \\ \vdots \\ [\varepsilon_{K1}, \varepsilon_{K2}] \end{bmatrix}_{K \times 1}$$

$$R_s = \begin{bmatrix} 1 \\ \vdots \\ 0 \\ \vdots \\ 1 \end{bmatrix}_{K \times 1}$$

Optionally, the one or more thresholds used to determine the similarity measurement result, for example, the similarity threshold, the similarity threshold range, and the similarity proportion threshold, may be preset, specified in a protocol, or determined based on application scenarios of the first dataset and the second dataset. Corresponding thresholds may have different values in different application scenarios. This is not limited.

This application provides a procedure of constructing diversified data by using a similarity measurement method, including at least: A data quality measurement apparatus sends first configuration information to a first data collection node, where the first configuration information is used to configure feature extraction in similarity measurement, the similarity measurement is used to determine a degree of similarity in statistical distribution between different datasets, and the feature extraction is used to extract a feature of a data sample included in the dataset. The first data collection node determines a first feature set of a first dataset based on the first configuration information, and sends the first feature set to the data quality measurement apparatus. Correspondingly, the data quality measurement apparatus receives the first feature set from the first data collection node, where the first feature set is based on the first configuration information. The data quality measurement apparatus may be a data management node or another node other than the data management node. Optionally, the data quality measurement apparatus may subsequently determine, based on the first feature set reported by the first data collection node, a similarity between the first dataset collected by the first data collection node and another dataset, to determine whether the data collection node reports the first dataset to the data management node.

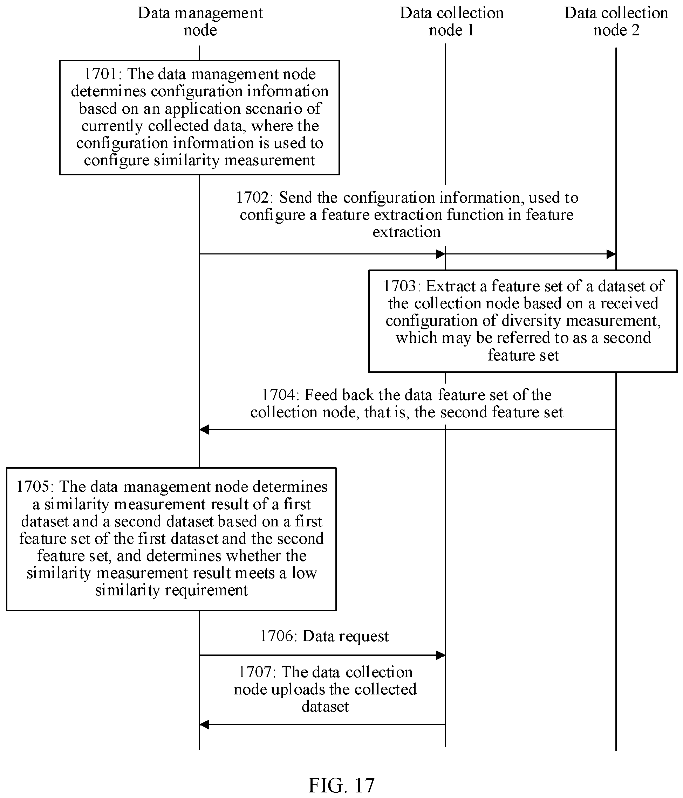

An example in which the data quality measurement apparatus is the data management node is used. As shown in FIG. 17, a procedure of constructing diversified data by using a similarity measurement method is provided, which includes at least the following steps.

Step 1701: The data management node determines configuration information based on an application scenario of currently collected data.

Step 1702: The data management node sends the configuration information to one or more data collection nodes, where the configuration information is used to configure a feature extraction function in similarity measurement, and the configuring a feature extraction function includes the following one or two meanings: configuring a type of the feature extraction function; and configuring a parameter in the feature extraction function. For example, a plurality of feature extraction functions are predefined, and the data management node only needs to send, to the data collection node, an index of the feature extraction function determined based on the current scenario.

Step 1703: The data collection node calculates, according to a feature extraction method, a feature of a locally collected second dataset, where the feature may be referred to as a second feature set.

Step 1704: The data collection node sends the second feature set to the data management node.

Step 1705: The data management node determines a similarity measurement result of a first dataset and the second dataset based on a first feature set of the first dataset and the second feature set.

In a design, the first dataset is a dataset stored by the data management node. The data management node may perform feature extraction on the first dataset by using the feature extraction function, to determine the first feature set. The data management node determines the similarity measurement result of the first dataset and the second dataset based on the first feature set and the second feature set reported by the data collection node, and determines whether the similarity result meets a requirement, where the requirement may be specifically a low similarity requirement. For the low similarity requirement, refer to the descriptions of FIG. 14.

Step 1706: When the similarity measurement result of the first dataset and the second dataset meets the low similarity requirement, send a data request to the data collection node, where the data request is used to request the data collection node to report the second dataset.

Step 1707: The data collection node sends the second dataset to the data management node.

In the foregoing descriptions, an example in which a local existing dataset of the data management node is the first dataset and the dataset collected by the data collection node is referred to as the second dataset is used for description. In an actual scenario, the data management node may have n local existing datasets, and the data collection node may collect m datasets, where both n and m are integers greater than or equal to 1. The data collection node may report, to the data management node, m feature sets respectively corresponding to the m collected datasets. The data management node may separately perform feature extraction on the n local existing datasets, to determine n feature sets. For any one of the m datasets, the data management node may calculate similarity measurement results of the dataset and the n local existing datasets. If a similarity measurement result of the dataset and any local existing dataset does not meet the low similarity requirement, it is considered that the dataset does not meet a requirement, and subsequently the data management node does not notify the data collection node to report the dataset. For a process of determining the similarity measurement result of the dataset and the local existing dataset of the data management node, distance measurement may be performed based on a feature set corresponding to the dataset and a feature set of the local existing dataset, to determine a distance measurement set, and the similarity measurement result of the two datasets is determined based on the distance measurement set. For a specific process, refer to the descriptions of FIG. 14. As described above, some of the m datasets collected by the data collection node may meet the requirement, and the data collection node needs to report the datasets to the data management node, but some datasets do not need to be reported by the data collection node to the data management node. For a dataset that needs to be reported, the data management node may add an index of the dataset to the data request in step 1706. In the diagram of FIG. 17, an example in which the data collection node includes a data collection node 1 and a data collection node 2 is used for description. A dataset collected by the data collection node 1 meets the low similarity requirement, and the data management node sends a data request to the data collection node 1, to notify the data collection node 1 to report the collected dataset. A dataset collected by the data collection node 2 does not meet the low similarity requirement, and the data management node does not notify the data collection node 2 to report the dataset collected by the data collection node 2.

According to the solution of this application, a dataset greatly different from an existing dataset is selected for fusion extension through similarity comparison between the datasets, so that information increment is brought, diversity of a merged dataset is further improved, transmission of data that is highly similar to existing data between nodes is avoided, transmission overheads are reduced.

In the descriptions of FIG. 17, the data management node determines a similarity between a dataset collected by the data collection node and a dataset stored by the data management node, and determines, based on the similarity between the two datasets, whether to notify the data collection node to report the dataset collected by the data collection node. For example, if it is determined that the similarity between the two datasets is low, the data collection node is notified to report the dataset collected by the data collection node; or if it is determined that the similarity between the two datasets is not low, the data collection node is not notified to report the dataset collected by the data collection node. In a possible implementation, the data management node may further determine a similarity between datasets collected by different data collection nodes, and if the similarity between the datasets is low, separately notifies the two data collection nodes to report the datasets collected by the two data collection nodes, or if the similarity between the datasets is high, notifies one of the two data collection nodes to report the dataset collected by the data collection node. For example, the data management node may send first configuration information to the data collection node 1, where the first configuration information is used to configure a feature extraction function. The data collection node 1 determines a first feature set of a collected first dataset based on the feature extraction function, and reports the first feature set to the data management node. Similarly, the data management node may send second configuration information to the data collection node 2, where the second configuration information is used to configure a feature extraction function. Similarly, the data collection node 2 may determine a second feature set of a collected second dataset based on the second configuration information, and report the second feature set to the data management node. The data management node determines a similarity measurement result of the first dataset and the second dataset based on the first feature set and the second feature set, and determines, based on the similarity measurement result of the first dataset and the second dataset, whether to notify the data collection node 1 to report the first dataset and/or notify the data collection node 2 to report the second dataset. For example, if the similarity measurement result of the first dataset and the second dataset meets a low similarity requirement, the data collection node 1 and the data collection node 2 may be separately notified to report the datasets collected by the data collection node 1 and the data collection node 2; or if the similarity measurement result of the two datasets does not meet a low similarity requirement, either of the data collection node 1 or the data collection node 2 may be notified to report the dataset collected by the data collection node.

This application further provides a method for selecting an artificial intelligence AI model based on a scenario by using a similarity measurement method. In the method, a data quality measurement apparatus obtains configuration information, where the configuration information is used to configure similarity measurement, and the similarity measurement is used to determine a degree of similarity in statistical distribution between different datasets. The data quality measurement apparatus determines a similarity measurement result of a first dataset and a second dataset based on the configuration information, where the first dataset is a training dataset for a model, and the second dataset is a dataset collected by a model using node. The data quality measurement apparatus is the model using node or another node other than the model using node. Optionally, a process in which the data quality measurement apparatus obtains the configuration information may include: The configuration information is received from a data management node, the configuration information is preconfigured in the data quality measurement apparatus, or the configuration information is specified in a protocol. This is not limited. Optionally, an AI model corresponding to a training dataset with a high similarity to a collected dataset, that is, the first dataset, may be subsequently selected from a candidate AI model based on the similarity measurement result of the first dataset and the second dataset. Distribution of the collected dataset is consistent with that of the training dataset, so that accuracy of subsequent model interference of the AI model can be improved.

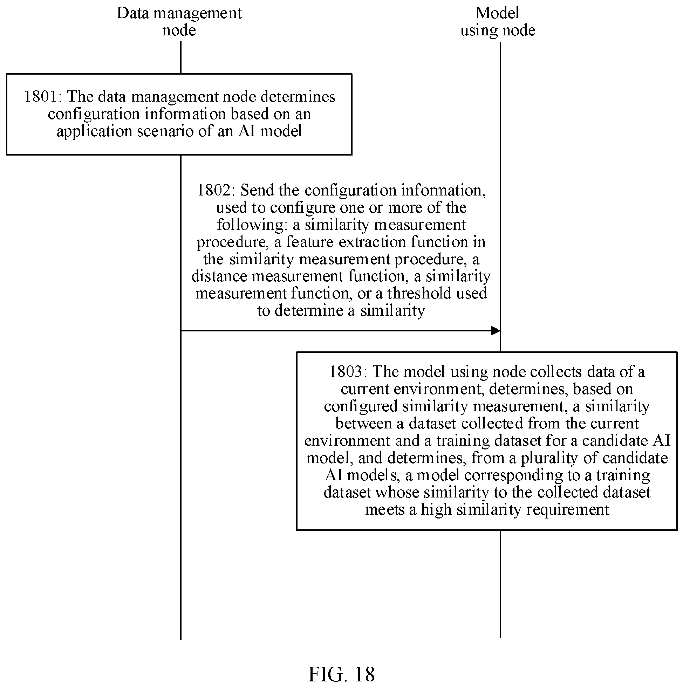

An example in which the data quality measurement apparatus is the model using node is used. As shown in FIG. 18, a procedure of selecting an AI model based on a scenario by using a similarity measurement method is provided. The procedure includes the following steps.

Step 1801: A data management node determines configuration information based on an application scenario of an AI model, where the configuration information is used to configure similarity measurement.

Step 1802: The data management node sends the configuration information to the model using node.

Optionally, the configuration information is specifically used to configure one or more of the following: a similarity measurement procedure, a feature extraction function in the similarity measurement procedure, a distance measurement function, a similarity measurement function, or one or more thresholds used to determine a similarity measurement result. The one or more thresholds used to determine the similarity measurement result include, for example, a similarity threshold, a second similarity threshold range, or a third threshold. The third threshold may be referred to as a second similarity proportion threshold, or the like.

The foregoing step 1802 may alternatively be described as follows: The data management node sends, to the model using node, the determined similarity measurement suitable for the current scenario and the one or more thresholds used to determine the similarity measurement result. For example, a plurality of types of similarity measurement are predefined, and the data management node only needs to send, to the model using node, an index of the determined similarity measurement suitable for the current scenario. For another example, a plurality of thresholds are predefined, and the data management node only needs to send, to the model using node, an index of a determined threshold suitable for the current scenario. Optionally, if the AI model is trained by the data management node, the data management node further needs to send, to the model using node, feature information of a training dataset for training the AI model; or if the AI model is trained by the model using node, the model using node has feature information of a training dataset required for training the AI model.

1803: The model using node collects data of a current environment, and determines, based on the foregoing configured similarity measurement, a similarity between a dataset collected from the current environment and a training dataset for a candidate AI model. The model using node determines, from a plurality of candidate AI models, a model corresponding to a training dataset whose similarity to the collected dataset meets a high similarity requirement.

For example, the dataset collected by the model using node is referred to as a first dataset, three candidate AI models are referred to as an AI model 1, an AI model 2, and an AI model 3, and training datasets respectively corresponding to the candidate AI models are a training dataset 1, a training dataset 2, and a training dataset 3. In this case, the model using node may separately calculate similarity measurement results of the first dataset with the training dataset 1, the training dataset 2, and the training dataset 3, to obtain three similarity measurement results. The model using node selects an AI model from the three candidate AI models based on the three similarity measurement results. Optionally, the selected AI model may be subsequently used for model inference.

A process of selecting the AI model based on the similarity measurement result of the first dataset and the training dataset may include: When a similarity measurement result of the first dataset and a training dataset meets the high similarity requirement, an AI model corresponding to the training dataset may be used as a selected AI model. For meeting the high similarity requirement, refer to the descriptions of FIG. 14. Alternatively, an AI model corresponding to a training dataset whose similarity measurement result with the first dataset has a minimum value may be selected from a plurality of similarity measurement results. Certainly, an AI model corresponding to a training dataset whose similarity measurement result with the first dataset has a small value may alternatively be selected. For example, the plurality of similarity measurement results are sorted in ascending order of values. As described above, a smaller value of the similarity measurement result indicates a higher similarity. The first X similarity measurement results may be selected from the foregoing sorting column, and training datasets corresponding to the X similarity measurement results may be considered to have high similarities to the first dataset, where X is a positive integer greater than 1. AI models corresponding to the training datasets corresponding to the X similarity measurement results are used as selected AI models. Optionally, an AI model may be then selected from the X AI models to perform model inference. Alternatively, the X AI models may jointly perform model inference. This is not limited.

For example, the data collected by the model using node from the current environment forms the first dataset, and the training dataset for the AI model is referred to as the second dataset. The model using node includes the plurality of candidate AI models, and there is a corresponding training dataset for each of the plurality of candidate AI models. The model using node may select, from the plurality of candidate AI models, the AI model corresponding to the training dataset whose similarity to the first dataset meets the high similarity requirement. For example, there are U candidate AI models, and the U candidate AI models correspond to U training datasets. The model using node may separately perform similarity measurement on the first dataset and the U training datasets, to obtain U similarity measurement results. A similarity measurement result that meets a high similarity condition is determined from the U similarity measurement results. An AI model corresponding to the training dataset corresponding to the similarity measurement result that meets the high similarity condition is used as an AI model for subsequent model inference of the model using node. Optionally, a plurality of AI models may be selected according to the foregoing method. In this case, the model using node may further select an AI model from the plurality of AI models. This selection manner is not limited. For example, any AI model may be selected. Alternatively, the model using node can jointly use the plurality of selected AI models for model inference.

This application provides a method for performing data redundancy pruning by using a similarity measurement method and a diversity measurement method. The method includes: A data quality measurement apparatus obtains first configuration information and second configuration information, where the first configuration information is used to configure similarity measurement, and the second configuration information is used to configure diversity measurement. The data quality measurement apparatus determines, based on the first configuration information and the second configuration information, a first dataset that meets both a similarity requirement and a diversity requirement, where a data sample included in the first dataset is all or some data samples in the second dataset. The data quality measurement apparatus is a data collection node or another node other than the data collection node. Optionally, that a data quality measurement apparatus obtains first configuration information and second configuration information includes: The first configuration information and the second configuration information are received from a data management node, the first configuration information and the second configuration information are preconfigured in the data quality measurement apparatus, the first configuration information and the second configuration information are predefined in a protocol, or the like. This is not limited. According to the foregoing method, data collected by the data collection node may be pruned, to determine a dataset that meets both the similarity requirement and the diversity requirement.

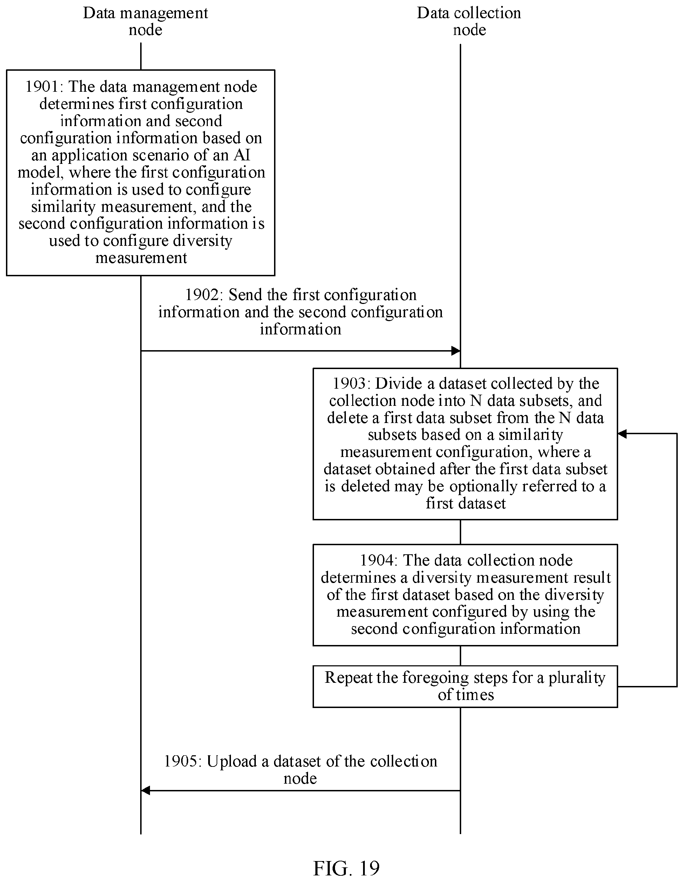

An example in which the data quality measurement apparatus is the data collection node is used. As shown in FIG. 19, a procedure of performing data redundancy pruning by using the similarity measurement method and the diversity measurement method is provided, including at least the following steps.

Step 1901: The data management node determines first configuration information and second configuration information based on an application scenario of an AI model, where the first configuration information is used to configure similarity measurement, and the second configuration information is used to configure diversity measurement.

Step 1902: The data management node sends the first configuration information and the second configuration information to the data collection node.

The first configuration information is used to configure one or more of the following: a similarity measurement procedure, a feature extraction function in the similarity measurement procedure, a distance measurement function, a similarity measurement function, or one or more thresholds used to determine a similarity measurement result. The second configuration information is used to configure one or more of the following: a diversity measurement procedure, a feature extraction function in the diversity measurement procedure, a distance measurement function, a diversity measurement function, one or more thresholds used to determine a diversity measurement result, or the like.

The data collection node determines, based on the first configuration information and the second configuration information, a first dataset that meets both a similarity requirement and a diversity requirement. The first dataset includes all or a part of a second dataset. For a specific process, refer to subsequent steps 1903 and 1904.

Step 1903: The data collection node determines N data subsets based on a to-be-processed dataset (which may be referred to as the second dataset), and deletes a first data subset from the N data subsets based on the similarity measurement configured by using the first configuration information. Optionally, a dataset obtained after the first data subset is deleted may be referred to as the first dataset.

The to-be-processed dataset of the data collection node may be a dataset including data collected by the data collection node, and may be referred to as the second dataset. Optionally, the data collection node may determine the N data subsets, where N is an integer greater than 1, and the second dataset includes the N data subsets. This process may be described as follows: The data collection node divides the second dataset into the N data subsets. The data collection node determines similarity measurement results of the N data subsets based on similarity measurement configured by using the first configuration information, and determines the first dataset based on the similarity measurement results of the N data subsets. The first dataset includes some of the N data subsets, and does not include a data subset other than the some data subsets in the N data subsets. In other words, one or more data subsets may be deleted from the N data subsets in the second dataset based on similarity measurement. The deleted one or more data subsets may be referred to as the first data subset. The second dataset obtained after the one or more data subsets are deleted may be referred to as the first dataset.

For example, the data collection node determines a similarity measurement result of each of the N data subsets based on similarity measurement configured by using the first configuration information. For each of the N data subsets, similarity measurement results of the data subset with the other N-1 data subsets may be separately determined, and a similarity measurement result of the data subset is determined based on the N-1 similarity measurement results. For example, the N-1 similarity measurement results are averaged, and an average value is used as the similarity measurement result of the data subset. A data subset whose similarity measurement result does not meet a low similarity requirement is determined from the N data subsets as a first data subset, where there may be one or more first data subsets. The first data subset is deleted from the N data subsets, and the second dataset obtained after the first data subset is deleted is referred to as the first dataset. For example, a data subset whose similarity measurement results with the other N-1 data subsets are the smallest or a plurality of data subsets whose similarity measurement results are small may be removed from the N data subsets. Alternatively, a data subset whose similarity measurement results with the other N-1 data subsets are less than or equal to a similarity threshold may be removed from the N data subsets. It should be noted that in this case, there may be a plurality of data subsets, and similarity measurement results of each of the plurality of data subsets with the other N-1 data subsets are all less than or equal to the similarity threshold. Therefore, the plurality of data subsets may be deleted from the dataset.

Alternatively, similarity measurement results of each of the N data subsets and the other N-1 data subsets may be determined based on similarity measurement configured by using the first configuration information. In other words, a similarity measurement result of any two of the N data subsets may be determined based on configured similarity measurement. A data subset that does not meet a low similarity requirement is determined from the similarity measurement result of any two of the N data subsets as a first data subset. The data subset that does not meet the low similarity requirement is deleted from the N data subsets, and remaining data subsets form the first dataset. For example, as described above, the similarity measurement result of any two of the N data subsets may be determined. For example, if a value of a similarity measurement result of two data subsets is the smallest, or a similarity measurement result of two data subsets is less than or equal to a similarity threshold, it is considered that a similarity between the two data subsets is high, and any one of the two data subsets is removed.

Step 1904: The data collection node determines a diversity measurement result of the first dataset based on the diversity measurement configured by using the second configuration information.

For example, the data collection node may determine diversity of a dataset obtained after a data subset is removed, that is, diversity of the first dataset, and determine whether a diversity measurement result of a target dataset meets a diversity measurement requirement. If the first dataset does not meet the diversity requirement, the first data subset removed in step 1903 is supplemented to form a new first dataset, and the operation of division into N data subsets is performed again on the new first dataset that is used as a second dataset; or the procedure ends, and the dataset is not sent to the data management node. If the first dataset meets the diversity measurement requirement, step 1905 is performed, that is, the data collection node sends the first dataset to the data management node, or steps 1903 and 1904 are repeatedly performed until a quantity of iteration times reaches a preset value, and step 1905 is performed.

Step 1905: The data collection node sends a processed dataset to the data management node.

According to the foregoing design, a dataset is divided into a plurality of data subsets, redundant parts with small differences (high similarities) are deleted, and retained parts meet the diversity requirement, so that transmission of redundant data transmission between nodes is avoided, and transmission overheads are reduced.

This application further provides a data quality measurement method. The method is completeness measurement, and the completeness measurement is for measuring a degree to which a required performance indicator (performance measures or performance metrics) is achieved in a processing procedure in an application scenario corresponding to data input into the processing procedure. The data quality measurement method includes:

determining first output information based on a first dataset, where the first dataset includes at least one data sample, and the first output information indicates an output generated when the first dataset is used in a first processing procedure; and determining a measurement value of a first performance indicator based on the first output information, where the measurement value of the first performance indicator indicates a measurement value of a performance indicator achieved when the first dataset is used in the first processing procedure; optionally, the first performance indicator includes but is not limited to one or more of the following: a mean square error (mean square error, MSE), a normalized mean square error (normalized mean square error, NMSE), a mean absolute error (mean absolute error, MAE), a maximum absolute error, a correlation coefficient, a generalized cosine similarity (generalized cosine similarity, GCS), a cross entropy, mutual information, a bit error rate, a code error rate, or the like; and when the measurement value of the first performance indicator meets a completeness requirement, the first dataset and the first processing procedure are a combination that meets the completeness measurement requirement.

An example in which a data quality measurement apparatus is an execution body is used. A data quality measurement method is provided, including: The data quality measurement apparatus obtains configuration information, where the configuration information is used to configure completeness measurement, and the completeness measurement is used to determine a degree to which a performance indicator is achieved in a processing procedure in an application scenario corresponding to data input into the processing procedure. The data quality measurement apparatus determines a measurement value of a first performance indicator based on the configuration information, where the measurement value of the first performance indicator is determined based on an output of a first processing procedure when a first dataset is used as an input. The data quality measurement apparatus determines a completeness measurement result based on the measurement value of the first performance indicator. Optionally, that the data quality measurement apparatus obtains configuration information may include: The data quality measurement apparatus receives the configuration information from a data management node, the configuration information is preconfigured in the data quality measurement apparatus, or the configuration information is specified in a protocol, or the like. The data quality measurement apparatus may be a model using node or another node other than the model using node.

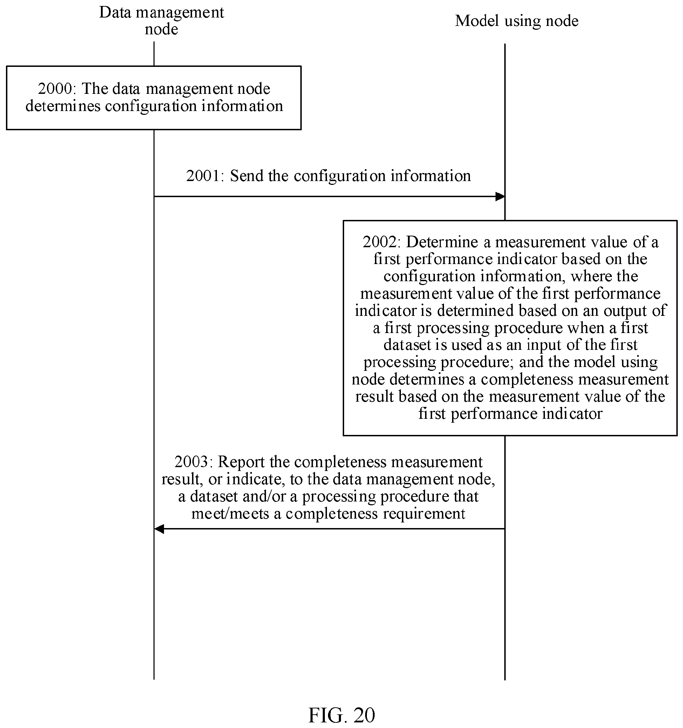

As shown in FIG. 20, an example in which the data quality measurement apparatus is the model using node is used to provide a procedure of a completeness measurement method. The procedure includes at least the following steps.

Step 2000: The data management node determines configuration information.

Optionally, the data management node determines the configuration information based on an application scenario of an AI model.

Optionally, the configuration information is used to configure one or more of the following: a first processing procedure, a first dataset, a performance indicator, or one or more thresholds used to determine completeness. The one or more thresholds used to determine completeness may be a completeness threshold, a completeness threshold range, or the like. This is not limited. The first dataset includes one or more datasets. The first processing procedure includes one or more processing procedures.

The processing procedure may include one or more AI models. Further, the processing procedure may further include a procedure of processing inputs or outputs of the one or more AI models.

Step 2001: The data management node sends the configuration information to the model using node.

Step 2002: The model using node determines a measurement value of a first performance indicator based on the configuration information, where the measurement value of the first performance indicator is determined based on an output of the first processing procedure when the first dataset is used as an input of the first processing procedure. The model using node determines a completeness measurement result based on the measurement value of the first performance indicator.

Optionally, the method may further include the following step.

Step 2003: The model using node reports the completeness measurement result to the data management node, or indicates, to the data management node, a dataset and/or a processing procedure that meet/meets a completeness requirement.

For example, when the measurement value of the first performance indicator is greater than or equal to the completeness threshold, or is within a first completeness threshold range, it is determined that the completeness measurement result is that the completeness requirement is met; or when the measurement value of the first performance indicator is less than the completeness threshold, or is within a second completeness threshold range, it is determined that the completeness measurement result is that the completeness requirement is not met. Optionally, the model using node may further send the completeness measurement result to the data management node, or indicate, to the data management node, a dataset and/or a processing procedure whose completeness measurement result is that the completeness requirement is met.

For example, the first dataset includes N datasets, N is an integer greater than 1, and the first processing procedure is one processing procedure. The data management node may determine, based on the application scenario of the AI model, one processing procedure for performing completeness measurement, N different datasets input into the processing procedure, a performance indicator for measuring the processing procedure, and a threshold for measuring a degree to which the performance indicator meets a requirement, that is, the completeness threshold, the completeness threshold range, or the like. The data management node may configure, for the model using node by using the configuration information, one or more of the one processing procedure, the N different datasets, the performance indicator, the threshold used to determine completeness, or the like. It may be understood that a parameter that is not configured by the data management node for the model using node in the one processing procedure, the N different datasets, the performance indicator, the threshold used to determine completeness, or the like may be pre-stored in the model using node based on a protocol definition or an actual system requirement. The model using node separately inputs the N datasets into the configured processing procedure to obtain N output results. For each of the N output results, a corresponding measurement value of the performance indicator is calculated, and whether the measurement value of the performance indicator meets a requirement is determined based on the completeness threshold. If the measurement value of the performance indicator meets the requirement, the processing procedure and the corresponding input dataset meet the completeness requirement and can support valid applications; or if the measurement value of the performance indicator does not meet the requirement, the processing procedure and the corresponding input dataset do not meet the completeness requirement and cannot support valid applications. The method is mainly for N datasets and one processing procedure. A dataset that can be used together with the processing procedure to meet the completeness requirement is determined from the N datasets. In this way, a dataset similar to a dataset to be input into an AI model may be determined in an inference process of the AI model, to determine an AI model into which the dataset needs to be input.

For example, in a frequency division duplex massive multiple input multiple output (FDD Massive MIMO) system for wireless communication, a neural network-based channel state information (channel state information, CSI) codebook feedback is used, a transmit end (which may be a terminal side) uses a neural network encoder to perform CSI compression, and a receive end (which may be a base station side) uses another neural network decoder to perform CSI reconstruction. Both the neural network encoder and the neural network decoder are implemented by using an AI model. N CSI datasets are collected in different transmission scenarios, for example, an outdoor densely populated urban area, an outdoor common urban area, an outdoor rural area, an outdoor mountainous area, an indoor office, and an indoor factory. A generalized cosine similarity GCS between a CSI input at the transmit end and a CSI reconstruction output at the receive end is used as a performance measurement indicator, where a threshold of the GCS is $\varepsilon$. The data management node configures one CSI codebook feedback processing procedure (including a CSI encoder at the transmit end and a CSI decoder at the receive end), N input CSI datasets, the GCS measurement indicator, and the corresponding threshold $\varepsilon$. According to a completeness measurement procedure, the N CSI datasets are separately input into the one CSI processing procedure, to obtain one CSI reconstruction output dataset corresponding to each input dataset, and GCS values corresponding to the CSI input datasets and the CSI reconstruction output datasets are calculated. If the GCS value is greater than or equal to the threshold $\varepsilon$, the CSI codebook processing procedure and a corresponding input dataset meet a completeness requirement; or if the GCS value is less than the threshold $\varepsilon$, the CSI codebook processing procedure and a corresponding input dataset do not meet a completeness requirement. Therefore, it can be measured whether the processing procedure can meet the completeness requirement and work effectively in different transmission scenarios, that is, application scenarios.

For example, the first dataset includes one dataset, and the first processing procedure includes N processing procedures. The data management node may determine, based on the application scenario of the AI model, N processing procedures for performing completeness measurement, input datasets corresponding to the N processing procedures, a performance indicator for measuring outputs of the N processing procedures, and a threshold for measuring completeness of the performance indicator, that is, the completeness threshold or the completeness threshold range, where N is a positive integer. The data management node configures one or more of the following for the model using node: the N processing procedures, one dataset, the performance indicator, or the threshold used to determine completeness. It may be understood that a parameter that is not configured by the data management node for the model using node in the N processing procedures, the one dataset, the performance indicator, or the threshold used to determine completeness may be pre-stored in the model using node based on a protocol definition or an actual system requirement. The model using node separately inputs the one dataset into the N processing procedures to obtain N output results. For each of the N output results, a corresponding measurement value of the performance indicator is calculated, and whether the performance indicator meets a completeness requirement is determined based on the completeness threshold. If the performance indicator meets the completeness requirement, the processing procedure meets the completeness requirement in an application scenario corresponding to the dataset and can support valid applications; or if the performance indicator does not meet the completeness requirement, the processing procedure does not meet the completeness requirement in an application scenario corresponding to the dataset and cannot support valid applications. The method is mainly for one dataset and N processing procedures. A processing procedure that can be used together with the dataset to meet the completeness requirement is determined from the N processing procedures.

For example, in an FDD massive MIMO system for wireless communication, a neural network-based channel state information (channel state information, CSI) codebook feedback is used, a transmit end (which may be a terminal side) uses a neural network encoder to perform CSI compression, and a receive end (which may be a base station side) uses another neural network decoder to perform CSI reconstruction. Different network device vendors and terminal device vendors provide different CSI compression and CSI reconstruction. Therefore, an entire pairwise combination of CSI compression and CSI reconstruction corresponds to N different processing procedures, including complete end-to-end processing from the transmit end to the receive end. A CSI dataset is collected in a transmission scenario, for example, an outdoor densely populated urban area, an outdoor common urban area, an outdoor rural area, an outdoor mountainous area, an indoor office, and an indoor factory. A generalized cosine similarity GCS between a CSI input at the transmit end and a CSI reconstruction output at the receive end is used as a performance measurement indicator, where a threshold of the GCS is $\varepsilon$. The data management node configures N CSI codebook feedback processing procedures (including a CSI encoder at the transmit end and a CSI decoder at the receive end), one input CSI dataset, the GCS measurement indicator, and the corresponding threshold $\varepsilon$. According to a completeness measurement procedure, the CSI dataset is separately input into the N CSI processing procedures, to obtain one CSI reconstruction output dataset corresponding to each CSI processing procedure, and GCS values corresponding to the CSI input dataset and the CSI reconstruction output datasets are calculated. If the GCS value is greater than the threshold $\varepsilon$, a corresponding CSI codebook processing procedure and the input dataset meet a completeness requirement; or otherwise, a corresponding CSI codebook processing procedure and the input dataset do not meet a completeness requirement. Therefore, it can be measured whether different CSI processing procedures can meet the completeness requirement and work effectively in a transmission scenario corresponding to one dataset, that is, an application scenario.

Alternatively, the first dataset may include a plurality of datasets, and the first processing procedure includes a plurality of processing procedures. In other words, the data management node may configure a plurality of datasets and a plurality of processing procedures for the model using node by using the configuration information. Degrees of completeness achieved when the plurality of processing procedures are used together with the plurality of datasets may be measured. For example, degrees of completeness separately achieved when one processing procedure is used together with a plurality of datasets may be measured according to the foregoing first method. Alternatively, degrees of completeness separately determined to be achieved by a plurality of processing procedures and one dataset may be measured according to the foregoing second method.

This application provides a method for improving training effects of an AI model and improving training performance by using a similarity measurement method, a diversity measurement method, and a completeness measurement method. The method includes: A data quality measurement apparatus determines a candidate dataset based on a dataset that is reported by a data collection node and that meets a similarity requirement, and determines, from the candidate dataset based on diversity measurement, a first dataset that meets a diversity requirement. The data quality measurement apparatus sends a first dataset to a model training node. The data quality measurement apparatus is a data management node, a chip or a circuit used in the data management node, another node other than the data management node, or a chip or a circuit used in the another node. Optionally, the data management node and the model training node may be a same node, different nodes, or the like. This is not limited. Correspondingly, when receiving the first dataset that meets the diversity requirement, the model training node may determine a measurement value of a first performance indicator based on the first dataset, and determine a completeness measurement result based on the measurement value of the first performance indicator. For example, the model training node may perform model training based on the first dataset. For example, there are M first datasets, where M is an integer greater than 1. In this case, the model training node may perform model training by using the M datasets, to obtain N AI models. Values of N and M may be equal or unequal. This is not limited. N is an integer greater than 1. The M first datasets are separately input into the N AI models, to obtain outputs of the corresponding models. The measurement value of the first performance indicator is obtained based on the output of the model. When the measurement value of the first performance indicator meets a requirement of the first performance indicator, it is determined that the model meets a completeness requirement in an application scenario corresponding to the first dataset input into the model.

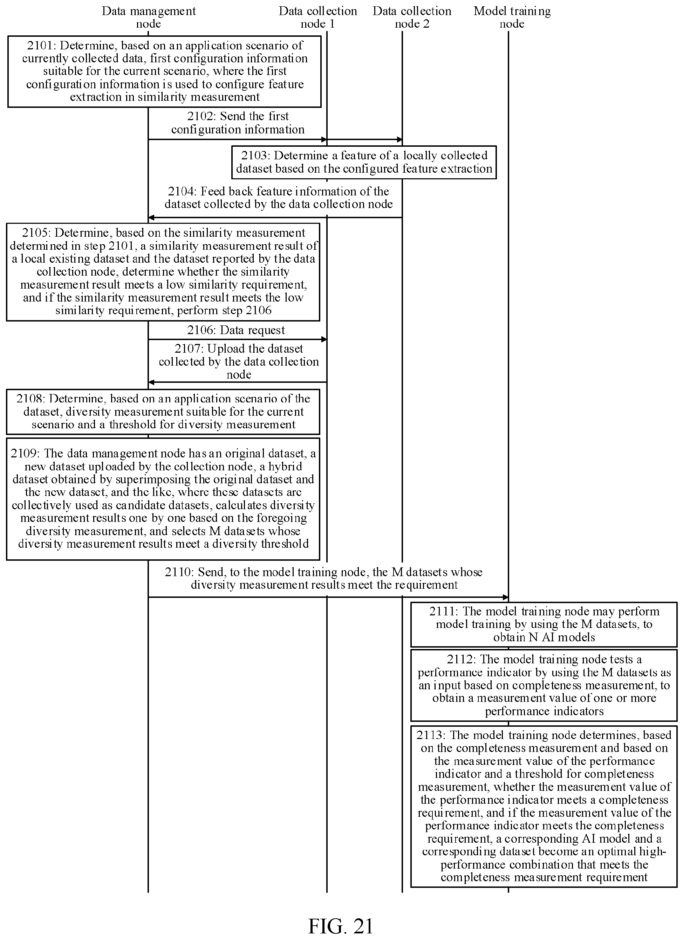

An example in which a data quality measurement apparatus includes a data management node and a model training node is used. As shown in FIG. 21, a method for improving training effects of an AI model and improving training performance by using a similarity measurement method, a diversity measurement method, and a completeness measurement method is provided. The method includes at least the following steps.

Step 2101: The data management node determines, based on an application scenario of currently collected data, first configuration information suitable for the current scenario, where the first configuration information is used to configure feature extraction in similarity measurement.

The similarity measurement may be similarity measurement for a single feature or similarity measurement for a plurality of features. For similarity measurement, refer to the descriptions of FIG. 14.

Step 2102: The data management node sends the first configuration information to one or more data collection nodes.

For example, a plurality of types of feature extraction are predefined, and the data management node may send, to the data collection node, an index of feature extraction included in the determined similarity measurement.

Step 2103: The data collection node determines a feature of locally collected data based on the configured feature extraction.

Step 2104: The data collection node sends the foregoing feature information to the data management node.

Step 2105: The data management node calculates, based on similarity measurement determined in step 2101, a similarity measurement result of a local existing dataset and a dataset reported by the data collection node, and determines whether the similarity measurement result meets a low similarity requirement. For example, if the similarity measurement result is greater than or equal to a similarity threshold in step 2101, it is considered that the local existing dataset of the data management node and the dataset collected by the data collection node meet the low similarity requirement, and the data collection node may be notified to report the dataset collected by the data collection node; or if the similarity measurement result is less than a similarity threshold in step 2101, it is considered that the local existing dataset of the data management node and the dataset collected by the data collection node do not meet a low similarity requirement, and the data collection node does not need to be notified to report the dataset collected by the data collection node.

Step 2106: The data management node sends a data request to the data collection node, where the data request is used to notify the data collection node to report a dataset that is collected by the data collection node and that meets the low similarity requirement. In a design, the data management node may send, to the data collection node, an index of the dataset that meets the low similarity requirement. For example, the data request carries the index of the corresponding dataset.

Step 2107: The data collection node sends the dataset notified by the data management node to the data management node.

Step 2108: The data management node determines, based on the application scenario of the currently collected data, diversity measurement suitable for the current scenario and a threshold for diversity measurement.

Diversity measurement may include diversity measurement for a single feature or diversity measurement for a plurality of features. For diversity measurement, refer to the descriptions of FIG. 7.

Step 2109: The data management node has an original dataset, a new dataset uploaded by the data collection node, a hybrid dataset obtained by superimposing the original dataset and the new dataset, and the like, where these datasets are collectively referred to as candidate datasets, calculates diversity measurement results for these candidate datasets one by one based on the foregoing diversity measurement, and compares the diversity measurement results with the foregoing diversity threshold, to determine whether these datasets meet a diversity requirement of the data management node. For example, for a candidate dataset, if a diversity measurement result of the candidate dataset is greater than or equal to the foregoing diversity threshold, it is considered that the candidate dataset meets the diversity requirement; or if a diversity measurement result of the candidate dataset is less than the foregoing diversity threshold, it is considered that the candidate dataset does not meet the diversity requirement. Further, select M datasets whose diversity measurement results meet a diversity threshold requirement from the candidate datasets, where M is an integer greater than or equal to 1.

Step 2110: The data management node sends, to the model training node, the M datasets whose diversity measurement results meet the requirement. Optionally, the model training node may be a core network device, an access network device, a terminal device, or the like. This is not limited.

Step 2111: The model training node may separately perform model training by using the M datasets, to obtain N AI models. A processing procedure in the foregoing completeness measurement includes an AI model. In the procedure in FIG. 21, an example in which the processing procedure is an AI model is used for description.

Optionally, a relationship between M and N may be that a value of M is greater than N, a value of M is less than N, or a value of M is equal to N. Functions of the N AI models may be the same. For example, the N AI models are all for CSI compression and reconstruction. A difference between the N AI models includes a difference in one or more of complexity, an application scenario corresponding to an input, or a target optimization function. For the complexity, for example, a larger quantity of layers or inputs of the AI model indicates higher complexity. The application scenario corresponding to the input is, for example, different transmission scenarios such as an indoor scenario, an outdoor scenario, an urban scenario, and a suburban scenario. The target optimization function is, for example, a loss function of the AI model.

Optionally, the model training node may comprehensively consider different application scenarios, a device capability, a performance indicator requirement, and the like, and select an AI model that meets completeness in an application scenario corresponding to an input of the AI model, to perform subsequent inference. For a process of selecting the AI model that meets completeness in the application scenario corresponding to the input of the AI model, refer to subsequent descriptions.

Step 2112: The model training node tests a performance indicator by using the M datasets as an input based on completeness measurement, to obtain a measurement value of one or more performance indicators.

In a design, for any one of the N AI models, the M datasets may be separately into the AI model as inputs, to obtain outputs of the AI model, and a measurement value of the performance indicator obtained when the AI model uses each dataset is determined based on the output of the AI model. This process may be referred to as testing the N AI models by using the M datasets, and a test result is an obtained corresponding measurement value of the performance indicator.

Step 2113: The model training node determines, based on the completeness measurement and based on the performance indicator and a threshold for completeness measurement, whether the performance indicator meets a completeness requirement. If the performance indicator meets the completeness requirement, a corresponding AI model and a corresponding dataset become an optimal high-performance combination that meets the completeness measurement requirement.

In a design, the model training node may perform a performance test on the N AI models, to obtain a measurement value of the performance indicator obtained when each AI model uses a dataset. For any AI model, if a measurement value of the performance indicator obtained when a dataset is input into the AI model meets a requirement, it is considered that performance of the AI model for an application scenario corresponding to the dataset meets the requirement, and the AI model and the dataset are considered as an optimal high-performance combination that meets the completeness measurement requirement. In a subsequent AI model application, for example, in an inference process, a dataset of a high similarity to the dataset may be input into the AI model, to obtain an output corresponding to the dataset. Because the output is an output of the AI model subjected to the foregoing completeness measurement, the output may be considered as a valid output.

The diversity measurement method, the similarity measurement method, and the completeness measurement method provided above may be applied separately, or one or more of the methods may be combined for application. For same or similar parts in descriptions of combinations of one or more of the methods and/or descriptions of applications, reference may be made to each other, and details are not described herein.

It may be understood that, to implement the functions in the foregoing embodiments, the data management node, the data collection node, the model training node, the model using node, and the like include corresponding hardware structures and/or software modules for performing the functions. A person skilled in the art should be easily aware that the units and the steps of the method in the examples described with reference to embodiments disclosed in this application may be implemented in a form of hardware or a combination of hardware and computer software in this application. Whether a function is performed by hardware or hardware driven by computer software depends on particular application scenarios and design constraint conditions of the technical solutions.

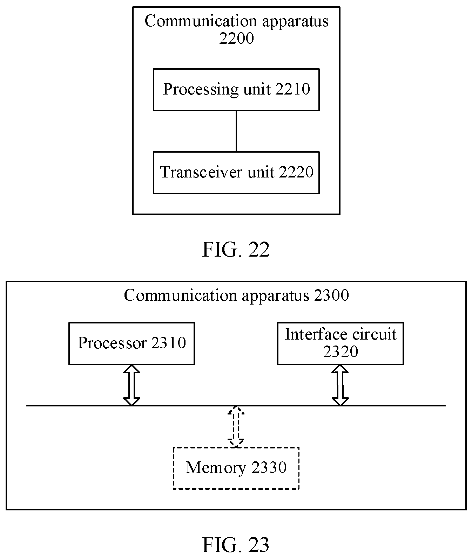

FIG. 22 and FIG. 23 are diagrams of structures of possible communication apparatuses according to an embodiment of this application. These communication apparatuses may be configured to implement one or more functions in the foregoing method embodiments, for example, functions implemented by one or more of the data management node, the data collection node, the model training node, the model using node, the data quality measurement apparatus, and the like. Therefore, beneficial effects of the foregoing method embodiments can also be implemented.

As shown in FIG. 22, a communication apparatus 2200 may include a processing unit 2210 and a transceiver unit 2220. The communication apparatus 2200 may be configured to implement one or more corresponding functions in the foregoing method embodiments, for example, functions implemented by one or more of the data management node, the data collection node, the model training node, the model using node, the data quality measurement apparatus, and the like. In subsequent descriptions, an example in which the communication apparatus 2200 implements functions corresponding to the procedures shown in FIG. 17 and FIG. 18 is used.

For example, when the communication apparatus 2200 is configured to implement a function of the data management node in the method embodiment shown in FIG. 17, the transceiver unit 2220 is configured to: send first configuration information to a first data collection node, where the first configuration information is used to configure feature extraction in similarity measurement, the similarity measurement is used to determine a degree of similarity in statistical distribution between different datasets, and the feature extraction is used to extract a feature of a data sample included in the dataset; and receive a first feature set of a first dataset from the first data collection node, where the first feature set is based on the first configuration information, and a data quality measurement apparatus is the data management node, a chip or a circuit used in the data management node, another node other than the data management node, or a chip or a circuit used in another node. Optionally, the processing unit 2210 is configured to determine the first configuration information, process the first feature set, or the like.

When the communication apparatus 2200 is configured to implement a function of the data collection node in the method embodiment shown in FIG. 17, the processing unit 2210 is configured to: obtain configuration information, where the configuration information is used to configure feature extraction in similarity measurement; and perform feature extraction on a dataset based on the configuration information, to determine a feature set corresponding to the dataset. The transceiver unit 2220 is configured to send the feature set to a data quality measurement apparatus, where the data quality measurement apparatus is a data management node, a chip or a circuit used in the data management node, another node other than the data management node, or a chip or a circuit used in the another node.

When the communication apparatus 2200 is configured to implement a function of the model using node in FIG. 18 in the foregoing method embodiment, the processing unit 2210 is configured to: obtain configuration information, where the configuration information is used to configure similarity measurement, and the similarity measurement is used to determine a degree of similarity in statistical distribution between different datasets; and determine a similarity measurement result of a first dataset and a second dataset based on the configuration information, where the first dataset is a training dataset for a model, the second dataset is a dataset collected by the model using node, and a data quality measurement apparatus is the model using node, a chip or a circuit used in the model using node, another node other than the model using node, or a chip or a circuit used in another node.

When the communication apparatus 2200 is configured to implement a function of the data management node in FIG. 18 in the foregoing method embodiment, the processing unit 2210 is configured to determine configuration information for similarity measurement. The transceiver unit 2220 is configured to send the configuration information to a data quality measurement apparatus, where the configuration information is used to configure similarity measurement, the similarity measurement is used to determine a degree of similarity in statistical distribution between different datasets, and the data quality measurement apparatus is a model using node or another node other than the model using node.

For more detailed descriptions of the processing unit 2210 and the transceiver unit 2220, directly refer to the related descriptions in the foregoing method embodiments. Details are not described herein again.

As shown in FIG. 23, a communication apparatus 2300 includes a processor 2310 and an interface circuit 2320. The processor 2310 is coupled to the interface circuit 2320. It may be understood that the interface circuit 2320 may be a transceiver or an input/output interface. Optionally, the communication apparatus 2300 may further include a memory 2330, configured to store instructions executed by the processor 2310, store input data required by the processor 2310 to run the instructions, or store data generated after the processor 2310 runs the instructions.

The processor 2310 may be configured to implement one or more functions in the foregoing method embodiments.

Specifically, the processor 2310 may execute the instructions in the memory 2330, so that the communication apparatus 2300 implements one or more functions in the foregoing method embodiments, for example, functions implemented by one or more of the data management node, the data collection node, the model training node, the model using node, the data quality measurement apparatus, and the like.

When the communication apparatus 2300 is configured to implement the method shown in FIG. 22, the processor 2310 is configured to implement a function of the processing unit 2210, and the interface circuit 2320 is configured to implement a function of the transceiver unit 2220.

When the communication apparatus is a terminal or a chip used in a terminal, the terminal or the chip in the terminal may implement functions in the diversity measurement method, the similarity measurement method, or the completeness measurement method in the foregoing method embodiments, for example, functions implemented by one or more of the data management node, the data collection node, the model training node, the model using node, the data quality measurement apparatus, and the like. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a base station or a module used in a base station, the base station or the module in the base station may implement functions in the diversity measurement method, the similarity measurement method, or the completeness measurement method in the foregoing method embodiments, for example, functions implemented by one or more of the data management node, the data collection node, the model training node, the model using node, the data quality measurement apparatus, or the like. Th module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

When the communication apparatus is a core network device or a module used in a core network device, the core network device or a core network module implements functions in the diversity measurement method, the similarity measurement method, or the completeness measurement method in the foregoing method embodiments, for example, functions implemented by one or more of the data management node, the model training node, the model using node, the data quality measurement apparatus, and the like. The core network module receives information from another module (for example, a radio frequency module or an antenna) in a core network, where the information is sent by a terminal, a base station, or another network element in the core network to the core network module. Alternatively, the core network module sends information to another module (for example, a radio frequency module or an antenna) in a core network, where the information is sent by the core network device to a terminal, a base station, or another core network device. The core network module herein may be a baseband chip in the core network device, or may be another module.

It may be understood that in addition to an apparatus in wireless communication or a chip used in an apparatus, for example, the foregoing base station, terminal, or core network device, the communication apparatus may be an apparatus that is in another communication system of wired communication, for example, optical fiber communication, satellite communication, underwater communication, or the like and that takes functions of one or more of the data management node, the data collection node, the model training node, the model using node, the data quality measurement apparatus, or the like. This is not limited in this application.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in the data quality measurement apparatus as discrete components.

All or some of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists. A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A data quality measurement method, comprising:

    sending, by a data quality measurement apparatus, first configuration information to a first data collection node, wherein the first configuration information is used to configure feature extraction in similarity measurement, the similarity measurement is used to determine a degree of similarity in statistical distribution between different datasets, and the feature extraction is used to extract a feature of a data sample comprised in the dataset; and receiving, by the data quality measurement apparatus, a first feature set of a first dataset from the first data collection node, wherein the first feature set is based on the first configuration information, and the data quality measurement apparatus is a data management node, a chip or a circuit used in the data management node, another node other than the data management node, or a chip or a circuit used in the another node.

2. The method according to claim 1, further comprising:
    determining, by the data quality measurement apparatus, a similarity measurement result of the first dataset and a second dataset based on the first feature set of the first dataset and a second feature set of the second dataset.

3. The method according to claim 2, wherein the determining, by the data quality measurement apparatus, a similarity measurement result of the first dataset and a second dataset based on the first feature set of the first dataset and a second feature set of the second dataset comprises:

    performing, by the data quality measurement apparatus, distance measurement on the first feature set and the second feature set to determine a first distance measurement set; and performing, by the data quality measurement apparatus, similarity measurement on the first distance measurement set to determine the similarity measurement result of the first dataset and the second dataset.

4. The method according to claim 3, wherein the performing, by the data quality measurement apparatus, distance measurement on the first feature set and the second feature set to determine a first distance measurement set comprises:

    determining, by the data quality measurement apparatus, one or more feature sample combinations based on the first feature set and the second feature set, wherein one feature sample in the feature sample combination belongs to the first feature set, while the other feature sample belongs to the second feature set; determining, by the data quality measurement apparatus by using a distance measurement function, a distance measurement value corresponding to each of the one or more feature sample combinations; and determining, by the data quality measurement apparatus, the first distance measurement set based on the distance measurement value corresponding to each of the one or more feature sample combinations.

5. The method according to claim 3 or 4, wherein the performing, by the data quality measurement apparatus, similarity measurement on the first distance measurement set to determine the similarity measurement result of the first dataset and the second dataset comprises:
    performing, by the data quality measurement apparatus, similarity measurement on the first distance measurement set by using a similarity measurement function, to determine the similarity measurement result of the first dataset and the second dataset.

6. The method according to any one of claims 1 to 5, wherein the second dataset is a dataset collected by a second data collection node, and the method further comprises:

    sending, by the data quality measurement apparatus, second configuration information to the second data collection node, wherein the second configuration information is used to configure feature extraction in similarity measurement; and receiving, by the data quality measurement apparatus, the second feature set of the second dataset from the second data collection node, wherein the second feature set is based on the second configuration information.

7. The method according to claim 6, further comprising:

determining, by the data quality measurement apparatus based on the similarity measurement result of the first dataset and the second dataset, that the first dataset and the second dataset meet a low similarity requirement; and

separately sending, by the data quality measurement apparatus, a notification message to the first data collection node and the second data collection node, to notify the first data collection node to report the first dataset and the second data collection node to report the second dataset.

8. The method according to any one of claims 1 to 5, wherein the second dataset is a dataset stored by the data management node, and the method further comprises:

performing, by the data quality measurement apparatus by using a feature extraction function, feature extraction on a data sample comprised in the second dataset, to obtain a feature sample corresponding to the data sample; and

determining, by the data quality measurement apparatus based on the feature sample corresponding to the data sample comprised in the second dataset, the second feature set corresponding to the second dataset.

9. The method according to claim 8, further comprising:

determining, by the data quality measurement apparatus based on the similarity measurement result of the first dataset and the second dataset, that the first dataset and the second dataset meet a low similarity requirement; and

sending, by the data quality measurement apparatus, a notification message to the first data collection node, to notify the first data collection node to report the first dataset to the data management node.

10. The method according to any one of claims 1 to 9, wherein that the first configuration information is used to configure feature extraction in similarity measurement comprises: the first configuration information is used to configure the feature extraction function.

11. The method according to any one of claims 1 to 10, further comprising:
determining the first configuration information based on an application scenario of the dataset.

12. The method according to any one of claims 2 to 11, further comprising:
if a similarity measurement result of a single feature of the first dataset and the second dataset is greater than or equal to a similarity threshold, or a similarity measurement result of a single feature of the first dataset and the second dataset is within a first similarity threshold range, determining that the single feature of the first dataset and the second dataset meets the low similarity requirement.

13. The method according to claim 12, further comprising:

determining, in a plurality of features of the first dataset and the second dataset, a proportion of features that meet the low similarity requirement in the plurality of features; and
when the proportion of the features that meet the low similarity requirement in the plurality of features is greater than or equal to a second threshold, determining that the plurality of features of the first dataset and the second dataset meet the low similarity requirement.

14. The method according to any one of claims 2 to 11, further comprising:

determining a measurement result based on a similarity measurement result of each of a plurality of features of the first dataset and the second dataset; and
if the measurement result is greater than or equal to a similarity threshold, or the measurement result is within a first similarity threshold range, determining that the plurality of features of the first dataset and the second dataset meet the low similarity requirement.

15. A data quality measurement method, comprising:

obtaining configuration information, wherein the configuration information is used to configure feature extraction in similarity measurement;
performing feature extraction on a dataset based on the configuration information, to determine a feature set corresponding to the dataset; and

sending the feature set to a data quality measurement apparatus, wherein the data quality measurement apparatus is a data management node, a chip or a circuit used in the data management node, another node other than the data management node, or a chip or a circuit used in the another node.

16. The method according to claim 15, wherein the obtaining configuration information comprises:
receiving the configuration information from the data quality measurement apparatus.

17. The method according to claim 15 or 16, wherein the feature extraction on the dataset is based on a feature extraction function.

18. The method according to any one of claims 15 to 17, wherein a feature extracted from the dataset comprises one or more of the following: a power delay profile PDP, a time-varying Doppler spectrum, a space domain angle power spectrum APS, an average value, a maximum value, a minimum value, a histogram, a cumulative percentage, or the data sample.

19. The method according to any one of claims 15 to 18, further comprising:

receiving a notification message from the data quality measurement apparatus; and
sending the dataset to the data management node based on the notification message.

20. The method according to any one of claims 15 to 19, wherein that the configuration information is used to configure feature extraction in similarity measurement comprises: the configuration information is used to configure the feature extraction function.

21. A data quality measurement method, comprising:

obtaining, by a data quality measurement apparatus, configuration information, wherein the configuration information is used to configure similarity measurement, and the similarity measurement is used to determine a degree of similarity in statistical distribution between different datasets; and
determining, by the data quality measurement apparatus, a similarity measurement result of a first dataset and a second dataset based on the configuration information, wherein the first dataset is a training dataset for a model, the second dataset is a dataset collected by a model using node, and the data quality measurement apparatus is the model using node, a chip or a circuit used in the model using node, another node other than the model using node, or a chip or a circuit used in the another node.

22. The method according to claim 21, wherein the obtaining, by a data quality measurement apparatus, configuration information comprises: receiving, by the data quality measurement apparatus, the configuration information from a data management node.

23. The method according to claim 21 or 22, wherein the determining, by the data quality measurement apparatus, a similarity measurement result of a first dataset and a second dataset based on the configured similarity measurement comprises:

performing, by the data quality measurement apparatus, distance measurement on a first feature set and a second feature set to determine a first distance measurement set, wherein the first feature set is based on feature extraction on a data sample comprised in the first dataset, and the second feature set is based on feature extraction on a data sample comprised in the second dataset; and
performing, by the data quality measurement apparatus, similarity measurement on the first distance measurement set to determine the similarity measurement result of the first dataset and the second dataset.

24. The method according to claim 23, wherein the feature extraction on the data sample comprised in the first dataset or the feature extraction on the data sample comprised in the second dataset is based on a feature extraction function.

25. The method according to claim 23 or 24, wherein a feature extracted from the data sample comprised in the first dataset or a feature extracted from the data sample comprised in the second dataset comprises one or more of the following:
a power delay profile PDP, a time-varying Doppler spectrum, a space domain angle power spectrum APS, an average value, a maximum value, a minimum value, a histogram, a cumulative percentage, or the data sample.

26. The method according to any one of claims 23 to 25, wherein the performing, by the data quality measurement apparatus, distance measurement on a first feature set and a second feature set to determine a first distance measurement set comprises:

determining, by the data quality measurement apparatus, one or more feature sample combinations based on the first feature set and the second feature set, wherein one feature sample in the feature sample combination belongs to the first feature set, while the other feature sample belongs to the second feature set;
determining, by the data quality measurement apparatus by using a distance measurement function, a distance measurement value corresponding to each of the one or more feature sample combinations; and
determining, by the data quality measurement apparatus, the first distance measurement set based on the distance measurement value corresponding to each of the one or more feature sample combinations.

27. The method according to any one of claims 23 to 26, wherein the performing, by the data quality measurement apparatus, similarity measurement on the first distance measurement set to determine the similarity measurement result of the first dataset and the second dataset comprises:
performing, by the data quality measurement apparatus, similarity measurement on the first distance measurement set by using a similarity measurement function, to determine the similarity measurement result of the first dataset and the second dataset.

28. The method according to any one of claims 21 to 27, further comprising:
if a similarity measurement result of a single feature of the first dataset and the second dataset is less than or equal to a similarity threshold, or a similarity measurement result of a single feature of the first dataset and the second dataset is within a second similarity threshold range, determining that the single feature of the first dataset and the second dataset meets a low similarity requirement.

29. The method according to claim 28, further comprising:

determining, by the data quality measurement apparatus in a plurality of features of the first dataset and the second dataset, a proportion of features that meet a high similarity requirement in the plurality of features; and
when the proportion of the features that meet the high similarity requirement in the plurality of features is greater than or equal to a third threshold, determining that the plurality of features of the first dataset and the second dataset meet the high similarity requirement.

30. The method according to any one of claims 21 to 27, further comprising:

determining a measurement result based on a similarity measurement result of each of a plurality of features of the first dataset and the second dataset; and
if the measurement result is less than or equal to a similarity threshold, or the measurement result is within a second similarity threshold range, determining that the plurality of features of the first dataset and the second dataset meet a high similarity requirement.

31. The method according to any one of claims 21 to 30, further comprising:
determining, by the data quality measurement apparatus from a plurality of candidate models, a model corresponding to a training dataset that meets the high similarity requirement with the first dataset.

32. The method according to any one of claims 21 to 31, wherein that the configuration information is used to configure similarity measurement comprises:
the configuration information is used to configure one or more of the following: a similarity measurement procedure, the feature extraction function in the similarity measurement procedure, the distance measurement function, the similarity measurement function, or one or more thresholds used to determine the similarity measurement result.

33. A data quality measurement method, comprising:

determining configuration information for similarity measurement; and
sending the configuration information to a data quality measurement apparatus, wherein the configuration information is used to configure similarity measurement, the similarity measurement is used to determine a degree of similarity in statistical distribution between different datasets, and the data quality measurement apparatus is a model using node or another node other than the model using node.

34. The method according to claim 33, wherein that the configuration information is used to configure similarity measurement comprises:
the configuration information is used to configure one or more of the following: a similarity measurement procedure, a feature extraction function in the similarity measurement procedure, a distance measurement function, a similarity measurement function, or one or more thresholds used to determine a similarity measurement result.

35. A communication apparatus, comprising a unit configured to perform the method according to any one of claims 1 to 14, a unit configured to perform the method according to any one of claims 15 to 20, a unit configured to perform the method according to any one of claims 21 to 32, or a unit configured to perform the method according to claim 33 or 34.

36. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 14, the method according to any one of claims 15 to 20, the method according to any one of claims 21 to 32, or the method according to claim 33 or 34 by using a logic circuit or executing code instructions.

37. A communication apparatus, comprising a processor and a memory, wherein the memory is configured to store computer instructions; and when the apparatus runs, the processor executes the computer instructions stored in the memory, to implement the method according to any one of claims 1 to 14, the method according to any one of claims 15 to 20, the method according to any one of claims 21 to 32, or the method according to claim 33 or 34.

38. A computer-readable storage medium, wherein the storage medium stores a computer program or instructions; and when the computer program or the instructions are executed by a communication apparatus, the method according to any one of claims 1 to 14, the method according to any one of claims 15 to 20, the method according to any one of claims 21 to 32, or the method according to claim 33 or 34 is implemented.

39. A computer program product, wherein the computer program product comprises a computer program or instructions; and when the computer program or the instructions are run by an apparatus, the method according to any one of claims 1 to 14, the method according to any one of claims 15 to 20, the method according to any one of claims 21 to 32, or the method according to claim 33 or 34 is performed.

40. A chip, comprising a processor, wherein the processor is coupled to a memory, and is configured to execute a computer program or instructions stored in the memory, so that the chip implements the method according to any one of claims 1 to 14, the method according to any one of claims 15 to 20, the method according to any one of claims 21 to 32, or the method according to claim 33 or 34.

FIG. 1

FIG. 2

FIG. 3

FIG. 4

$$y = f\left(\sum_{i=0}^{n} w_i x_i + b\right)$$

FIG. 5

FIG. 6

701: Perform feature extraction on a data sample included in a first dataset, to determine a first feature set corresponding to the first dataset

702: Perform distance measurement on the first feature set to determine a first distance measurement set

703: Perform diversity measurement on the first distance measurement set to determine a diversity measurement result corresponding to the first dataset

FIG. 7

PDP feature

Time-varying Doppler
spectrum feature

APS feature

FIG. 8

EP 4 560 531 A1

One main path     Three main paths     Five main paths     Nine main paths

FIG. 9

Truncation (Truncation) function     Gini function     Hoyer function

FIG. 10

EP 4 560 531 A1

Feature set

Distance
measurement set

Diversity
measurement
result of a
single feature

$$Radio\ dataset \xrightarrow{S_1} \boxed{\begin{array}{c}Feature\\extraction\\E(S_1)\end{array}} \xrightarrow{X_1} \boxed{\begin{array}{c}Distance\\measurement\\d(X_1, X_1)\end{array}} \xrightarrow{D_{11}} \boxed{\begin{array}{c}Diversity\\measurement\\f_{div}(D_{11})\end{array}} \xrightarrow{M_{sdiv}(S_1)}$$

FIG. 11a

Feature set

Distance measurement
set

Diversity measurement
result of a single feature

Radio
dataset

$S_1$

| Feature extraction $E_k(S_1)$ | $X_{11}$ | Distance measurement $d(X_{11}, X_{11})$ | $D_{11,1}$ | Diversity measurement $f_{\text{div}}(D_{11}, 1)$ | $M_{sdiv,1}(S_1)$ |

⋮

| Feature extraction $E_k(S_1)$ | $X_{1k}$ | Distance measurement $d(X_{1k}, X_{1k})$ | $D_{11,k}$ | Diversity measurement $f_{\text{div}}(D_{11}, k)$ | $M_{sdiv,k}(S_1)$ |

⋮

| Feature extraction $E_k(S_1)$ | $X_{1k}$ | Distance measurement $d(X_{1k}, X_{1k})$ | $D_{11,k}$ | Diversity measurement $f_{\text{div}}(D_{11}, \mathbf{k})$ | $M_{sdiv,\mathbf{k}}(S_1)$ |

Weighted
merging of
diversity
measurement

Diversity
measurement
result of a
single feature

$M_{mdiv}(S_1)$

Generation of a
weighting
coefficient

$\{w_k\}_{k=1}^{K}$

FIG. 11b

FIG. 11c

Data management
node

Data collection
node

1201: The data management node
determines, based on an application scenario
of currently collected data, configuration
information suitable for the current scenario

1202: Send the configuration
information, to configure at least one
of the following: a diversity
measurement procedure, a feature
extraction function in the diversity
measurement procedure, a distance
measurement function, a diversity
measurement function, or a threshold
used to determine diversity

1203: The data collection data calculates a
diversity measurement result of a locally collected
dataset according to a diversity measurement
method, and compares the diversity measurement
result with a configured diversity measurement
threshold, to determine whether the locally
collected dataset meets a diversity requirement
configured by the data management node

1204: The data collection node sends,
to the data management node, a
dataset that meets the diversity
requirement configured by the data
management node

FIG. 12

Data management
node

Data collection
node 1

Data collection
node 2

1301: The data management node
determines, based on an application
scenario of currently collected data,
configuration information suitable for the
current scenario

1302: Send the configuration information, where the
configuration information is used to configure at least
one of the following: a diversity measurement procedure,
a feature extraction function in the diversity
measurement procedure, a distance measurement
function, or a diversity measurement function

1303: The data collection node calculates a
diversity measurement result of a locally
collected dataset according to a diversity
measurement method

1304: Feed back the diversity measurement result of the
collection node

1305: The data management node
determines, based on the diversity
measurement result reported by the data
collection node, a dataset that meets a
diversity requirement

1306: Data request

1307: Upload the dataset
of the collection node

FIG. 13

1401: Perform feature extraction on a data sample included in a first dataset, to determine a first feature set corresponding to the first dataset

1402: Perform feature extraction on a data sample included in a second dataset, to determine a second feature set corresponding to the second dataset

1403: Perform distance measurement on the first feature set and the second feature set to determine a first distance measurement set

1404: Perform similarity measurement on the first distance measurement set to determine a similarity measurement result of the first dataset and the second dataset

FIG. 14

Feature set

Distance measurement set

Similarity measurement result of a single feature

Radio dataset $S_1$ → Feature extraction $E(S_1)$ → $X_1$

Radio dataset $S_2$ → Feature extraction $E(S_2)$ → $X_2$

→ Distance measurement $d(X_1, X_2)$ → $D_{12}$ → Similarity measurement $f_{sim}(D_{12})$ → $M_{ssim}(S_1, S_2)$

FIG. 15

FIG. 16a

EP 4 560 531 A1

FIG. 16b

| Data management node | Data collection node 1 | Data collection node 2 |
|---|---|---|

1701: The data management node determines configuration information based on an application scenario of currently collected data, where the configuration information is used to configure similarity measurement

1702: Send the configuration information, used to configure a feature extraction function in feature extraction

1703: Extract a feature set of a dataset of the collection node based on a received configuration of diversity measurement, which may be referred to as a second feature set

1704: Feed back the data feature set of the collection node, that is, the second feature set

1705: The data management node determines a similarity measurement result of a first dataset and a second dataset based on a first feature set of the first dataset and the second feature set, and determines whether the similarity measurement result meets a low similarity requirement

1706: Data request

1707: The data collection node uploads the collected dataset

FIG. 17

Data management
node

Model
using node

1801: The data management node determines
configuration information based on an
application scenario of an AI model

1802: Send the configuration information,
used to configure one or more of the
following: a similarity measurement
procedure, a feature extraction function in
the similarity measurement procedure, a
distance measurement function, a similarity
measurement function, or a threshold used
to determine a similarity

1803: The model using node collects data of a
current environment, determines, based on
configured similarity measurement, a similarity
between a dataset collected from the current
environment and a training dataset for a candidate AI
model, and determines, from a plurality of candidate
AI models, a model corresponding to a training
dataset whose similarity to the collected dataset
meets a high similarity requirement

FIG. 18

Data management
node

Data collection
node

1901: The data management node
determines first configuration
information and second
configuration information based on
an application scenario of an AI
model, where the first configuration
information is used to configure
similarity measurement, and the
second configuration information is
used to configure diversity
measurement

1902: Send the first configuration
information and the second configuration
information

1903: Divide a dataset collected by the
collection node into N data subsets, and
delete a first data subset from the N data
subsets based on a similarity
measurement configuration, where a
dataset obtained after the first data subset
is deleted may be optionally referred to a
first dataset

1904: The data collection node
determines a diversity measurement result
of the first dataset based on the diversity
measurement configured by using the
second configuration information

Repeat the foregoing steps for a plurality
of times

1905: Upload a dataset of the collection
node

FIG. 19

Data management
node

Model using node

2000: The data management node
determines configuration information

2001: Send the configuration information

2002: Determine a measurement value of a
first performance indicator based on the
configuration information, where the
measurement value of the first performance
indicator is determined based on an output of
a first processing procedure when a first
dataset is used as an input of the first
processing procedure; and the model using
node determines a completeness measurement
result based on the measurement value of the
first performance indicator

2003: Report the completeness measurement
result, or indicate, to the data management node,
a dataset and/or a processing procedure that
meet/meets a completeness requirement

FIG. 20

Data management
node

Data collection
node 1

Data collection
node 2

Model training
node

2101: Determine, based on an application scenario of
currently collected data, first configuration information
suitable for the current scenario, where the first
configuration information is used to configure feature
extraction in similarity measurement

2102: Send the first
configuration information

2103: Determine a feature of a locally collected
dataset based on the configured feature extraction

2104: Feed back feature information of the
dataset collected by the data collection node

2105: Determine, based on the similarity measurement
determined in step 2101, a similarity measurement result of
a local existing dataset and the dataset reported by the data
collection node, determine whether the similarity
measurement result meets a low similarity requirement,
and if the similarity measurement result meets the low
similarity requirement, perform step 2106

2106: Data request

2107: Upload the dataset
collected by the data collection
node

2108: Determine, based on an application scenario of the
dataset, diversity measurement suitable for the current
scenario and a threshold for diversity measurement

2109: The data management node has an original dataset, a
new dataset uploaded by the collection node, a hybrid
dataset obtained by superimposing the original dataset and
the new dataset, and the like, where these datasets are
collectively used as candidate datasets, calculates diversity
measurement results one by one based on the foregoing
diversity measurement, and selects M datasets whose
diversity measurement results meet a diversity threshold

2110: Send, to the model training node, the M datasets whose
diversity measurement results meet the requirement

2111: The model training node may perform
model training by using the M datasets, to
obtain N AI models

2112: The model training node tests a
performance indicator by using the M datasets as
an input based on completeness measurement, to
obtain a measurement value of one or more
performance indicators

2113: The model training node determines, based
on the completeness measurement and based on
the measurement value of the performance
indicator and a threshold for completeness
measurement, whether the measurement value of
the performance indicator meets a completeness
requirement, and if the measurement value of the
performance indicator meets the completeness
requirement, a corresponding AI model and a
corresponding dataset become an optimal high-
performance combination that meets the
completeness measurement requirement

FIG. 21

Communication apparatus 2200

Processing unit 2210

Transceiver unit 2220

FIG. 22

Communication apparatus 2300

Processor 2310

Interface circuit 2320

Memory 2330

FIG. 23

## INTERNATIONAL SEARCH REPORT

| International application No. |
|---|
| **PCT/CN2023/104975** |

| A. | CLASSIFICATION OF SUBJECT MATTER |
|---|---|
| | G06N3/04(2023.01)i |

According to International Patent Classification (IPC) or to both national classification and IPC

| B. | FIELDS SEARCHED |
|---|---|

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNABS; CNTXT; VEN; USTXT; WOTXT; ENTXT; CNKI; CJFD: 数据, 质量, 度量, 估计, 评估, 配置, 相似, 特征, 数据集, 多样性, 距离, 低质量, 模型, 函数, data, quality, measurement, estimate, evaluate, configure, similar, character, data set, diversity, distance, low quality, model, function

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111612783 A (UNIVERSITY OF SCIENCE AND TECHNOLOGY OF CHINA) 01 September 2020 (2020-09-01)<br>description, paragraphs 55-145, and figures 1-4 | 1-40 |
| X | CN 110378749 A (SHENZHEN QIANHAI WEBANK CO., LTD.) 25 October 2019 (2019-10-25)<br>description, paragraphs 43-153 | 1-40 |
| A | CN 112182507 A (ALIPAY (HANGZHOU) INFORMATION TECHNOLOGY CO., LTD.) 05 January 2021 (2021-01-05)<br>entire document | 1-10 |
| A | US 2021184989 A1 (WU, Geng et al.) 17 June 2021 (2021-06-17)<br>entire document | 1-40 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 September 2023** | **28 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/104975**

| Patent document cited in search report | | | Publication date (day/month/year) | Patent family member(s) | Publication date (day/month/year) |
|---|---|---|---|---|---|
| CN | 111612783 | A | 01 September 2020 | None | |
| CN | 110378749 | A | 25 October 2019 | None | |
| CN | 112182507 | A | 05 January 2021 | None | |
| US | 2021184989 | A1 | 17 June 2021 | None | |

Form PCT/ISA/210 (patent family annex) (July 2022)

**EP 4 560 531 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210913029